# EUROPEAN PATENT SPECIFICATION

(11) **EP 3 919 751 B1**
(45) Date of publication and mention of the grant of the patent: **02.08.2023**
(21) Application number: 21177210.8
(22) Date of filing: 01.06.2021
(51) Int. Cl.: B01D 46/24, F04D 29/52, F04F 5/46, F04D 25/08, F04D 29/62, F04D 29/70, F24F 1/01, B01D 46/00, F04D 29/40, F04F 5/44, F04F 5/16

(54) **FAN APPARATUS FOR AIR CONDITIONER**
LÜFTERVORRICHTUNG FÜR KLIMAANLAGE
APPAREIL DE TYPE VENTILATEUR POUR CLIMATISEUR

(30) Priority: 02.06.2020 KR 20200066278; 02.06.2020 KR 20200066279; 02.06.2020 KR 20200066280; 15.06.2020 KR 20200072338; 23.09.2020 KR 20200123154
(43) Date of publication of application: 08.12.2021
(73) Proprietor: LG Electronics Inc., Seoul 07336 (KR)
(72) Inventor: Jang, Hosik, Seoul (KR); Baek, Seungho, Seoul (KR); Jung, Haein, Seoul (KR); Park, Kibbum, Seoul (KR); Choi, Seokho, Seoul (KR); Park, Hyungho, Seoul (KR); Kim, Hoojin, Seoul (KR); Cheon, Inbeom, Seoul (KR); Jung, Jaehyuk, Seoul (KR); Kim, Juhyun, Seoul (KR); Kim, Yongmin, Seoul (KR); Choi, Chiyoung, Seoul (KR)
(74) Representative: Vossius & Partner Patentanwälte Rechtsanwälte mbB

(56) References cited:
- JP-A- 2019 107 643
- US-A1- 2016 238 025
- US-A1- 2019 168 151

## Description

The present disclosure relates to a fan apparatus for air conditioner for reducing noise and sharpness, and for easily separating a cover covering a main body.

In general, a blower is a mechanical device which drives a fan to cause a flow of air. In the related art, a blower has a fan which rotates about a rotation axis, and a motor rotates the fan to generate wind.

A fan of the related art using an axial fan has an advantage of providing wind in a wide range, but there is a problem in that the fan cannot provide wind intensively in a narrow region.

Japanese Publication Patent No. 2019-107643 discloses a fan which provides wind to a user using the Coanda effect.

In addition, a conventional fan has an air flow path of a certain size or less located between a blowing fan and an air discharge port, with a certain distance or more between the blowing fan and the air discharge port. Therefore, there is a problem in that the air flow path does not have an enough space where a heater for heating air can be disposed.

In addition, in the case of a conventional fan, when a cover is formed to cover a filter insertion port for inserting a filter into a main body, in order to easily separate the cover and the main body, a gap between the cover and the main body may be increased, or a space for user's hand to enter is formed in the cover or main body, which gives a bad impression to the user aesthetically. In addition, since such a space becomes a resistance to the air flowing into the filter, there is a problem that the overall efficiency is lowered.

In addition, in the case of a conventional fan, when the cover and the main body are coupled with magnetic force or hook without a gap in order to satisfy the esthetic sense, there is a problem in that there is no space for user's hand to enter, and it is very difficult to separate the cover from the main body as there is no separate handle.

The invention is specified by the independent claim. Preferred embodiments are defined in the dependent claims.

The present disclosure has been made in view of the above problems, and provides a fan apparatus for air conditioner that allows the cover and the main body to be tightly coupled without gap, and applies an external force to a cover separation unit when separating the cover and the main body so that the main body and the cover are easily separated.

In addition, the present disclosure further provides a fan apparatus for air conditioner that makes a cover with two pieces, and separates one of the two covers of one cover separation unit when separating the cover from a main body, and allows a user to separate the other cover through a gap that is revealed as one of the two covers is separated, so that a cylindrical cover can be easily separated through one cover separation unit.

In addition, the present disclosure further provides a fan apparatus for air conditioner that allows a lever not to protrude to the outside when the lever is operated and allows a pusher to be hidden by the cover, as the pusher connected to the lever is guided to the main body to push the cover between the main body and the cover, when the lever is exposed to the outer surface of the main body and slides along the outer surface of the main body.

In addition, the present disclosure further provides a fan apparatus for air conditioner that stably separates the cover from the main body by disposing two pushers for separating the cover from the main body in the upper and lower sides respectively.

In addition, the present disclosure further provides a fan apparatus for air conditioner capable of providing air to a user through the Coanda effect.

In addition, the present disclosure further provides a fan apparatus for air conditioner that provides a heating mode by disposing a heater in an air flow path.

In addition, the present disclosure further provides a fan apparatus for air conditioner that disposes a heater to secure a flow path area as much as possible.

The present disclosure has a cover separation unit that is installed in the base case, moved by an external force, and guided by the base case to push the cover.

In detail, the present disclosure includes: a base case in which an air suction part through which air is sucked is formed; a tower case which is disposed above the base case, and has an air flow path therein and discharges air to the outside; a cover which is coupled to an outer surface of the base case, and covers at least a portion of the suction part; and a cover separation unit which separates the cover from the base case, wherein the cover separation unit includes: a lever which is installed in the tower case, and is configured to slide along an outer surface of the tower case; an upper cover pusher which is rotatably coupled to the lever, and is configured to rotate to push the cover; and an upper rotation guide which is configured to guide the upper cover pusher to rotate in one direction, when the upper cover pusher is moved along the outer surface of the base case.

As an another embodiment, the present disclosure includes: a case in which a suction part through which air is sucked and a discharge port through which the sucked air is discharged are formed; a cover which is coupled to an outer surface of the case and covers at least a portion of the suction part; and a cover separation unit which is installed in the case and separates the cover, wherein the cover separation unit includes: a lever which is installed in the case and is configured to slide along the outer surface of the case; and an upper cover pusher which is rotatably coupled to the lever and guided to the outer surface of the case to push the cover.

The cover separation unit includes: a slider which is spaced apart from the upper cover pusher and installed in the base case to be slid; a connection link which connects the slider and the lever; a lower cover pusher which is rotatably coupled to the slider, and is configured to rotate to push the cover; and a lower rotation guide which is configured to guide the lower cover pusher to rotate in one direction, when the lower cover pusher is moved along the outer surface of the base case.

At least a portion of the lever is exposed on the outer surface of the tower case.

The lever is disposed above the cover.

The upper cover pusher is disposed in a coupling region of the base case in which the cover is coupled to the base case.

The upper cover pusher is located between the cover and the base case.

The upper cover pusher is hinged to a lower end of the lever.

The upper rotation guide includes an upper guide surface which has an inclination with respect to the outer surface of the base case and is configured to guide the upper cover pusher.

The upper rotation guide further includes an upper pusher receiving groove for accommodating the upper cover pusher.

The upper rotation guide is formed in the base case.

The lower cover pusher and the slider are located below the upper cover pusher.

The lower cover pusher and the slider are located between the base case and the cover.

The lower rotation guide includes a lower pusher receiving groove for accommodating the slider and the lower cover pusher.

The lower rotation guide includes a lower guide surface which has an inclination with respect to the outer surface of the base case and is configured to guide the lower cover pusher.

The tower case includes a first tower and a second tower that have an airflow path therein, and further includes: a blowing space formed between the first tower and the second tower; a first discharge port which is formed in the first tower and discharges the sucked air into the blowing space; and a second discharge port which is formed in the second tower and discharges the sucked air to the blowing space.

The present disclosure further includes: a fan which is disposed inside the base case and forms an air flow; and a filter which is disposed inside the base case and filters the air sucked by the fan.

The cover separation unit further includes a return spring for providing a restoring force to the lever.

The cover separation unit further includes: a slider which is spaced apart from the upper cover pusher, installed in the case to be slid, and connected to the lever; and a lower cover pusher which is rotatably coupled to the slider and guided to the outer surface of the case to push the cover.

### BRIEF DESCRIPTION OF THE DRAWINGS

The above and other objects, features and advantages of the present disclosure will be more apparent from the following detailed description in conjunction with the accompanying drawings, in which:
FIG. 1 is a perspective view of a fan apparatus for air conditioner according to an embodiment of the present disclosure;
FIG. 2 is an exemplary operation view of FIG. 1;
FIG. 3 is a front view of FIG. 2;
FIG. 4 is a plan view of FIG. 3;
FIG. 5 is a right cross-sectional view of FIG. 2;
FIG. 6 is a front cross-sectional view of FIG. 2;
FIG. 7 is a partially exploded perspective view illustrating an inside of a second tower of FIG. 2;
FIG. 8 is a right cross-sectional view of FIG. 7;
FIG. 9 is a perspective view when the fan apparatus for air conditioner of FIG. 1 is viewed in another direction;
FIG. 10 is a perspective view illustrating a state where a filter is separated from a case of FIG. 9;
FIG. 11 is a cross-section perspective view taken along line A-A' of FIG. 9;
FIG. 12 is a view illustrating an operation state of FIG. 11;
FIG. 13 is a view illustrating an operation of FIG. 9 in a state where the cover and the case are coupled to each other;
FIG. 14 is a plan cross-sectional view taken along line IX-IX of FIG. 3;
FIG. 15 is a bottom cross-sectional view taken along line IX-IX of FIG. 3;
FIG. 16 is a perspective view illustrating a second position of an airflow converter;
FIG. 17 is a perspective view illustrating a first position of the airflow converter;
FIG. 18 is an exploded perspective view of the airflow converter;
FIG. 19 is a front view illustrating a state where a guide board is removed from the airflow converter;
FIG. 20 is a front view illustrating a state where the guide board is installed in FIG. 19;
FIG. 21 is a side cross-sectional view of the airflow converter;
FIG. 22 is an enlarged view illustrating a second protrusion in the airflow converter;
FIG. 23 is a cross-sectional view illustrating the airflow converter in a state where a second protrusion is inserted into a second slit;
FIG. 24 is a plan cross-sectional view schematically illustrating a flow direction of air according to a position of the guide board;
FIG. 25 is a front view of FIG. 2 according to another embodiment of the present disclosure;
FIG. 26 is a partially exploded perspective view illustrating an inside of a second tower of FIG. 25;
FIG. 27 is a right cross-sectional view of FIG. 26;
FIG. 28 is an exemplary view illustrating a horizontal airflow of the fan apparatus for air conditioner according to the present disclosure;
FIG. 29 is an exemplary view illustrating an ascending airflow of the fan apparatus for air conditioner according to the present disclosure;
FIG. 30 is a perspective view illustrating a fan of the present disclosure;
FIG. 31 is an enlarged view illustrating a portion of a leading edge of FIG. 30;
FIG. 32 is a cross-sectional view taken along line C1-C1' of FIG. 31;
FIG. 33 is a view illustrating a flow of air passing through a notch portion of the leading edge in FIG. 30;
FIG. 34 is an experimental data comparing sharpness according to an air volume in an example and a comparative example;
FIG. 35 is an experimental data comparing noises according to an air volume in an example and a comparative example;
FIG. 36 is a plan cross-sectional view illustrating an airflow converter according to another embodiment of the present disclosure;
FIG. 37 is a perspective view of the airflow converter illustrated in FIG. 36;
FIG. 38 is a perspective view when the airflow converter is viewed from a side opposite to FIG. 37;
FIG. 39 is a plan view of FIG. 37;
FIG. 40 is a bottom view of FIG. 37;
FIG. 41 is a front cross-sectional view of FIG. 2 for explaining another air guide according to another embodiment of the present disclosure;
FIG. 42 is a view for explaining the air guide of FIG. 41;
FIG. 43 is a right cross-sectional view of an air conditioner according to another embodiment of the present disclosure;
FIG. 44 is a right cross-sectional view of an air conditioner according to another embodiment of the present disclosure;
FIG. 45 is a partially exploded perspective view illustrating the inside of the second tower of FIG. 44;
FIG. 46 is a perspective view of a suction grill according to an embodiment of the present disclosure;
FIG. 47 is a plan view of FIG. 46;
FIG. 48 is a plan view of a grill wire of FIG. 46; and
FIG. 49 is a view illustrating a graph for explaining a difference in effect between a suction grill according to the present disclosure and a related art.

Advantages and features of the present disclosure and methods for achieving those of the present disclosure will become apparent upon referring to embodiments described later in detail with reference to the attached drawings. However, embodiments are not limited to the embodiments disclosed hereinafter and may be embodied in different ways. The embodiments are provided for perfection of disclosure and for informing persons skilled in this field of art of the scope of the present disclosure. The same reference numerals may refer to the same elements throughout the specification.

Spatially-relative terms such as "below", "beneath", "lower", "above", or "upper" may be used herein to describe one element's relationship to another element as illustrated in the Figures. It will be understood that spatially-relative terms are intended to encompass different orientations of the device in addition to the orientation depicted in the Figures. For example, if the device in one of the figures is turned over, elements described as "below" or "beneath" other elements would then be oriented "above" the other elements. The exemplary terms "below" or "beneath" can, therefore, encompass both an orientation of above and below. Since the device may be oriented in another direction, the spatially-relative terms may be interpreted in accordance with the orientation of the device.

The terminology used in the present disclosure is for the purpose of describing particular embodiments only and is not intended to limit the disclosure. As used in the disclosure and the appended claims, the singular forms "a", "an" and "the" are intended to include the plural forms as well, unless context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, the thickness or size of each layer is exaggerated, omitted, or schematically illustrated for convenience of description and clarity. Also, the size or area of each constituent element does not entirely reflect the actual size thereof.

Hereinafter, exemplary embodiments of the present disclosure will be described with reference to the accompanying drawings.

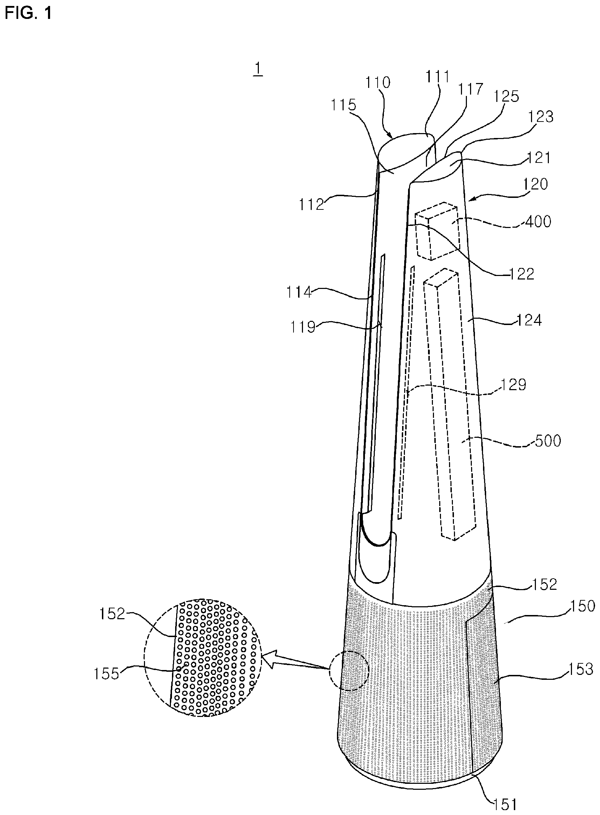

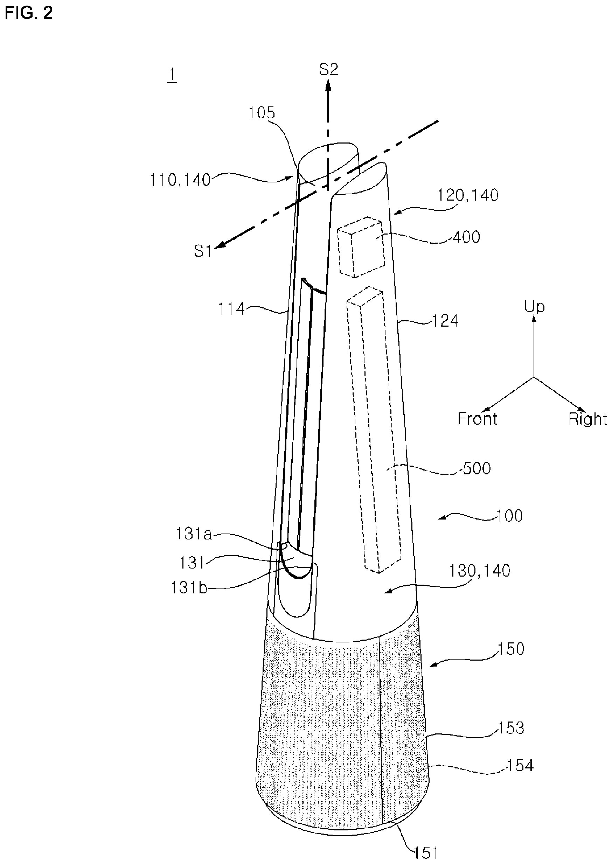

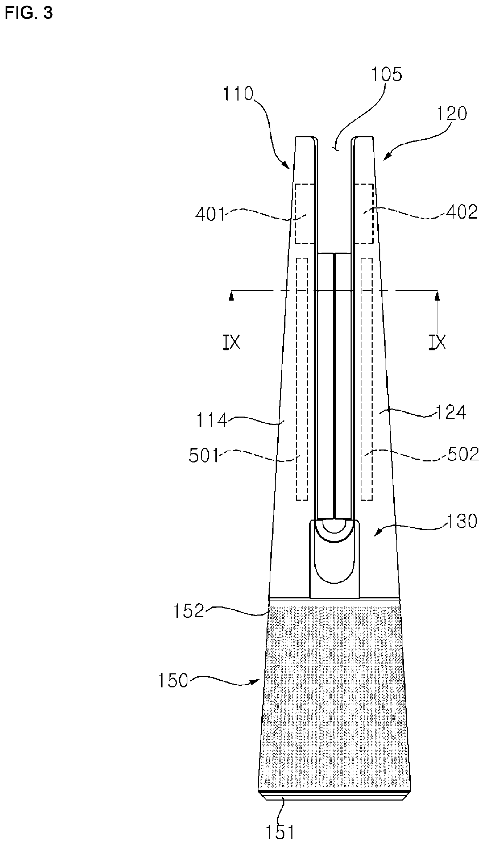

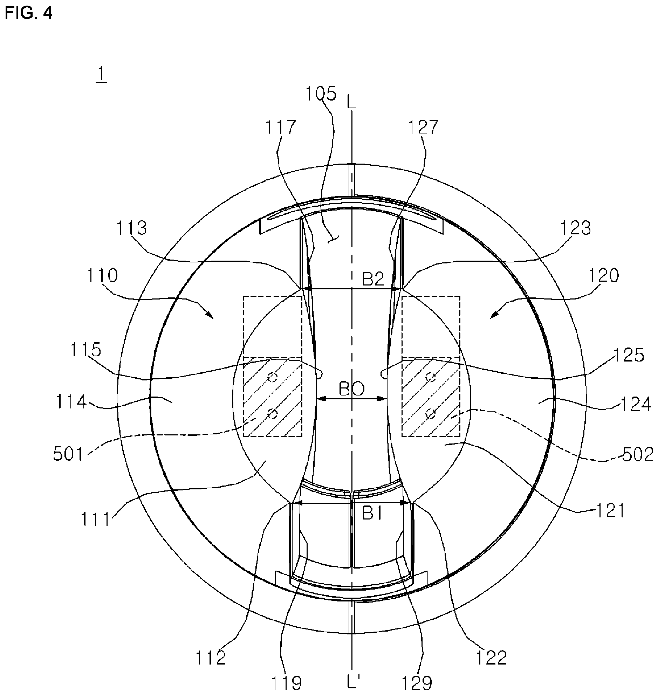

FIG. 1 is a perspective view of a fan apparatus for air conditioner according to an embodiment of the present disclosure, FIG. 2 is an exemplary operation view of FIG. 1, FIG. 3 is a front view of FIG. 2, and FIG. 4 is a plan view of FIG. 3.

Referring to FIGS. 1 to 4, a fan apparatus for air conditioner 1 according to an embodiment of the present disclosure includes a case 100 providing an outer shape. The case 100 includes a base case 150 in which the filter 200 is installed, and a tower case 140 for discharging air through the Coanda effect.

In addition, the tower case 140 includes a first tower 110 and a second tower 120 which are divided and disposed in the form of two columns. In the present embodiment, the first tower 110 is disposed on a left, and the second tower 120 is disposed on a right.

In this specification, an up-down direction is defined as a direction parallel to a direction of a rotation axis of a fan 320. An upper direction (vertical direction) refers to a direction in which the tower case 140 is located in the case 100, and a lower direction refers to a direction in which the base case 150 is located in the case 100.

The first tower 110 and the second tower 120 are spaced apart from each other, and a blowing space 105 is formed between the first tower 110 and the second tower 120.

In the present embodiment, front, rear and upper sides of the blowing space 105 are open, and gaps of upper and lower ends of the blowing space 105 are identical.

The tower case 140 including the first tower, the second tower and the blowing space is formed in a truncated cone shape.

Discharge ports 117 and 127 disposed in the first tower 110 and the second tower 120 respectively discharge air into the blowing space 105. When it is necessary to distinguish the discharge port, the discharge port formed in the first tower 110 is referred to as a first discharge port 117, and the discharge port formed in the second tower 120 is referred to as a second discharge port 127.

The first discharge port and the second discharge port are disposed within a height of the blowing space, and a direction intersecting the blowing space 105 is defined as an air discharge direction.

Since the first tower 110 and the second tower 120 are disposed left and right, the air discharge direction in the present embodiment may be formed in a front-rear direction and an up-down direction.

That is, the air discharging direction intersecting the blowing space 105 includes a first air discharging direction S1 disposed in a horizontal direction and a second air discharging direction S2 disposed in the up-down direction.

Air flowing in the first air discharge direction S1 is referred to as a horizontal airflow, and air flowing in the second air discharge direction S2 is referred to as an ascending airflow.

It should be understood that the horizontal airflow does not mean that the air flows only in the horizontal direction, but that a flow rate of air flowing in the horizontal direction is larger. Likewise, it should be understood that the ascending airflow does not mean that the air flows only upward, but that a flow rate of air flowing upward is larger.

In the present embodiment, an upper end gap and a lower end gap of the blowing space 105 are formed to be identical. Unlike the present embodiment, the upper end gap of the blowing space 105 may be formed narrower or wider than the lower end gap thereof.

By forming a right-left width of the blowing space 105 to be constant, a flow of air flowing in front of the blowing space can be formed more uniformly.

For example, when a width of the upper side and a width of the lower side are different, a flow velocity of the wider side may be formed low, and a deviation of the velocities may occur based on the up-down direction. When the velocity deviation of the air occurs in the up-down direction, an air reaching length may vary.

After the air discharged from the first discharge port and the second discharge port are joined to each other in the blowing space 105, the joined air may flow to the user.

That is, in the present embodiment, discharged air of the first discharge port 117 and discharge air of the second discharge port 127 do not individually flow to the user, but the discharged air of the first discharge port 117 and the discharged air of the second discharge port 127 are joined to each other in the blowing space 105, and then, the joined air is provided to the user.

The blowing space 105 may be used as a space where discharged air is joined to each other and mixed. In addition, air behind the blowing space may also flow into the blowing space by the discharge air discharged to the blowing space 105.

Since the discharged air of the first discharge port 117 and the discharged air of the second discharge port 127 are joined to each other in the blowing space, straightness of the discharged air may be improved. In addition, by joining the discharged air of the first discharge port 117 and the discharged air of the second discharge port 127 to each other in the blowing space, air around the first tower and second tower can also indirectly flow in the air discharge direction.

In the present embodiment, the first air discharge direction S1 is formed from the rear to the front, and the second air discharge direction S2 is formed from the lower side to the upper side.

An upper end 111 of the first tower 110 and an upper end 121 of the second tower 120 are spaced apart from each other for the second air discharge direction S2. That is, the air discharged in the second air discharge direction S2 does not cause interference with the case of the fan apparatus for air conditioner 1.

Moreover, for the first air discharge direction S1, a front end 112 of the first tower 110 and a front end 122 of the second tower 120 are spaced apart from each other, and a rear end 113 of the first tower 110 and a rear end 123 of the second tower 120 are also spaced apart from each other.

In each of the first tower 110 and the second tower 120, a surface facing the blowing space 105 is referred to as an inner surface, and a surface not facing the blowing space 105 is referred to as an outer surface.

An outer wall 114 of the first tower 110 and an outer wall 124 of the second tower 120 are disposed in directions opposite to each other, and an inner wall 115 of the first tower 110 and an inner wall 125 of the second tower 120 face each other.

When it is necessary to distinguish the inner walls 115 and 125, the inner surface of the first tower is referred to as a first inner wall 115, and the inner surface of the second tower is referred to as a second inner wall 125.

Similarly, when it is necessary to distinguish the outer walls 114 and 124, the outer surface of the first tower is referred to as a first outer wall 114, and the outer surface of the second tower is referred to as a second outer wall 124.

The first outer wall 114 is formed on an outer side of the first inner wall 115. The first outer wall 114 and the first inner wall 115 form a space through which air flows. The second outer wall 124 is formed on an outer side of the second inner wall 125. The first outer wall 124 and the first inner wall 125 form a space through which air flows.

The first tower 110 and the second tower 120 are formed in a streamlined shape with respect to the flow direction of air.

Specifically, each of the first inner wall 115 and the first outer wall 114 is formed in a streamlined shape in the front-rear direction, and each of the second inner wall 125 and the second outer wall 124 is formed in a streamlined shape in the front-rear direction.

The first discharge port 117 is disposed on the first inner wall 115, and the second discharge port 127 is disposed on the second inner wall 125.

A shortest distance between the first inner wall 115 and the second inner wall 125 is referred to as B0. The discharge ports 117 and 127 are located on the rear side than the shortest distance B0.

A separation distance between the front end 112 of the first tower 110 and the front end 122 of the second tower 120 is referred to as a first separation distance B1, and a separation distance between the rear end 113 of the first tower 110 and the rear end 123 of the second tower 120 is referred to as a second separation distance B2.

In the present embodiment, B1 and B2 are identical. Unlike the present embodiment, any one of B1 or B2 may be longer than the other.

The first discharge port 117 and the second discharge port 127 are disposed between B0 and B2.

Preferably, the first discharge port 117 and the second discharge port 127 are disposed closer to the rear end 113 of the first tower 110 and the rear end 123 of the second tower 120 than B0.

As the discharge ports 117 and 127 are disposed closer to the rear ends 113 and 123, it is easier to control airflow through the Coanda effect described later.

The inner wall 115 of the first tower 110 and the inner wall 125 of the second tower 120 directly provide the Coanda effect, and the outer wall 114 of the first tower 110 and the outer wall 124 of the second tower 120 indirectly provide the Coanda effect.

The inner walls 115 and 125 directly guide the air discharged from the discharge ports 117 and 127 to the front ends 112 and 122.

That is, the inner walls 115 and 125 provide the air discharged from the discharge ports 117 and 127 as the horizontal airflow.

Due to an air flow in the blowing space 105, an indirect air flow occurs in the outer walls 114 and 124 as well.

The outer walls 114 and 124 induce a Coanda effect with respect to the indirect air flow, and guide the indirect air flow to the front ends 112 and 122.

A left side of the blowing space is blocked by the first inner wall 115, and a right side of the blowing space is blocked by the second inner wall 125, but an upper side of the blowing space 105 is opened.

An airflow converter to be described later can convert the horizontal airflow passing through the blowing space into the ascending airflow, and the ascending airflow can flow to the open upper side of the blowing space. The ascending airflow suppresses the direct flow of discharged air to the user and can actively convective indoor air.

In addition, a width of discharged air can be adjusted through the flow rate of air joined in the blowing space.

By setting an up-down length of the first discharge port 117 and the second discharge port 127 much longer than the right-left widths B0, B1, and B2 of the blowing space, the discharged air of the first discharge port and the discharge air of the second discharge port can be induced to be joined to each other in the blowing space.

Referring to 1 to 3, the case 100 of the fan apparatus for air conditioner 1 according to the embodiment of the present disclosure includes the base case 150 in which the filter is detachably installed, and the tower case 140 which is installed above the base case 150 and supported by the base case 150.

The tower case 140 includes the first tower 110 and the second tower 120.

In the present embodiment, a tower base 130 connecting the first tower 110 and the second tower 120 to each other is disposed, and the tower base 130 is assembled to the base case 150. The tower base 130 may be manufactured integrally with the first tower 110 and the second tower 120.

Unlike the present embodiment, the first tower 110 and the second tower 120 may be directly assembled to the base case 150 without the tower base 130 or may be manufactured integrally with the base case 150.

The base case 150 forms a lower portion of the fan apparatus for air conditioner 1, and the tower case 140 forms an upper portion of the fan apparatus for air conditioner 1.

The fan apparatus for air conditioner 1 may suck ambient air through the base case 150 and discharge air filtered by the tower case 140. The tower case 140 may discharge air from a higher position than the base case 150.

The fan apparatus for air conditioner 1 is a column shape of which a diameter decreases upward. The fan apparatus for air conditioner 1 may have a shape of a cone or a truncated cone as a whole.

Unlike the present embodiment, the fan apparatus for air conditioner 1 may include a form in which two towers are disposed. In addition, unlike the present embodiment, it is not necessary to have a shape of which a cross section becomes narrower upward.

However, as in the present embodiment, if the cross section becomes narrower upward, the center of gravity is lowered and a risk of inversion due to an external force is reduced. For convenience of assembly, in the present embodiment, the base case 150 and the tower case 140 are separated from each other and manufactured.

Unlike the present embodiment, the base case 150 and the tower case 140 may be integrated with each other. For example, the base case and tower case can be manufactured in the form of a front case and a rear case which are integrally manufactured, and then assembled with each other.

In the present embodiment, the base case 150 is formed to gradually decrease in diameter toward the upper end. The tower case 140 is also formed to gradually decrease in diameter toward the upper end.

The outer surfaces of the base case 150 and the tower case 140 are formed continuously. In particular, the lower end of the tower base 130 and the upper end of the base case 150 are in close contact with each other, and the outer surface of the tower base 130 and the outer surface of the base case 150 form a continuous surface.

To this end, a diameter of the lower end of the tower base 130 may be the same or slightly smaller than a diameter of the upper end of the base case 150.

The tower base 130 distributes filtered air supplied from the base case 150 and provides the distributed air to the first tower 110 and the second tower 120.

The tower base 130 connects the first tower 110 and the second tower 120 to each other, and the blowing space 105 is disposed above the tower base 130.

In addition, discharge ports 117 and 127 are disposed above the tower base 130, and the ascending airflow and horizontal airflow are formed above the tower base 130.

In order to minimize a friction with air, an upper surface 131 of the tower base 130 is formed in a curved surface. In particular, the upper side is formed as a curved surface which is concave downward, and is formed to extend in the front-rear direction. One side 131a of the upper surface 131 is connected to the first inner wall 115, and the other side 131b of the upper surface 131 is connected to the second inner wall 125.

Referring to FIG. 4, when viewed from a top view, the first tower 110 and the second tower 120 are symmetrical right and left with respect to a center line L-L'. In particular, the first discharge port 117 and the second discharge port 127 are disposed to be symmetrical right and left with respect to the center line L-L'.

The center line L-L' is an imaginary line between the first tower 110 and the second tower 120, and is disposed in a front-rear direction in the present embodiment, and is disposed to pass through the upper surface 131.

Unlike the present embodiment, the first tower 110 and the second tower 120 may be formed in an asymmetric shape. However, it is more advantageous to control horizontal airflow and ascending airflow that the first tower 110 and the second tower 120 are disposed symmetrically with respect to the center line L-L'.

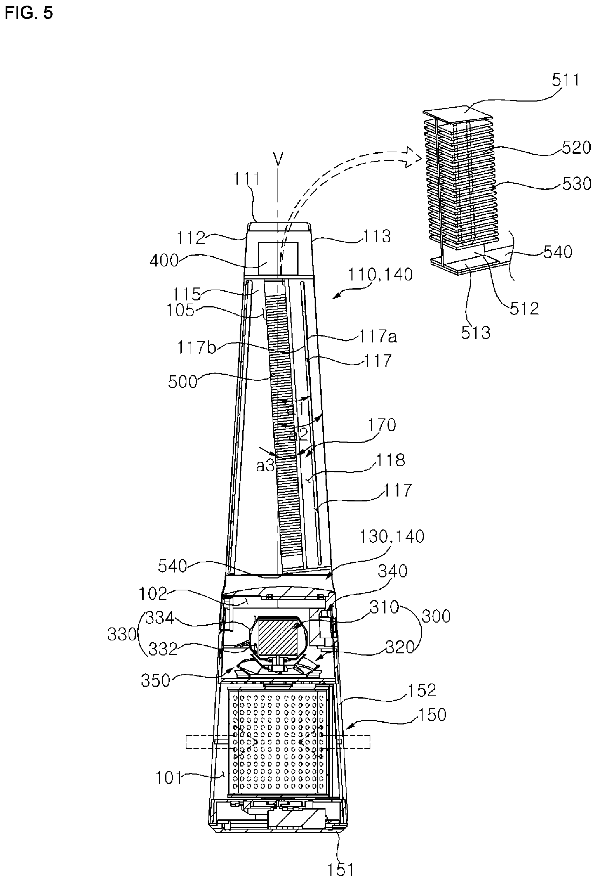

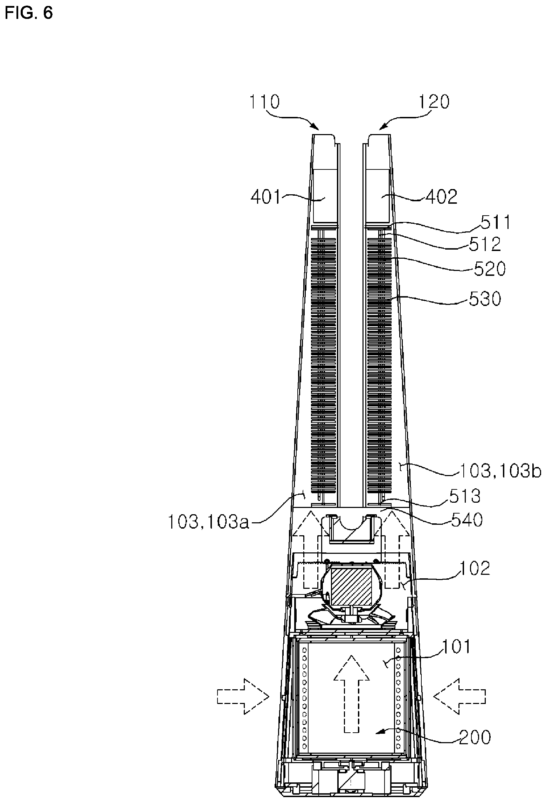

FIG. 5 is a right cross-sectional view of FIG. 2 and FIG. 6 is a front cross-sectional view of FIG. 2.

Referring to FIG. 1, 5, or 6, the fan apparatus for air conditioner 1 includes a filter 200 which is disposed inside the case 100, and a fan apparatus which is disposed inside the case 100 and causes air to flow to the discharge ports 117 and 127.

In the present embodiment, the filter 200 and the fan apparatus 300 are disposed inside the base case 150. The base case 150 is formed in a truncated cone shape, and an upper side thereof is open in the present embodiment.

The base case 150 includes a base 151 which is seated on the ground, and a base outer 152 which is coupled to an upper side of the base 151 and includes a space formed therein and a suction part 155.

When viewed from a top view, the base 151 is formed in a circular shape. The shape of the base 151 may be variously formed.

The base outer 152 is formed in a truncated cone shape having open upper and lower sides. In addition, a portion of a side surface of the base outer 152 is formed by opening. The open portion of the base outer 152 is referred to as a filter insertion port 154.

The case 100 further includes a cover which shields the filter insertion port 154 or/and the suction part. The cover 153 may be assembled detachably from the base outer 152. In the present embodiment, the cover 153 shields the filter insertion port 154 and the suction part together.

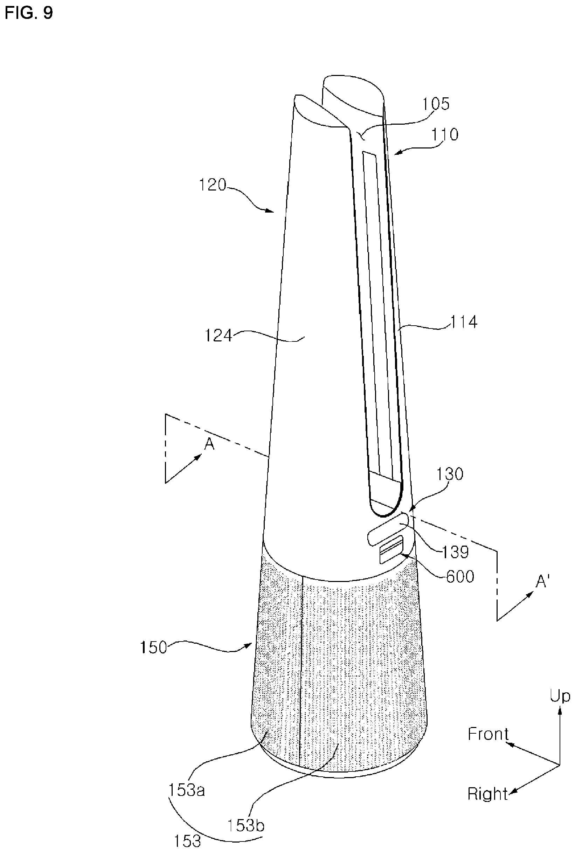

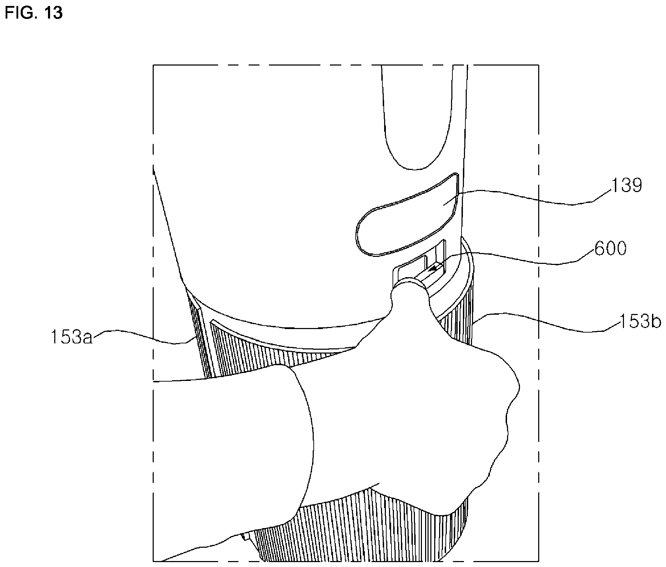

The user may remove the cover 153 and take the filter 200 out of the case 100. The present disclosure may further include a cover separation unit separating the cover 153. The cover separation unit will be described in detail in FIGS. 9 to 14.

The suction part 155 may be formed in at least one of the base outer 152 and the cover 153. In the present embodiment, the suction part 155 is formed in both the base outer 152 and the cover 153, and can suck air from all directions of 3600 around the case 100.

In the present embodiment, the suction part 155 is formed in a hole shape, and the suction part 155 may have various shapes.

The filter 200 is formed in a cylindrical shape which is hollow in the up-down direction therein. An outer surface of the filter 200 faces the suction part 155.

Indoor air passes through and flows an outside of the filter 200 to an inside thereof, and in this process, foreign substances or harmful gases in the air may be removed.

The fan apparatus 300 is disposed above the filter 200. The fan apparatus 300 may cause air which has passed through the filter 200 to flow to the first tower 110 and the second tower 120.

The fan apparatus 300 includes a fan motor 310 and a fan 320 rotated by the fan motor 310, and is disposed inside the base case 150.

The fan motor 310 is disposed above the fan 320, and a motor shaft of the fan motor 310 is coupled to the fan 320 disposed below.

A motor housing 330 in which the fan motor 310 is installed is disposed above the fan 320.

In the present embodiment, the motor housing 330 has a shape surrounding the entire fan motor 310. Since the motor housing 330 covers the entire fan motor 310, it is possible to reduce a flow resistance with respect to the air flowing from the lower side to the upper side.

Unlike the present embodiment, the motor housing 330 may be formed to surround only a lower portion of the fan motor 310.

The motor housing 330 includes a lower motor housing 332 and an upper motor housing 334. At least one of the lower motor housing 332 and the upper motor housing 334 is coupled to the case 100.

In the present embodiment, the lower motor housing 332 is coupled to the case 100. After the fan motor 310 is installed above the lower motor housing 332, the upper motor housing 334 is covered so that the fan motor 310 is surrounded.

The motor shaft of the fan motor 310 passes through the lower motor housing 332 and is assembled to the fan 320 disposed on the lower side.

The fan 320 may include a hub to which the shaft of the fan motor is coupled, a shroud spaced apart from the hub, and a plurality of blades connecting the hub and the shroud to each other.

The air which has passed through the filter 200 is sucked into the shroud, and is then pressurized and flowed by the rotating blade. The hub is disposed above the blade, and the shroud is disposed below the blade. The hub may be formed in a bowl shape concave downward, and a lower side of the lower motor housing 332 may be partially inserted into the hub.

In the present embodiment, the fan 320 is a mixed flow fan. The mixed flow fan sucks air into an axial center and discharges air in a radial direction, and forms the discharged air so that the discharged air is inclined with respect to the axial direction.

Since the entire air flows from the lower side to the upper side, when air is discharged in the radial direction like a general centrifugal fan, a large flow loss due to the flow direction change occurs. The screw flow fan can minimize air flow loss by discharging air upward in the radial direction.

Meanwhile, a diffuser 340 may be further disposed above the fan 320. The diffuser 340 guides the flow of air caused by the fan 320 in the upward direction.

The diffuser 330 serves to further reduce a radial component in the air flow and reinforce an upward component in the air flow. The motor housing 330 is disposed between the diffuser 330 and the fan 320. In order to minimize an installation height of the motor housing in the up-down direction, a lower end of the motor housing 330 may be inserted into the fan 320 to overlap the fan 320. In addition, an upper end of the motor housing 330 may be inserted into the diffuser 340 to overlap the diffuser 340.

Here, the lower end of the motor housing 330 is disposed higher than the lower end of the fan 320, and the upper end of the motor housing 330 is disposed lower than the upper end of the diffuser 340.

In order to optimize an installation position of the motor housing 330, in the present embodiment, an upper side of the motor housing 330 is disposed inside the tower base 130, and a lower side of the motor housing 330 is disposed inside the base case 150. Unlike the present embodiment, the motor housing 330 may be disposed inside the tower base 130 or the base case 150.

Meanwhile, a suction grill 350 may be disposed inside the base case 150. When the filter 200 is separated, the suction grill 350 prevents a finger of the user from entering the fan 320, and thus, protects the user and the fan 320.

The filter 200 is disposed below the suction grill 350 and the fan 320 is disposed above the suction grill 350. The suction grill 350 has a plurality of through holes formed in the up-down direction so that air can flow.

Inside the case 100, a space below the suction grill 350 is defined as a filter installation space 101. A space between the suction grill 350 and the discharge ports 117 and 127 inside the case 100 is defined as a blowing space 102. Inside the case 100, an inner space between the first tower 110 and the second tower 120 in which the discharge ports 117 and 127 are disposed is defined as a discharge space 103.

Indoor air is introduced into the filter installation space 101 through the suction part 155 and then discharged to the discharge ports 117 and 127 through the blowing space 102 and the discharge space 103.

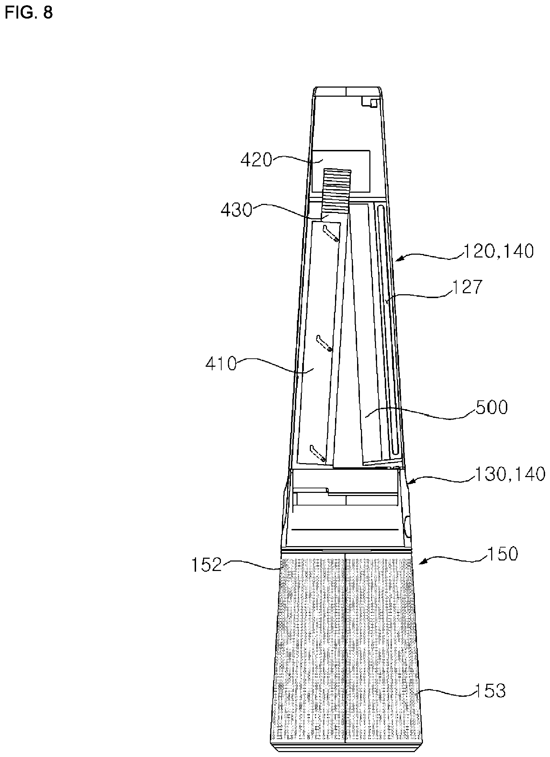

Next, referring to FIG. 5 or 8, the first discharge port 117 and the second discharge port 127 according to the present embodiment are disposed to be elongated in the up-down direction. The first discharge port 117 is disposed between the front end 112 and the rear end 113 of the first tower 110 and is disposed close to the rear end 113. Air discharged from the first discharge port 117 can flow along the first inner wall 115 and can flow toward the front end 112 due to the Coanda effect.

The first discharge port 117 includes a first border 117a forming an edge on an air discharge side (front end in the present embodiment), a second border 117b forming an edge on a side (rear end in the present embodiment) opposite to the air discharge side, an upper border 117c forming an upper edge of the first discharge port 117, and a lower border 117d forming a lower edge of the first discharge port 117.

In the present embodiment, the first border 117a and the second border 117b are disposed parallel to each other. The upper border 117c and the lower border 117d are disposed parallel to each other.

The first border 117a and the second border 117b are disposed to be inclined with respect to a vertical direction V. In addition, the rear end 113 of the first tower 110 is also disposed to be inclined with respect to the vertical direction V.

In the present embodiment, an inclination a1 of each of the first border 117a and the second border 117b with respect to the vertical direction V is 4 , and an inclination a2 of the rear end 113 is 3□. That is, the inclination a1 of the discharge port 117 is larger than the inclination of the outer surface of the tower.

The second discharge port 127 is symmetrical right and left to the first discharge port 117.

The second discharge port 127 includes a first border 127a forming an edge on an air discharge side (front end in the present embodiment), a second border 127b forming an edge on a side (rear end in the present embodiment) opposite to the air discharge side, an upper border 127c forming an upper edge of the second discharge port 127, and a lower border 127d forming a lower edge of the second discharge port 127.

The first border 127a and the second border 127b are disposed to be inclined with respect to the vertical direction V, and the rear end 113 of the first tower 110 is also disposed inclined with respect to the vertical direction V. In addition, the inclination a1 of the discharge port 127 is larger than the inclination a2 of the outer surface of the tower.

Hereinafter, a cover separation unit 600 for separating the cover 153 from the base case 150 will be described in detail.

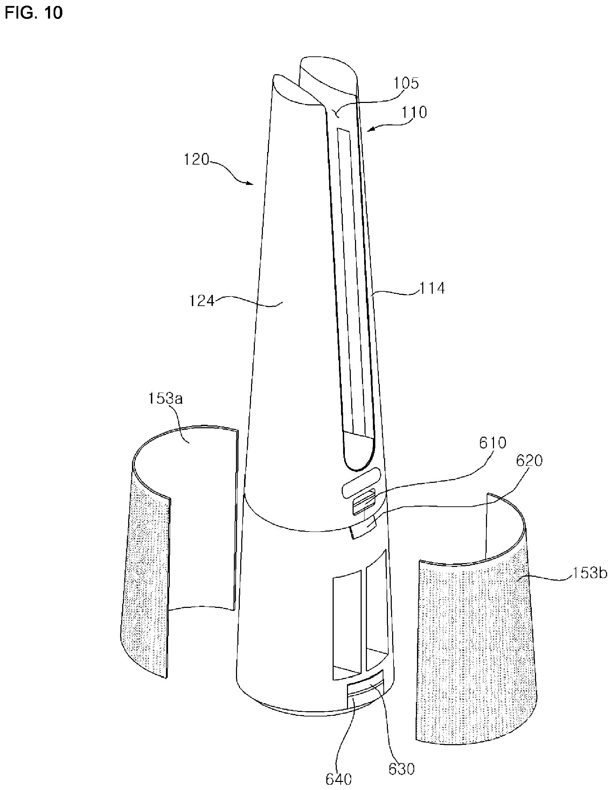

Referring to FIGS. 9 and 10, the cover 153 of the present disclosure is coupled to the case 100 without a gap for an aesthetic feeling to the user. Specifically, the cover 153 is magnetically coupled to the case 100, and a magnet (not illustrated) may be installed on the cover 153 and the case 100. Hereinafter, a direction to be described refers to a direction in a state in which the cover 153 is coupled to the case 100 unless otherwise specified.

In addition, the cover 153 has a shape surrounding the entire outer surface (in detail, outer peripheral surface) of the base case 150. Therefore, the cover 153 is formed in a cylindrical shape and has a shape corresponding to the outer peripheral surface of the base case 150. In addition, the cover 153 may be separated into two pieces for convenience of separation and to reduce a gap during the coupling.

Specifically, the cover 153 may include a front cover 153a which covers a front surface of the base case 150 and a rear cover 153b which covers the rest of the surface except the front surface of the base case 150. Each of the front cover 153a and the rear cover 153b has a semicylindrical shape. Therefore, the cover 153 shields both the filter insertion port 154 and the suction part 155 formed in the base case 150, and thus, provides excellent aesthetic feeling to the user.

Further, the outer surface of the cover 153 coincides with a surface or line extending the outer surface of the tower case 140. Therefore, when the cover 153 is coupled to the base case 150, the cover 153 has a sense of unity with the tower case 140, and there is no gap. In this case, the aesthetic feeling given to the user is improved. However, there is no space for the hand of the user to enter, and thus, it is difficult for the user to separate the cover 153 from the base case 150.

The present disclosure provides a cover separation unit 600 for the user to easily separate the cover 153 from the base case 150.

The cover separation unit 600 is installed in the case 100 to separate the cover 153 from the base case 150. For example, the cover separation unit 600 may include a lever 610 and an upper cover pusher 620. For another example, the cover separation unit 600 may include a lever 610, an upper cover pusher 620, a slider 630, and a lower cover pusher 640 to simultaneously separate the top and bottom of the cover 153.

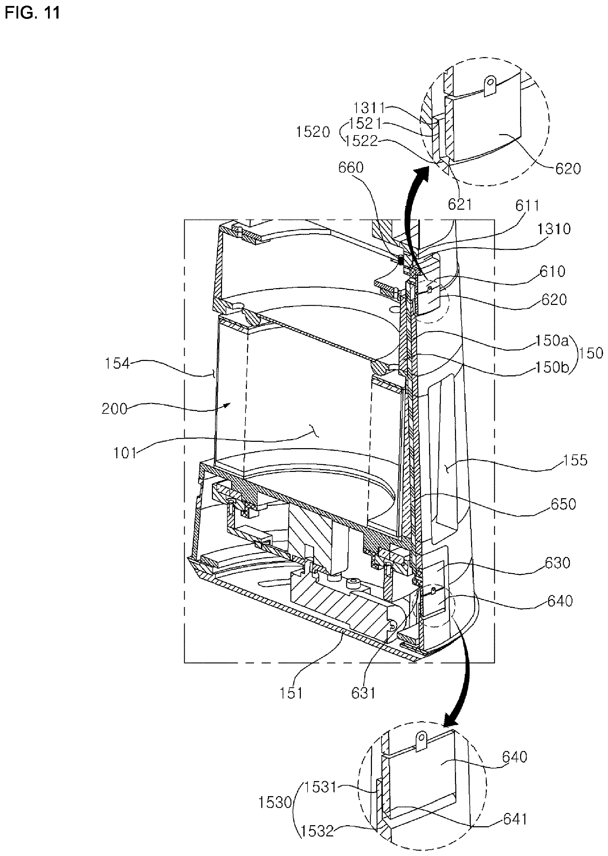

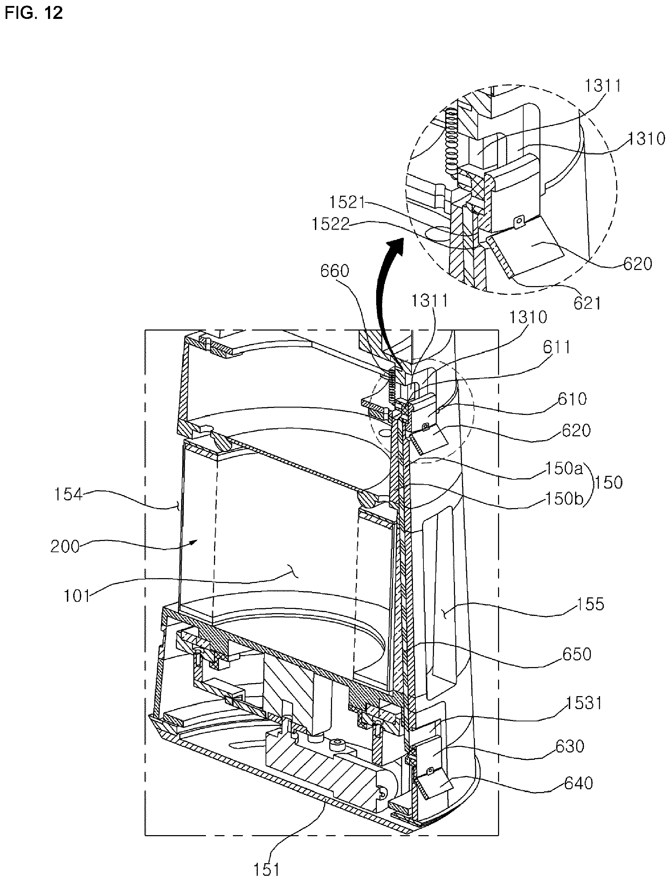

Referring to FIGS. 11 and 12, the lever 610 is installed in the case 100 and slides along the outer surface of the case 100. The lever 610 may be installed in the base case 150 or the tower case 140. In the present embodiment, the cover 153 covers the entire base case 150, and the lever 610 is installed in the tower case 140 and slides along the outer surface of the tower case 140.

The lever 610 transmits an external force to the upper cover pusher 620 or/and the lower cover pusher 640. At least a portion of the lever 610 is exposed to the outer surface of the case 100. In the present embodiment, at least a portion of the lever 610 is exposed to the outer surface of the tower case 140. The lever 610 may be disposed above the cover 153.

The lever 610 is exposed to one surface of the tower case 140 and is moved up and down by an external force. Therefore, the user can operate the lever 610 without excessively bowing a waist of the user, and since the lever 610 moves along the outer surface of the case 100, when the lever 610 moves, the lever 610 does not protrude outward of the case 100. Accordingly, a possibility that the lever 610 is damaged due to the lever 610 protruding outward of the case 100 while the lever 610 is used is reduced.

The lever 610 may be accommodated in the lever receiving groove 1310 formed in the case 100. The lever receiving groove 1310 may be formed in the tower case 140 or may be formed in the base case 150.

In the present embodiment, the outer peripheral surface of the tower case 140 is recessed in a center direction, and thus, the lever receiving groove 1310 is formed. In addition, the lever receiving groove 1310 may communicate with a pusher receiving groove 1521 to be described later. That is, a lower portion of the lever receiving groove 1310 is open to communicate with the pusher receiving groove 1521. The lever receiving groove 1310 accommodates the lever 610 and provides a space in which the lever 610 moves.

A guide slit 1311 is formed in the lever receiving groove 1310. The guide slit 1311 guides the lever 610 and prevents the lever 610 from being separated from the case 100. The lever 610 may further include a holder 611.

One end of the holder 611 is connected to the lever 610 through the guide slit 1311, and the other end of the holder 611 is located inside the tower case 140 and has a width wider than a width of the guide slit 1311. Accordingly, even if the lever 610 is moved up and down, the lever 610 is prevented from being separated from the case 100.

The cover separation unit 600 further includes a return spring 660 which provides a restoring force to the lever 610. The return spring 660 provides an upward restoring force to the lever 610. Specifically, one end of the return spring 660 is connected to the case 100, and the other end thereof is connected to the lever 610. More specifically, one end of the return spring 660 is connected to the inner surface of the tower case 140, and the other end thereof is connected to the holder 611.

The upper cover pusher 620 is rotatably coupled to the lever 610 and is guided to the outer surface of the case 100 to push the cover 153. Accordingly, when an external force is applied to the lever 610, the cover 153 is separated from the case 100 by the upper cover pusher 620.

The upper cover pusher 620 being rotatably coupled to the lever 610 includes the upper cover pusher 620 being hinge-coupled to the lever 610 to be rotated, and the upper cover pusher 620 being connected to one end of the lever 610 in a bendable manner to be rotated. In addition, the upper cover pusher 620 being rotatably coupled to the lever 610 includes the upper cover pusher 620 being formed of a flexible material and one end of the upper cover pusher 620 moving in an outer surface direction while the entire upper cover pusher 620 being bent. In the present embodiment, the pusher of the cover 153 is hinge-coupled to a lower end of the lever 610.

The upper cover pusher 620 may be disposed in a coupling region of the base case 150 in which the cover 153 is coupled to the base case 150. Here, the coupling region means a position horizontally overlapping with the cover 153 in the base case 150. The coupling region may be a portion of the base case 150 or may be the entire base case 150.

The upper cover pusher 620 is located between the cover 153 and the base case 150. When the cover 153 is coupled to the base case 150, the upper cover pusher 620 is not exposed to the outside by the cover 153. The upper cover pusher 620 is located in the pusher receiving groove 1521 formed in the base case 150 to be described later.

Therefore, in a state in which the cover 153 is coupled to the base case 150, the upper cover pusher 620 is covered with the cover 153, and thus, the aesthetic feeling given to the user can be improved. In addition, since there is no need for a separate space for the upper cover pusher 620 to rotate, there is also an advantage of implementing a slim product.

An upper rotation guide 1520 guides the upper cover pusher 620 so that the upper cover pusher 620 rotates in one direction when the upper cover pusher 620 is moved along the outer surface of the base case 150. In addition, the upper rotation guide 1520 accommodates the upper cover pusher 620.

The upper rotation guide 1520 may include an upper guide surface 1522 which extends in a direction intersecting the outer surface (outer peripheral surface) of the base case 150 and guides the upper cover pusher 620. The upper guide surface 1522 may extend in a direction intersecting the up-down direction of the outer peripheral surface of the base case 150. Specifically, the upper guide surface 1522 may have an inclination angle greater than 0□ with respect to the outer surface of the base case 150. The upper guide surface 1522 may be inclined downward from an inside of the base case 150 toward an outside thereof.

In this case, a lower surface of the upper cover pusher 620 may be inclined downward from the inside to the outside to correspond to the upper guide surface 1522. The lower surface of the upper cover pusher 620 may have a constant inclination angle in the up-down direction. Accordingly, when the upper cover pusher 620 moves downward due to interference between the lower surface of the upper cover pusher 620 and the upper guide surface 1522, the lower end of the upper cover pusher 620 protrudes outward.

At least a portion of the upper guide surface 1522 vertically overlaps the upper end of the upper cover pusher 620. At least a portion of the upper guide surface 1522 vertically overlaps the upper end of the upper cover pusher 620 in a state where the filter is coupled.

The upper rotation guide 1520 is formed in the base case 150. Specifically, the upper rotation guide 1520 is disposed in a region horizontally overlapping the cover 153 in the base case 150. Accordingly, when the cover 153 is coupled to the base case 150, the upper rotation guide 1520 is not exposed to the outside by the cover 153.

More specifically, the base case 150 includes an inner base case 150a and an outer base case 150b which is disposed to surround at least a portion of the inner base case 150a, and the upper guide surface 1522 is formed on an outer surface of the outer base case 150b.

The upper rotation guide 1520 may further include an upper pusher receiving groove 1521 accommodating the upper cover pusher 620. The upper pusher receiving groove 1521 may accommodate a portion of the lever 610 when the lever 610 moves downward.

The upper pusher receiving groove 1521 accommodates the upper cover pusher 620 when the lever 610 is not operated, and guides the movement of the upper cover pusher 620 when the lever 610 moves downward to guide the movement of the lever 610.

In the present embodiment, the upper pusher receiving groove 1521 is formed by the outer peripheral surface of the outer base case 150b being recessed inward. That is, the upper pusher receiving groove 1521 is open outward in the outer base case 150b. In addition, the upper pusher receiving groove 1521 is open in the up direction and communicates with the lower portion of the lever receiving groove 1310 so as to accommodate and guide the lever 610 when the lever 610 moves downward. The upper pusher receiving groove 1521 and the lever receiving groove 1310 are located so that at least a portion thereof overlap each other vertically.

The upper guide surface 1522 is formed on one surface of the upper pusher receiving groove 1521. The upper guide surface 1522 is formed on a lower surface of the upper pusher receiving groove 1521. The upper cover pusher 620 is guided along the upper guide surface 1522, and thus, the upper cover pusher 620 is separated from the pusher receiving groove 1521 to the outside.

The slider 630 is spaced apart from the upper cover pusher 620 and installed to be slid on the case 100, and is connected to the lever 610. The slider 630 is moved while being constrained by the lever 610. The slider 630 is installed to be slid on the base case 150. The slider 630 transmits the external force transmitted from the lever 610 to the lower cover pusher 640.

The slider 630 may be accommodated in a lower rotation guide 1530 formed in the case 100. As the slider 630 moves within the lower rotation guide 1530, a movement direction of the slider 630 is guided by the lower rotation guide 1530.

The slider 630 may be located below the upper cover pusher 620. The slider 630 may be located between the base case 150 and the cover 153. Therefore, there is an advantage that the slider 630 is not visible from the outside in a state where the cover 153 is coupled to the case 100.

A slide slit 1534 is formed in the lower rotation guide 1530. The slide slit 1534 guides the slider 630 and prevents the slider 630 from being separated from the case 100.

The slider 630 may further include a slide holder 631. One end of the slide holder 631 is connected to the slider 630 through the slide slit 1534, and the other end of the slide holder 631 is located inside the base case 150 and has a width wider than a width of the slide slit 1534. Accordingly, even when the slider 630 is moved up and down, the slider 630 is prevented from being separated from the case 100.

The slider 630 and the lever 610 are connected to each other by a connection link 650. One end of the connection link 650 is connected to the holder 611, and the other end of the connection link 650 is connected to the slide holder 631. The connection link 650 is constrained by the movement of the lever 610 and moves together with the lever 610.

The connection link 650 may be located inside the case 100. In the present embodiment, the connection link 650 is located in a space between the inner base case 150a and the outer base case 150b, and may be guided by the inner base case 150a and the outer base case 150b.

The lower cover pusher 640 is rotatably coupled to the slider 630 and is guided to the outer surface of the case 100 to push the cover 153. Accordingly, when an external force is applied to the slider 630, the cover 153 is separated from the case 100 by the lower cover pusher 640.

The lower cover pusher 640 being rotatably coupled to the slider 630 includes the lower cover pusher 640 being hinge-coupled to the slider 630 to be rotated and the lower cover pusher 640 being connected to one end of the slider 630 in a bendable manner to be rotated. In addition, the lower cover pusher 640 being rotatably coupled to the slider 630 includes the lower cover pusher 640 being formed of a flexible material and one end of the lower cover pusher 640 moving in an outer surface direction while the entire lower cover pusher 640 being bent. In the present embodiment, the pusher of the cover 153 is hinge-coupled to a lower end of the slider 630.

The lower cover pusher 640 may be disposed in a coupling region of the base case 150 in which the cover 153 is coupled to the base case 150. Here, the coupling region means a position horizontally overlapping with the cover 153 in the base case 150. The coupling region may be a portion of the base case 150 or may be the entire base case 150.

The lower cover pusher 640 is located between the cover 153 and the base case 150. When the cover 153 is coupled to the base case 150, the lower cover pusher 640 is not exposed to the outside by the cover 153. The lower cover pusher 640 is located in a lower pusher receiving groove 1531 formed in the base case 150 to be described later.

Accordingly, in a state in which the cover 153 is coupled with the base case 150, the lower cover pusher 640 is covered with the cover 153, and thus, an aesthetic feeling given to the user can be improved. Moreover, since there is no need for a separate space in which the lower cover pusher 640 rotates, there is also an advantage of implementing a slim product.

The lower cover pusher 640 may be located below the upper cover pusher 620. When the lever 610 is operated, the upper and lower portions of the cover 153 are simultaneously separated by the upper cover pusher 620 and the lower cover pusher 640, and thus, the cover 153 is stably separated.

The lower rotation guide 1530 guides the lower cover pusher 640 so that the lower cover pusher 640 rotates in one direction when the lower cover pusher 640 is moved along the outer surface of the base case 150. In addition, the lower rotation guide 1530 accommodates the lower cover pusher 640.

The lower rotation guide 1530 may include a lower guide surface 1532 which has an inclination with respect to the outer surface (outer peripheral surface) of the base case 150 and guides the lower cover pusher 640.

The lower guide surface 1532 may extend in a direction intersecting the up-down direction of the outer peripheral surface of the base case 150. The lower guide surface 1532 may extend in the direction intersecting the up-down direction. Specifically, the lower guide surface 1532 may have an inclination which is not parallel to the outer surface of the base case 150. The lower guide surface 1532 may be inclined downward from the inside of the base case 150 toward the outside thereof.

In this case, a lower surface 641 of the lower cover pusher 640 may be inclined downward from the inside to the outside to correspond to the lower guide surface 1532. Accordingly, when the lower cover pusher 640 moves downward due to interference between the lower surface of the lower cover pusher 640 and the lower guide surface 1532, the lower end of the lower cover pusher 640 protrudes outward.

At least a portion of the lower guide surface 1532 vertically overlaps the upper end of the lower cover pusher 640. At least a portion of the lower guide surface 1532 vertically overlaps the upper end of the lower cover pusher 640 in a state where the cover 153 is coupled.

The lower rotation guide 1530 is formed in the base case 150. Specifically, the lower rotation guide 1530 is disposed in a region horizontally overlapping the cover 153 in the base case 150. Accordingly, when the cover 153 is coupled to the base case 150, the lower rotation guide 1530 is not exposed to the outside by the cover 153.

More specifically, the base case 150 includes the inner base case 150a and the outer base case 150b disposed to surround at least a portion of the inner base case 150a, and the lower guide surface 1532 is formed on the outer surface of the outer base case 150b.

The lower rotation guide 1530 may further include a lower pusher receiving groove 1531 accommodating the lower cover pusher 640. The lower pusher receiving groove 1531 may accommodate a portion of the slider 630 when the slider 630 moves downward.

The lower pusher receiving groove 1531 accommodates the lower cover pusher 640 and the slider 630 when the slider 630 is not operated, and guides movements of the lower cover pusher 640 and the slider 630 when the slider 630 moves downward.

In the present embodiment, the lower pusher receiving groove 1531 is formed by the outer peripheral surface of the outer base case 150b being recessed in the inner direction. That is, the lower pusher receiving groove 1531 is open outward in the outer base case 150b. In addition, the lower pusher receiving groove 1531 is open in the down direction and communicates with the lower portion of the slider 630 receiving groove so as to accommodate and guide the slider 630 when the lever 610 moves downward. The lower pusher receiving groove 1531 and the slider 630 receiving groove are located so that at least a portion thereof overlaps each other vertically.

The lower guide surface 1532 is formed on one surface of the lower pusher receiving groove 1531. The lower guide surface 1532 is formed on a lower side of the lower pusher receiving groove 1531. The lower cover pusher 640 is guided along the lower guide surface 1532, and thus, the lower cover pusher 640 is separated from the pusher receiving groove 1521 to the outside.

The location of the cover separation unit 600 is not limited. Preferably, since it is common for the user to place a rear of the fan apparatus for air conditioner 1 toward the wall, the cover separation unit 600 is disposed at the rear of the fan apparatus for air conditioner 1.

Specifically, the cover separation unit 600 is disposed at a position where the cover separation unit 600 overlaps at least a portion of the blowing space 105 vertically. The lever 610 is located to vertically overlap at least a portion of the blowing space 105. The lever 610 is disposed below the blowing space 105. In addition, the upper cover pusher 620, the lower cover 153 pusher, and the slider 630 may be disposed at positions vertically overlapping the blowing space 105.

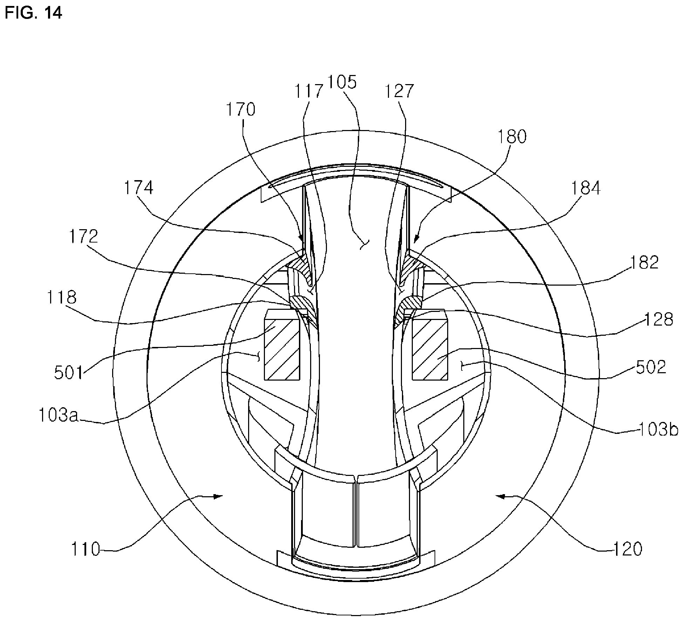

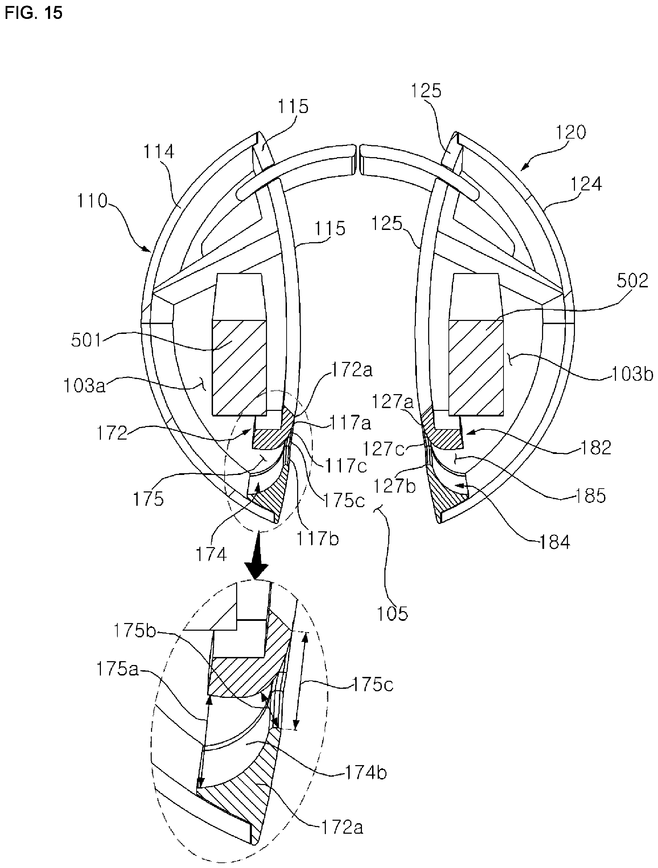

FIG. 14 is a plan cross-sectional view taken along line IX-IX of FIG. 3, and FIG. 15 is a bottom cross-sectional view taken along line IX-IX of FIG. 3.

Referring to FIGS. 5, 14 or 15, the first discharge port 117 of the first tower 110 is disposed toward the second tower 120, and the second discharge port 127 of the second tower 120 is disposed toward the first tower 110.

The air discharged from the first discharge port 117 causes air to flow along the inner wall 115 of the first tower 110 through the Coanda effect. The air discharged from the second discharge port 127 causes air to flow along the inner wall 125 of the second tower 120 through the Coanda effect.

The present embodiment further includes a first discharge case 170 and a second discharge case 180.

The first discharge port 117 is formed in the first discharge case 170, and the first discharge case 170 is assembled to the first tower 110. The second discharge port 127 is formed in the second discharge case 180, and the second discharge case 180 is assembled to the second tower 120.

The first discharge case 170 is installed to penetrate the inner wall 115 of the first tower 110, and the second discharge case 180 is installed to penetrate the inner wall 125 of the second tower 120.

A first discharge opening 118 in which the first discharge case 170 is installed is formed in the first tower 110, and a second discharge opening 128 in which the second discharge case 180 is installed is formed in the second tower 120.

The first discharge case 170 forms the first discharge port 117, and includes a first discharge guide 172 which is disposed on an air discharge side of the first discharge port 117, and a second discharge guide 174 which forms the first discharge port 117 and is disposed on a side opposite to the air discharge side of the first discharge port 117.

Outer surfaces 172a and 174a of the first discharge guide 172 and the second discharge guide 174 provide a portion of the inner wall 115 of the first tower 110.

An inside of the first discharge guide 172 is disposed toward the first discharge space 103a, and an outside thereof is disposed toward the blowing space 105. An inside of the second discharge guide 174 is disposed toward the first discharge space 103a, and an outside thereof is disposed toward the blowing space 105.

The outer surface 172a of the first discharge guide 172 may have a curved surface. The outer surface 172a may provide a surface continuous with the first inner wall 115. In particular, the outer surface 172a forms a curved surface continuous with the outer surface of the first inner wall 115.

The outer surface 174a of the second discharge guide 174 may provide a surface continuous with the first inner wall 115. The inner surface 174b of the second discharge guide 174 may be formed as a curved surface. In particular, the inner surface 174b may form a curved surface continuous with the inner surface of the first outer wall 115, and accordingly, the air in the first discharge space 103a can be guided to the first discharge guide 172 side.

The first discharge port 117 is formed between the first discharge guide 172 and the second discharge guide 174, and air in the first discharge space 103a is discharge to the blowing space 105 blown through the first discharge port 117.

Specifically, air in the first discharge space 103a is discharged between the outer surface 172a of the first discharge guide 172 and the inner surface 174b of the second discharge guide 174, and a gap between the outer surface 172a of the first discharge guide 172 and the inner surface 174b of the second discharge guide 174 is defined as a discharge gap 175. The discharge gap 175 forms a predetermined channel.

The discharge gap 175 is formed so that a width of an intermediate portion 175b is narrower than those of an inlet 175a and an outlet 175c. The intermediate portion175b is defined as the shortest distance between the second border 117b and the outer surface 172a.

A cross-sectional area gradually narrows from the inlet of the discharge gap 175 to the intermediate portion 175b, and the cross-sectional area increases again from the intermediate portion 175b to the outlet 175c. The intermediate portion 175b is located inside the first tower 110. When viewed from the outside, the outlet 175c of the discharge gap 175 may be viewed as the discharge port 117.

In order to induce the Coanda effect, a curvature radius of the inner surface 174b of the second discharge guide 174 is larger than a curvature radius of the outer surface 172a of the first discharge guide 172.

A center of curvature of the outer surface 172a of the first discharge guide 172 is located in front of the outer surface 172a and is formed inside the first discharge space 103a. A center of curvature of the inner surface 174b of the second discharge guide 174 is located on the side of the first discharge guide 172 and is formed inside the first discharge space 103a.

The second discharge case 180 forms the second discharge port 127 and includes a first discharge guide 182 which is disposed on an air discharge side of the second discharge port 127 and a second discharge guide 184 which forms the second discharge port 127 and is disposed on a side opposite to the air discharge of the second discharge port 127.

A discharge gap 185 is formed between the first discharge guide 182 and the second discharge guide 184.

Since the second discharge case 180 is symmetrical to the first discharge case 170, a detailed description thereof will be omitted.

Meanwhile, the fan apparatus for air conditioner 1 may further include an airflow converter 400 which changes the air flow direction in the blowing space 105. The airflow converter 400 is a component which protrudes to the blowing space 105, and changes the direction of air flowing through the blowing space 105. In the present embodiment, the airflow converter 400 may convert the horizontal airflow flowing through the blowing space 105 into an ascending airflow.

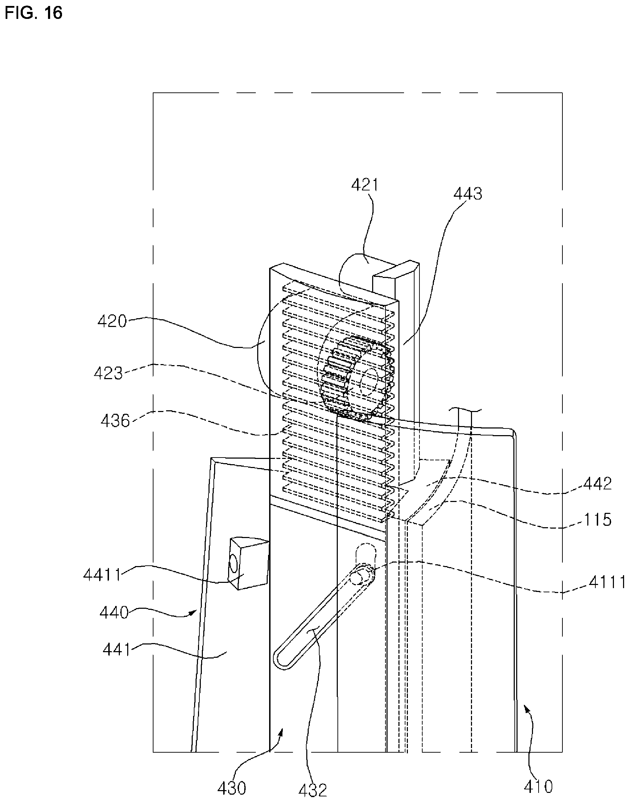

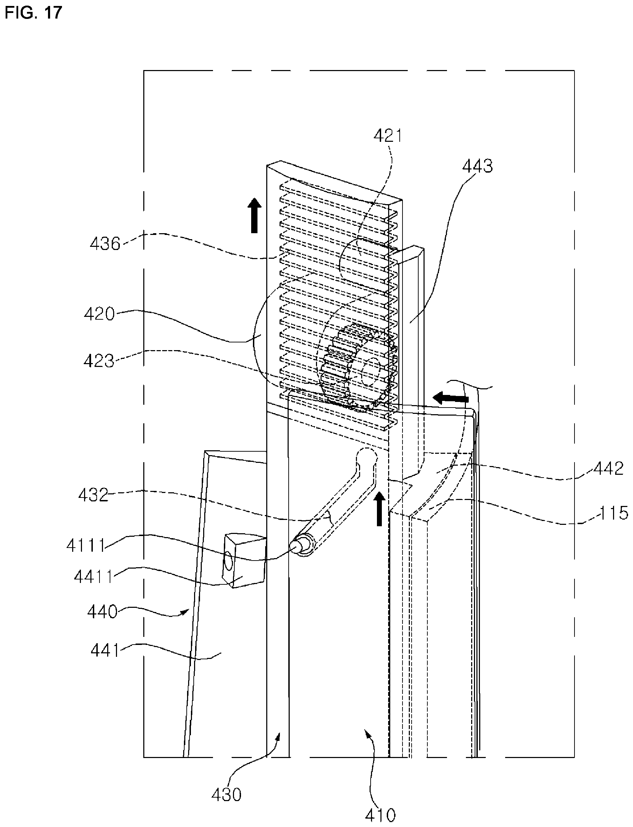

FIGS. 16 and 17 are perspective views of the airflow converter 400. More specifically, FIG. 16 illustrates an airflow converter 400 implementing an ascending airflow by blocking the front of the blowing space 105, and FIG. 17 illustrates an an airflow converter 400 implementing a front discharge airflow by opening the front of the blowing space 105. In FIGS. 1 to 6, the airflow converter 400 is illustrated as a box, and the airflow converter 400 is disposed above the first tower 110 or the second tower 120.

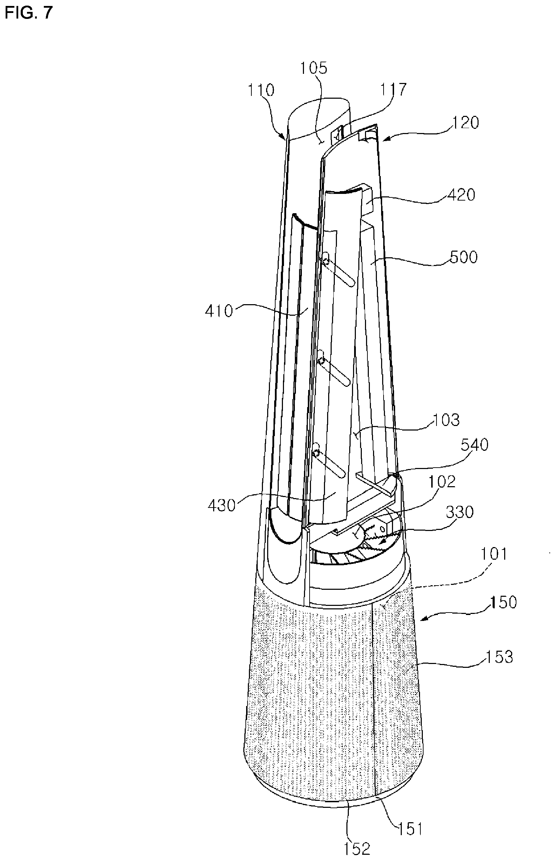

Referring to FIG 7, the airflow converter 400 includes a first airflow converter 401 disposed in the first tower 110 and a second airflow converter 402 disposed in the second tower 120. The first airflow converter 401 and the second airflow converter 402 are symmetrical left and right and have the same configuration.

The air flow converter 400 includes a guide board 410 which is disposed in the tower and protrudes to the blowing space 105, a guide motor 420 which provides a driving force for the movement of the guide board 410, and a board guider 430 which is disposed inside the tower and guides the movement of the guide board 410

The guide board 410 is a component that is disposed in at least one of the first tower 110 and the second tower 120, protrudes into the blowing space 105, and selectively changes the discharge area in front of the blowing space. The guide board 410 protrudes into the front of the blowing space 105 through the board slits 119 and 129.

The guide board 410 may be concealed inside the tower, and may protrude into the blowing space 105 when the guide motor 420 is operated.

In the present embodiment, the guide board 410 includes a first guide board 411 disposed in the first tower 110 and a second guide board 412 disposed in the second tower 120.

For this, the board slit 119 penetrating through the inner wall 115 of the first tower 110 is formed, and the board slit 129 penetrating through the inner wall 125 of the second tower 120 is formed, respectively.

The board slit 119 formed in the first tower 110 is referred to as a first board slit 119, and the board slit formed in the second tower 120 is referred to as a second board slit 129.

The first board slit 119 and the second board slit 129 are disposed symmetrically right and left. The first board slit 119 and the second board slit 129 are formed to be extended in the up-down direction. The first board slit 119 and the second board slit 129 may be disposed to be inclined with respect to the vertical direction V.

The front end 112 of the first tower 110 is formed to have an inclination of 3 degrees, and the first board slit 119 is formed to have an inclination of 4 degrees. The front end 122 of the second tower 120 is formed to have an inclination of 3 degrees, and the second board slit 129 is formed to have an inclination of 4 degrees.

The guide board 410 may be formed in a flat or curved plate shape. The guide board 410 may be formed to be extended in the up-down direction, and may be disposed in the front of the blowing space 105.

The guide board 410 may include a curved portion which is convex in the radial direction.

The guide board 410 may block the horizontal airflow flowing into the blowing space 105 and change the direction to the upward direction.

In the present embodiment, an inner end 411a of the first guide board 411 and an inner end 412a of the second guide board 412 abut on each other or are close to each other to form an ascending airflow. Unlike the present embodiment, one guide board 410 may be in close contact with the opposite tower to form the ascending airflow.

When the airflow converter 400 is not operated, the inner end 411a of the first guide board 411 may close the first board slit 119, and the inner end 412a of the second guide board 412 may close the second board slit 129.

When the airflow converter 400 is operated, the inner end 411a of the first guide board 411 may pass through the first board slit 119 and protrude into the blowing space 105, and the inner end 412a of the second guide board 412 may pass through the second board slit 129 and protrude into the blowing space 105.

In the present embodiment, the first guide board 411 and the second guide board 412 protrude into the blowing space 105 by rotating operation. Unlike the present embodiment, at least one of the first guide board 411 and the second guide board 412 may be linearly moved in a slide manner and exposed to the blowing space 105.

When viewed from a top view, each of the first guide board 411 and the second guide board 412 is formed in an arc shape. Each of the first guide board 411 and the second guide board 412 forms a predetermined curvature radius, and the center of curvature thereof is located in the blowing space 105.

When the guide board 410 is concealed inside the tower, preferably, a volume inside the guide board 410 in the radial direction is larger than a volume outside the radial direction.

The guide board 410 may be formed of a transparent material. A light emitting member such as an LED may be disposed in the guide board 410, and the entire guide board 410 may emit light through light generated from the light emitting member. The light emitting member may be disposed in the discharge space 103 inside the tower, and may be disposed in the outer end of the guide board 410.

The guide motor 420 is a component which provides a driving force to the guide board 410. The guide motor 420 is disposed in at least one of the first tower 110 and the second tower 120. The guide motor 420 is disposed above the guide board 410.

The guide motor 420 includes a first guide motor 421 for providing a rotational force to the first guide board 411, and a second guide motor 422 for providing a rotational force to the second guide board 412.

The first guide motor 421 may be disposed in each of an upper side and a lower side, and if necessary, may be divided into an upper first guide motor 421 and a lower first guide motor 421.

The second guide motor 422 may also be disposed in each of an upper side and a lower side, and if necessary, may be divided into an upper second guide motor 422 and a lower second guide motor 422.

The guide motor 420 is fastened to an air flow converter cover 440. More specifically, the guide motor 420 is coupled to the motor support plate 443 of the air flow converter cover 440. The motor support plate 443 is disposed in the upper end of the air flow converter cover 440. More specifically, the motor support plate 443 protrudes upward from the upper end of the first cover 441.

The guide motor 420 is fastened to the airflow converter cover 440 by the motor support member 421. The motor support member 421 may be formed to protrude from one side of the guide motor 420. A fastening part is laterally formed in a motor support plate 443 to support the guide motor 420, and the motor support member 421 is fastened to the fastening part. A plurality of fastening parts may be formed. The motor support member 421 may protrude upward from the upper end of the guide motor 420, and may protrude downward from the lower end of the guide motor 420.

The guide motor 420 includes a shaft 422. The shaft 422 is disposed horizontally. The shaft 422 of the guide motor may be vertically disposed from the first board slit 119 or the second board slit 129.

The guide motor 420 includes a pinion 423. The pinion 423 is coupled to the shaft 422 of the guide motor. When the guide motor 420 is operated, the pinion 423 rotates. The pinion is vertically disposed. The pinion 423 may be disposed horizontally with respect to the first board slit 119 or the second board slit 129.

The board guider 430 is a component which transmits the driving force of the guide motor 420 to the guide board 410. The board guider 430 is disposed in front of the guide motor 420 and disposed behind the guide board 410. The board guider 430 is connected to the guide board 410 and moves in a direction intersecting the protruding direction of the guide board 410.

The board guider 430 disposed in the first tower 110 is defined as a first board guider, and the board guider 430 disposed in the second tower 120 is defined as a second board guider.

The board guider 430 may be disposed horizontally with respect to the guide board 410. The board guider 430 may be disposed in parallel with the first board slit 119 or the second board slit 129.

The front surface of the board guider 430 may be formed in a curved surface. The front surface of the board guider 430 is adjacent to a rear surface of the guide board 410. When the rear surface of the guide board 410 is formed in an arc shape, the front surface of the board guider 430 is formed in a curved surface so that the guide board 410 may slide along the front surface of the board guider 430.

The rear surface of the board guider 430 may be formed in a flat surface. The rear surface of the board guider 430 is adjacent to the front surface of an airflow converter first cover 441. The board guider 430 may slide along the airflow converter first cover 441.

The upper end of the board guider 430 is disposed above the guide board 410. When a plate shielding the guide motor 420 from the discharge spaces 103a and 103b is formed, the upper end of the guide board 410 may be disposed lower than the plate, and the upper end of the board guider 430 may be disposed above the plate.

The board guider 430 may have a first slit 432 formed therein. A first protrusion 4111 of the guide board 410 is inserted into the first slit 432, and moves the guide board 410 when the board guider 430 moves.

The board guider 430 may have a second slit 434 formed therein. A second protrusion 444 of the airflow converter cover 440 is inserted into the second slit 434, and the board guider 430 slides along the second protrusion 444.

The board guider 430 may have a rack 436 formed therein. The rack 436 is mechanically connected to the guide motor 420 and moves the board guider 430 when the guide motor 420 is operated.

Hereinafter, a driving mechanism of the guide board 410 will be described with reference to FIGS. 16 to 23.

The airflow converter 400 includes a pinion 423 coupled to the shaft 422 of the guide motor. The airflow converter 400 includes a rack 436 which is connected to the pinion 423 and raises the guide board 410 when the guide motor 420 is operated. When the guide motor 420 is operated, the pinion 423 performs a rotational motion, and the rack 436 connected to the pinion 423 performs a translational motion.

The shaft 422 of the guide motor 420 is disposed horizontally. When the pinion 423 coupled to the shaft 422 rotates, the rack 436 connected to the pinion 423 moves upward and downward. For example, when viewed from the left side, when the first guide motor 421 is operated in a clockwise direction, the first board guider 430 moves downward, and when the first guide motor 422 is operated in a counterclockwise direction, the first board guider 430 moves upward. Similarly, when viewed from the right side, when the second guide motor 422 is operated counterclockwise, the second board guider 430 moves downward, and when the second guide motor 422 is operated in a clockwise direction, the second board guider 430 moves upward.

The rack 436 is disposed above the first slit 432. The board guider 430 is disposed in front of the guide motor 420, and the rack 436 is formed on the rear surface of the board guider 430. The board guider 430 penetrates the plate separating the guide motor 420 from the discharge spaces 103a and b and further protrudes upward. The pinion 423 of the guide motor meshes with the rack 436 formed on the rear side of the board guide.

The board guider 430 moves in a first direction that intersects with the air discharge direction when the guide motor 420 is operated. The guide board 410 protrudes in a second direction that intersects with both the air discharge direction and the movement direction of the board guider 430 when the board guider 430 moves.

The air discharged from the first discharge port 117 or the second discharge port flows forward. The board guider 430 moves upward or downward to intersect with the air discharge direction. When the board guider 430 is disposed parallel to the first board slit 119 or the second board slit 129, the board guider 430 may move upward or downward along the length direction of the first board slit 119.

When the board guider 430 moves, the guide board 410 moves laterally so as to intersect with both the air discharge direction and the moving direction of the board guider 430, and protrudes to the outside of the tower case 140 through the first board slit 119 or the second board slit 129. When the guide board 410 is disposed parallel to the first board slit 119 or the second board slit 129, the guide board 410 may traverse vertically with respect to the length direction of the second board slit 129. When the guide board 410 protrudes to the outside of the tower case 140, it may protrude while moving upward, and when the guide board 410 is introduced into the tower case 140, it may be introduced while moving downward.

The first tower 110, the second tower 120, and the blowing space 105 may be entirely formed in a truncated cone shape. The guide board 410 may move in the circumferential direction of the truncated cone. The outer wall of the first tower 110 and the outer wall of the second tower 120 may be formed in a truncated cone shape, the first guide board 411 may move in a circumferential direction along the inner surface of the outer wall of the first tower 110, and the second guide board 412 may move in a circumferential direction along the inner surface of the outer wall of the second tower 120.

The guide board 410 may be disposed parallel to the board slit. The guide board 410 may be disposed perpendicular to the ground, but is preferably disposed parallel to the board slit. When the guide board 410 is disposed parallel to the board slit, the guide board 410 may protrude while moving upward from the ground when protruding. Conversely, the guide board 410 may protrude while moving downward from the ground when being introduced. When the board slit is formed with an inclination of 4 degrees from the ground, the guide board 410 is also disposed to have an inclination of 4 degrees from the ground.

The board guider 430 may be disposed parallel to the board slit. The board guider 430 may be disposed perpendicular to the ground, but is preferably disposed parallel to the board slit. When the guide board 410 is disposed parallel to the board slit, it prevents a gap from occurring when the guide board 410 protrudes, so that the guide board 410 and the board slit are more closely connected. When the board slit is formed with an inclination of 4 degrees from the ground, the board guider 430 is also disposed to have an inclination of 4 degrees from the ground.

The guide board 410 includes a curved surface that is convex in the radial direction. The guide board 410 may be formed in an arc shape such that a center of curvature is disposed inside. The outer wall of the first tower 110 or the inner surface of the inner wall of the second tower 120 includes a curved surface. The guide board 410 forms a curved surface that is convex in the radial direction to correspond to the curved surface. The front surface of the board guider 430 forms a curved surface to correspond to a curved surface of the rear surface of the guide board 410.

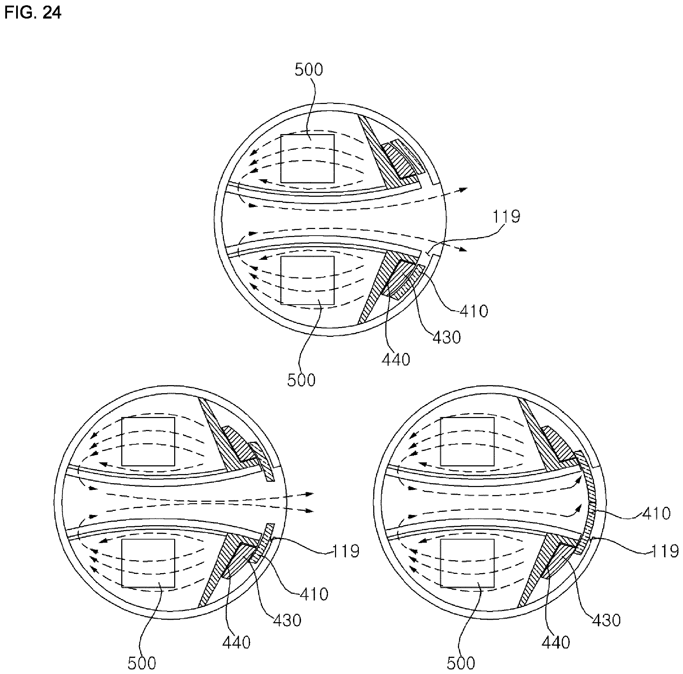

The curved surface of the front surface of the board guider 430 may be formed to be symmetrical left and right as shown in FIG. 16, and as shown in FIG. 24, one side can form a curved surface thicker than the other side. The inside of the front end of the board guider 430, the front end of the air flow converter second cover 442, and the rear end of the first slit 432 may be disposed in the same extension line. The inside of the front end of the board guider 430, the front end of the air flow converter second cover 442, and the rear end of the first slit 432 may come in contact with the rear surface of the guide board 410 at the same time. Accordingly, the protruding guide board 410 can be stably guided.

The first slit 432 is formed to penetrate through one side of the board guider 430 and guides the movement of the guide board 410. The first protrusion 4111 is formed to protrude from one side of the guide board 410, and at least a part of the first protrusion 4111 is inserted into the first slit 432 and slides along the first slit 432.

The first slit 432 is formed in the board guider 430. The left end of the first slit 432 is disposed close to the left end of the board guider 430, and the right end of the first slit 432 is disposed in the right end of the board guider 430.

The lower end of the first slit 432 is disposed in the outer side than the upper end of the first slit 432. For example, referring to FIG. 16, the lower end of the first slit 432 formed in the first board guider 430 is disposed in the left side of the upper end of the first slit 432. Similarly, although not shown, the lower end of the second slit 434 formed in the second board guider 430 may be disposed in the right side of the upper end of the second slit 434.

The first slit 432 includes an inclined portion 4321 in which one end of the guide board 410 in the protruding direction is formed higher than the other end. The inclined portion 4321 includes an inclined surface that is inclined inwardly upward. For example, referring to FIG. 16, the lower end of the first slit 432 formed in the first board guider 430 is disposed in the left side of the board guider 430, and this corresponds to the other end of the guide board 410 in the protruding direction. The upper end of the first slit 432 formed in the first board guider 430 is disposed in the right side of the board guider 430, and this corresponds to one end of the guide board 410 in the protruding direction. Similarly, although not shown, the lower end of the first slit 432 formed in the second board guider 430 is disposed in the right side of the board guider 430, and this corresponds to the other end of the guide board 410 in the protruding direction. The upper end of the first slit 432 formed in the second board guider 430 is disposed in the left side of the board guider 430, and this corresponds to one end of the guide board 410 in the protruding direction.

The position of the inclined portion 4321 of the first slit changes up and down as the board guider 430 moves upward and downward. When the board guide moves upward, the first protrusion 4111 is directed toward the lower end of the inclined portion 4321 of the first slit. Conversely, when the board guide moves downward, the first protrusion 4111 is directed toward the upper end of the inclined portion 4321 of the first slit.

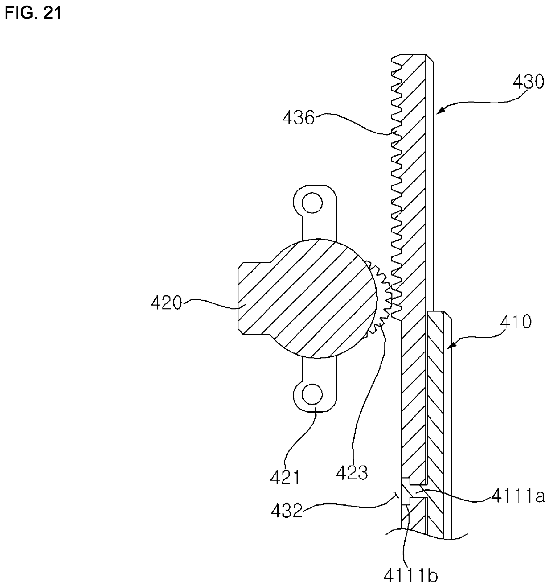

Referring to FIGS. 16 and 21, the inclined portion 4321 of the first slit may form a projection. The inclined portion 4321 of the first slit may have a front width smaller than that of a rear end. The first protrusion 4111 forms a locking projection 4111b so as to correspond to the projection of the inclined portion 4321 of the first slit. That is, the locking projection 4111b of the first protrusion 4111 is disposed in the rear end of the inclined portion 4321 of the first slit. Therefore, the first protrusion 4111 is not separated from the inclined portion 4321 of the first slit.

The first slit 432 includes a vertical portion 4322 which has a lower end disposed in the upper end of the inclined portion 4321 and extends vertically upward. A bent portion may be formed between the lower end of the vertical portion 4322 of the first slit and the upper end of the inclined portion 4321.

The vertical portion 4322 of the first slit serves as a stopper. That is, the first protrusion 4111 has a maximum upward movement distance that ranges up to the upper end of the inclined portion 4321, and does not slide along the vertical portion 4322.

Referring to FIGS. 16 and 21, the vertical portion 4322 of the first slit may form a projection. The vertical portion 4322 of the first slit may have a front width smaller than that of a rear end. The first protrusion 4111 forms a locking projection 4111b to correspond to the projection of the vertical portion 4322 of the first slit. That is, the locking projection 4111b of the first protrusion 4111 is disposed in the rear end of the vertical portion 4322 of the first slit. Therefore, the first protrusion 4111 is not separated from the inclined portion 4321 of the first slit.

The first slit includes a first protrusion insertion part 4323 which is disposed in the upper end of the vertical portion 4322 and inserts the first protrusion 4111 into the first slit 432.

The first protrusion insertion part 4323 may be formed in a shape corresponding to the cross-sectional shape of the first protrusion 4111.

The diameter of the first protrusion insertion part 4323 may be formed larger than the diameter of the first protrusion 4111. In more detail, the diameter of the first protrusion insertion part 4323 is formed larger than the diameter of the locking projection 4111b of the first protrusion.

The first protrusion 4111 is inserted into the first protrusion insertion part 4323. The first protrusion 4111 moves downward along the vertical portion 4322 so that the guide board 410 is fastened to the board guider 430. The first protrusion 4111 slides down or slides upward along the inclined portion 4321 and the guide board 410 moves.

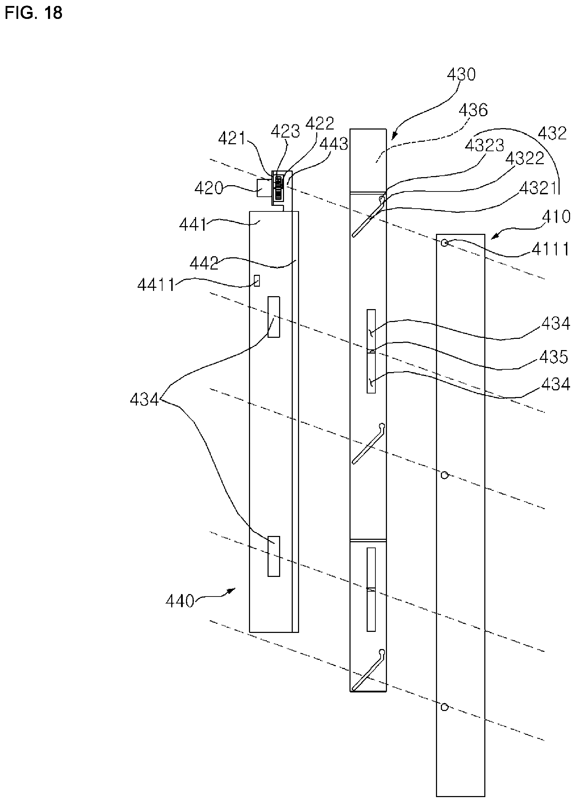

A plurality of first slits 432 may be formed. Referring to FIG. 18, three first slits 432 are formed in the board guider 430. A second slit 432 is formed between the first slits 434. The number of the first slits 432 is not limited to FIG. 18, and may be changed within a range that can be easily adopted by a person skilled in the art.

The first protrusion 4111 is formed in the guide board 410. In more detail, the first protrusion 4111 is formed on the rear surface of the guide board 410. Referring to FIG. 18, the first protrusion 4111 is formed in the left side of the guide board 410. However, the present disclosure is not limited thereto, and the position of the first protrusion 4111 may be changed within a range that can be easily adopted by a person skilled in the art.

The first protrusion 4111 may form a locking projection 4111b. Referring to FIG. 21, the locking projection 4111b of the first protrusion is formed to protrude radially outward from the end of the first protrusion 4111. The locking projection 4111b of the first protrusion is caught by the projection of the inclined portion 4321 or the vertical portion 4322 of the first slit and is not separated.

When the board guider 430 and the first slit 432 move upward or downward, the first protrusion 4111 and the guide board 410 are introduced or protrude. When the board guider 430 moves upward, the first protrusion 4111 is located in the lower end of the inclined portion 4321 of the first slit. When the first protrusion 4111 is located in the lower end of the inclined portion 4321, the guide board 410 moves in the circumferential direction, and is introduced into the tower case 140 through the first board slit 119. When the board guider 430 moves downward, the first protrusion 4111 is located in the upper end of the inclined portion 4321 of the first slit. When the first protrusion 4111 is located in the upper end of the inclined portion 4321, the guide board 410 moves in the circumferential direction, and protrudes to the outside of the tower case 140 through the first board slit 119.

The board guider 430 includes a second slit 434 formed to penetrate through one side. The airflow converter cover 440 includes a second protrusion 444 that is formed to protrude from one side and is at least partially inserted into the second slit 434.

The second slit 434 is formed in the board guider 430. The second slit 434 extends in the length direction of the first tower 110 or the second tower 120. Referring to FIG. 18, the second slit 434 extends in the vertical direction of the board guider 430.

Referring to FIG. 18, the second slit 434 is disposed between one first slit 432 and another first slit 432. The second slit 434 and the first slit 432 are disposed to intersect with each other. The second slit 434 and the first slit 432 are disposed to intersect with each other to disperse the force and cancel the bending stress of the board guider 430.

The board guider 430 slides along the second protrusion 444. The inner surface of the second slit 434 and the outer surface of the second protrusion 444 are in contact with each other, and when the board guider 430 moves upward or downward, it slide along the outer surface of the second protrusion 444.

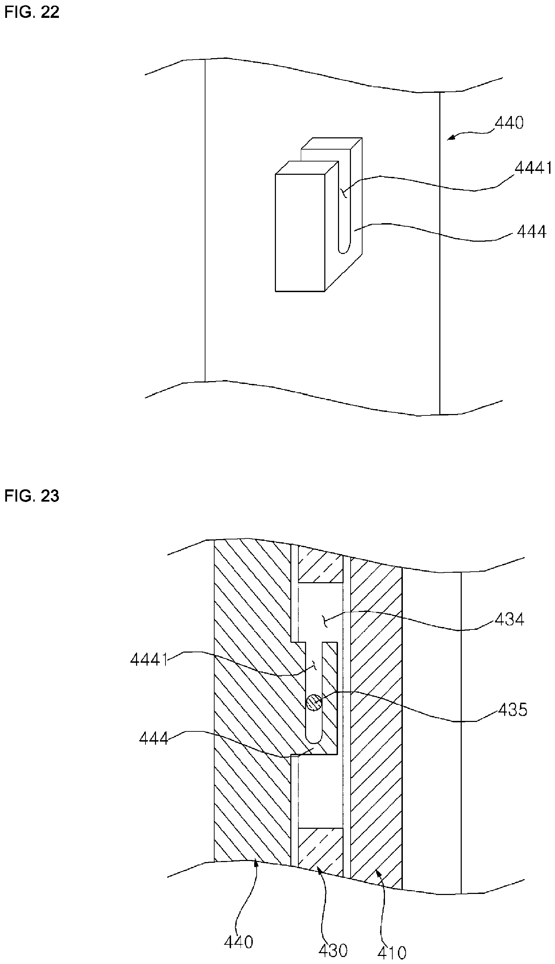

Referring to FIGS. 18 and 23, a bar 435 may be formed in the second slit 434. The second slit bar 435 is disposed between the inner side surfaces of the second slit 434. The second slit bar 435 extends to one sidewall and the other sidewall of the second slit 434. More specifically, the second slit bar 435 is formed to extend horizontally from the middle of the second slit 434. The second slit bar 435 is inserted into a second protrusion groove. The second slit bar 435 slides along the second protrusion groove, and the inner surface of the second slit 434 slides along the outer surface of the second protrusion 444, so that the board guider 430 can move upward and downward more stably by the second protrusion 444.

The second protrusion 444 is formed in the airflow converter cover 440. More specifically, the second protrusion 444 is formed on the front surface of the first cover 441. The second protrusion 444 is formed to protrude from the front surface of the first cover 441.

The side surface of the second protrusion 444 extends in the length direction of the first tower 110 or the second tower 120. Referring to FIG. 18, the second protrusion 444 extends in the vertical direction.

Referring to FIG. 23, the second protrusion 444 is inserted into the second slit 434. The vertical length of the second protrusion 444 is shorter than the distance between the second slit bar 435 and the lower end of the second slit 434. The protrusion length of the second protrusion 444 is shorter than the width of the second slit 434. The front end of the second protrusion 444 is disposed behind the front end of the board guider 430.

Referring to FIG. 22, the second protrusion 444 further includes a groove 4441. The second protrusion groove 4441 is recessed so that at least a part of the outer circumferential surface of the second slit bar 435 is inserted.

The second protrusion groove 4441 may have an upper opening and may be recessed downward. The second protrusion groove 4441 may be formed in a U-shape. The second protrusion groove 4441 has an open upper portion and has both open sides. The recessed depth of the second protrusion groove 4441 is shorter than the distance between the second slit bar 435 and the upper end of the second slit 434. The second slit bar 435 may move downward only to the lower end of the second protrusion groove 4441, and this is the maximum position to which the board guider 430 moves downward. Therefore, the second protrusion groove 4441 serves as a stopper.

Referring to FIG. 16, the airflow converter 400 includes the guide board 410, the guide motor 420, and a cover 440 surrounding the board guider 430. The airflow converter cover 440 is disposed behind the board guider 430. The airflow converter cover 440 includes a first cover 441, a second cover 442, and a motor support plate 443. Hereinafter, the airflow converter cover 440 disposed in the first tower 110 will be described with reference to FIG. 16, and the airflow converter 400 disposed in the second tower 120 will be obviously derived.

The first cover 441 supports the rear surface of the board guider 430 and guides the sliding of the board guider 430. The left end of the first cover 441, i.e., the outer end of the first cover 441 is disposed in the outer wall of the first tower 110. The right end of the first cover 441, i.e., the inner end of the first cover 441 is disposed in the inner wall of the first tower 110.

Referring to FIG. 24, the thickness of the outer end of the first cover 441 is formed to be narrower than the thickness of the right end. The outer end of the first cover 441 is disposed behind the inner end of the first cover 441.

The second cover 442 supports one side of the board guider 430 and guides the sliding of the board guider 430.

The second cover 442 is disposed inside the front surface of the first cover 441. The second cover 442 may be formed to protrude forward from the inner end of the first cover 441. The second cover 442 may extend along the first outer wall 114 of the first tower 110 or the inner surface of the second inner wall 125 of the second tower 120.

The front end of the second cover 442 may coincide with the rear end of the first board slit 119 or the second board slit 129. The rear surface of the guide board 410 may be in contact with the front end of the second cover 442 and the rear ends of the first and second board slits 119 and 129. Accordingly, the second cover 442 guides the guide board 410 together with the board slit.

The inner end of the second cover 442 is in contact with the inner surface of the first inner wall 115 or the inner surface of the second inner wall 125.

The outer end of the second cover 442 is in contact with the inner surface of the board guider 430. Accordingly, the board guider 430 can slide along the outer surface of the second cover 442. A third protrusion 4411 may be in contact with the outer surface of the board guider 430 opposite to the outer end of the second cover 442.

The motor support plate 443 is disposed in the upper end of the first cover 441, one surface supports the guide motor 420, and the other surface supports the board guider 430.

The motor support plate 443 may be formed to protrude upward from the upper end of the first cover 441. The motor support plate 443 is disposed outside the second cover 442.

The upper end of the motor support plate 443 is disposed above the motor. More specifically, the upper end of the motor support plate 443 is disposed above the pinion 423.

One surface of the motor support plate 443 supports the guide motor 420. One surface of the motor support plate 443 may be formed such that a coupling portion to which the guide motor 420 is coupled is protruded. The motor support member 421 of the guide motor 420 is coupled to the coupling portion.

The other surface of the motor support plate 443 supports the board guider 430. The other surface of the motor support plate 443 is disposed in the same line as the front surface of the first cover 441. The rear surface is in contact with the front surface of the first cover 441 and the other surface of the motor support plate 443 at the same time. The upper portion of the board guider 430 is supported by the other surface of the motor support plate 443 and meshes with the pinion 423.

A third protrusion 4411 may be formed on the first cover 441. The third protrusion 4411 is disposed outside the first cover 441. The side surface of the third protrusion 4411 and the outside of the board guider 430 face each other. The board guider 430 may slide along the third protrusion 4411. A coupling hole for fastening to the first outer wall 114 or the second outer wall 124 may be formed on the front surface of the third protrusion 4411.

The rear surface of the board guider 430 is supported by the first cover 441. In addition, the rear surface of the board guider 430 may be supported by the motor support plate 443. One side surface of the board guider 430 is supported by the second cover 442. The other side surface of the board guider 430 is supported by the third protrusion 4411 formed in the first cover 441. Since the board guider 430 is supported by three surfaces, it can move upward and downward stably.

The airflow converter 400 is disposed in front of the first discharge port 117 or the second discharge port based on the air discharge direction. Air is discharged forward from the first discharge port 117 or the second discharge port. As air passes through the first inner wall 115 or the second inner wall 125, the Coanda effect occurs. The airflow converter 400 is disposed in the first inner wall 115 or the second inner wall 125 to selectively change the wind direction. The airflow converter 400 may generate wide-area wind, concentrated wind, or ascending airflow according to a degree of protrusion.

A driving method of the airflow converter 400 is described as follows.

Referring to FIGS. 16 and 17, when the guide motor 420 is operated, the pinion 423 rotates, the rack 436 meshing with the pinion 423 moves, and the board guider 430 moves upward and downward. Referring to FIG. 21, when the guide motor 420 is operated in a clockwise direction, the board guider 430 moves downward, and when the guide motor 420 is operated in a counterclockwise direction, the board guider 430 moves upward.

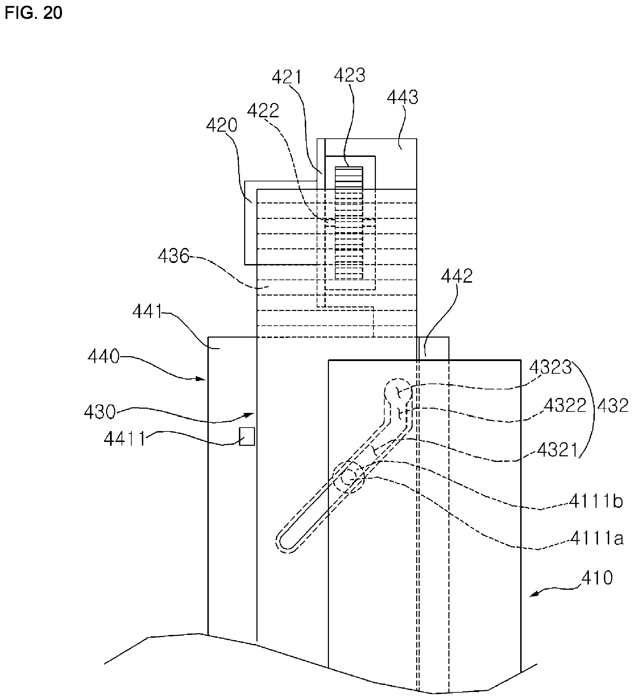

FIGS. 16 and 20 illustrate that the guide board 410 protrudes. In FIG. 21, when the guide motor 420 is operated in a clockwise direction, the board guider 430 moves downward. When the board guider 430 moves downward, the positions of the first slit 432 and the second slit 434 are also lowered. The second slit 434 slides down along the second protrusion 444, and the second slit bar 435 slides down along the groove 4441 of the second protrusion. As the position of the first slit 432 is lowered, the first protrusion 4111 gradually moves to the right, and the guide board 410 passes through the board slit and protrudes into the blowing space 105.

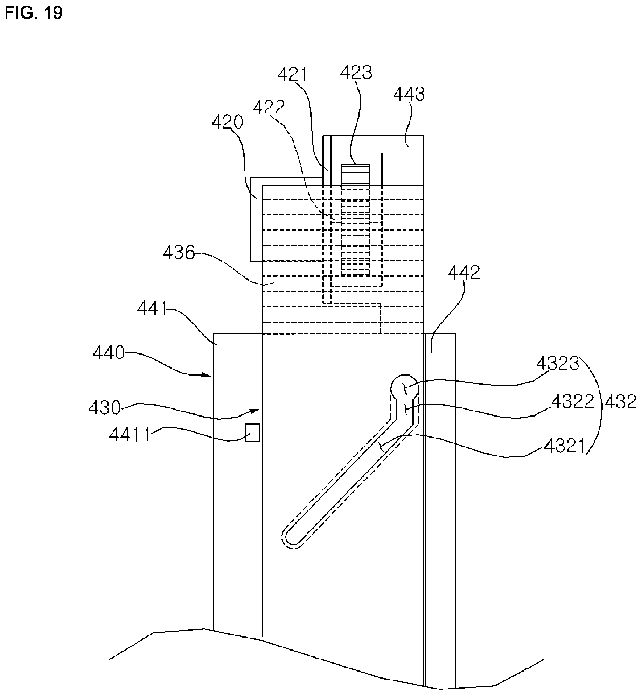

FIGS. 17 and 19 illustrate that the guide board 410 is introduced. In FIG. 21, when the guide motor 420 is operated counterclockwise, the board guider 430 moves upward. When the board guider 430 moves upward, the positions of the first slit 432 and the second slit 434 are also raised. The second slit 434 slides to move upward along the second protrusion 444, and the second slit bar 435 slides to move upward along the groove 4441 of the second protrusion. As the position of the first slit 432 is raised, the first protrusion 4111 gradually moves to the left, and the guide board 410 is introduced into the inside the tower case 140 through the board slit.

Hereinafter, a heater 500 installed in the air conditioner will be described.

The heater 500 is a component which is disposed in the first discharge space 103a or the second discharge space 103b to heat flowing air. The heater 500 heats the flowing air and discharges the heated air to an outside of the fan apparatus for air conditioner.

Referring to FIGS. 1 and 2, the heater 500 may be disposed in the first tower 110 or the second tower 120 of the fan apparatus for air conditioner.

The heater 500 is disposed to be extended in the up-down direction. The heater 500 is disposed in a length direction of the first tower 110 or the second tower 120. The heater 500 is disposed below the airflow converter 400.

Referring to FIG. 3, the heater 500 may be disposed in each of the first tower 110 and the second tower 120. The heater 500 disposed in the first tower 110 may be referred to as a first heater 501, and the heater 500 disposed in the second tower 120 may be referred to as a second heater 502. The first tower 110 and the second tower 120 may be formed symmetrically with respect to a central axis, and the first tower 110 and the second tower 120 may be disposed symmetrically with respect to the central axis.

An upper end of the heater 500 may be disposed below an upper end of the guide board 410. A lower end of the heater 500 may be disposed above a lower end of the guide board 410.

Referring to FIG. 4, when viewed from the top, the upper end of the heater 500 may be disposed at a center of the first tower 110 or the second tower 120 in the front-rear direction.

Referring to FIG. 5, the upper end of the heater 500 is disposed in front of the lower end of the heater 500. In other words, the heater 500 is disposed inclined so that the lower end is disposed behind the upper end.

The heater 500 is disposed inside the tower case 140 and is disposed upstream of the first discharge port 117 or the second discharge port. Upstream means that it is disposed in the air inflow direction based on the air flow direction. That is, the heater 500 is disposed in the air inflow direction of the first discharge port 117 or the second discharge port. In more detail, the heater 500 is disposed in front of the first discharge port 117 or the second discharge port.

The heater 500 includes a heating tube 520 that emits heat and a fin 530 that transfers heat from the heating tube 520.

The heating tube 520 is a component that receives energy and converts the received energy into thermal energy to generate heat. The heating tube 520 may be connected to an electric device to receive electrical energy, and may be configured of a resistor to convert electrical energy into thermal energy. Alternatively, the heating tube 520 may be formed as a pipe through which the refrigerant flows, and heat the air by exchanging heat between the refrigerant flowing in an inside thereof and the air flowing in an outside thereof. In addition, the heating tube 520 includes a heating element within a range that can be easily changed based on a person skilled in the art.

The heating tube 520 may be formed to have an inclination. In more detail, the upper end of the heating tube 520 may be disposed in front of the lower end.

The heating tube 520 may be formed in a U-shape. The fin 530 is a component that is connected to the heating tube 520 and transfers heat from the heating tube 520. Since the fin 530 has a large surface area, the heat transferred from the heating tube 520 can be effectively transferred to the flowing air.

The fin 530 changes the air flow direction and guides air to the first discharge port 117 or the second discharge port. Referring to FIG. 5, the suction part is disposed in a lower side, and the first discharge port 117 and the second discharge port are disposed in an upper side. Inside the first tower 110 and the second tower 120, air forms a flow that rises from a lower portion to an upper portion. The fin 530 converts the flow rising from a lower portion to an upper portion into a flow moving from the front to the rear.

The heater 500 includes a support member 510. The support member 510 is a component that supports the tube and the heater 500. The support member 510 includes an upper horizontal plate 511, a vertical plate 512, and a lower horizontal plate 513.

The vertical plate 512 extends vertically.

A plurality of fins 530 are fixed to the vertical plate 512. The plurality of fins 530 extend in a direction intersecting the extension direction of the vertical plate 512. For example, the vertical plate 512 may extend vertically and the plurality of fins 530 may extend in the front-rear, left-right direction.

The heating tube 520 is disposed to extend along the extension direction of the vertical plate 512. The heating tube 520 may be disposed parallel to the vertical plate 512. Alternatively, the heating tube 520 may come in contact with the vertical plate 512.

The vertical plate 512 may be formed to have an inclination. In more detail, the upper end of the vertical plate 512 may be disposed in front of the lower end.

The upper horizontal plate 511 is disposed in the upper end of the vertical plate 512. A plate shielding the guide motor 420 may be formed above the first tower 110 and the second tower 120, and the upper horizontal plate 511 may be fixed to the plate to support the heater 500. The upper horizontal plate 511 may be disposed parallel to the ground like a plate, when the plate shielding the guide motor 420 is horizontal to the ground. Referring to FIG. 5, when viewed from the side, the upper horizontal plate 511 is not perpendicular to the vertical plate 512. Referring to FIG. 6, when viewed from the front or rear, the upper horizontal plate 511 is perpendicular to the vertical plate 512.

The lower horizontal plate 513 is disposed in the lower end of the vertical plate 512. A vertical plate 512 is connected to the upper surface of the lower horizontal plate 513, and a flow path shielding member 540 is disposed on the lower surface of the lower horizontal plate 513. Unlike the upper horizontal plate 511, the lower horizontal plate 513 is perpendicular to the vertical plate 512. Referring to FIG. 5, when viewed from the side, the lower horizontal plate 513 is perpendicular to the vertical plate 512 and is disposed not to be horizontal with respect to the ground. Referring to FIG. 6, the lower horizontal plate 513 is perpendicular to the vertical plate 512 even when viewed from the front.

Referring to FIG. 5, the first discharge port 117 extends in the length direction of the first tower 110, and the second discharge port extends in the length direction of the second tower 120. A plurality of fins 530 are disposed along the length direction of the first discharge port 117 or the second discharge port. The first discharge port 117 and the second discharge port may be formed to be extended in the length direction of the first tower 110 and the second tower 120. A plurality of heaters 500 may be disposed along the first discharge port 117, and a plurality of heaters 500 may be disposed along the second discharge port. Since a plurality of heaters 500 are disposed along the first discharge port 117 and the second discharge port, air may be evenly discharged to the first discharge port 117 and the second discharge port.

Referring to FIG. 5, the fin 530 extends in a direction intersecting the length direction of the first discharge port 117 or the second discharge port. Referring to FIG. 5, the first discharge port 117 and the second discharge port extend from the upper center to the lower right. The plurality of fins 530 extend from the center to the upper right. The length direction of the first discharge port 117 and the second discharge port and the extension direction of the plurality of fins 530 may intersect with each other. In more detail, the fin 530 may extend perpendicular to the length direction of the first discharge port 117 or the second discharge port.

A plurality of fins 530 are disposed in the length direction of the first discharge port 117 and the second discharge port, and extend in a direction perpendicular to the length direction of the first discharge port 117 and the second discharge port. Accordingly, the flow direction of the air is changed toward the first discharge port 117 and the second discharge port according to the guide of the fin 530, and the air is distributed and flows with an equal amount to the first discharge port 117 and the second discharge port that are formed long vertically.

The heating tube 520 may extend along the length direction of the first discharge port 117 or the second discharge port, and the fin 530 may extend vertically in the extension direction of the heating tube 520.

Referring to FIG. 5, the heating tube 520 may be disposed in an upper portion of the heater 500. The heating tube 520 extends downward from the upper portion of the heater 500. The heating tube 520 may be disposed in parallel with the vertical plate 512 while being spaced apart from the vertical plate 512, and may extend while being in contact with the vertical plate 512. The heating tube 520 extends along the length direction of the first discharge port 117 and the second discharge port.

Referring to FIG. 5, the fin 530 extends perpendicular to the extension direction of the heating tube 520. For example, when the heating tube 520 forms an angle of about 4 degrees with respect to the vertical axis V, the fin 530 may form an angle of about 4 degrees with respect to the ground. In this case, the fin 530 extends perpendicular to the extension direction of the heating tube 520.

Referring to FIG. 5, when viewed from the side, the heating tube 520 is disposed to be inclined with a certain inclination with respect to the vertical axis, the vertical plate 512 is also disposed to be inclined with a certain inclination with respect to the vertical axis, and the heating tube 520 and the vertical plate 512 are disposed in parallel. In addition, the upper horizontal plate 511 is disposed parallel to the horizontal plane. The lower horizontal plate 513 is disposed to be inclined with a certain inclination with respect to the horizontal plane. The fin 530 is disposed to be inclined with a certain inclination with respect to the horizontal plane and disposed parallel to the lower horizontal plane.

Referring to FIG. 5, the heater 500 is disposed to be inclined with respect to the vertical direction. The heater 500 is disposed parallel to the first discharge port 117 or the second discharge port 127.

The heater 500 may be disposed to be inclined to have an inclination (angle) of a3 with respect to the vertical direction. For example, the heater 500 may be disposed to be inclined within a certain error range based on an angle of 4 degrees with respect to the vertical direction. Referring to FIG. 5, the second discharge port may be disposed to be inclined to have an inclination of a1 with respect to the vertical direction. For example, the second discharge port may be disposed to be inclined within a certain error range based on an angle of 4 degrees with respect to the vertical direction. Although not shown in FIG. 5, it is obvious that the first discharge port 117 may also be disposed to be inclined to have an inclination of a1 with respect to the vertical direction.

The inclination a3 of the heater 500 may correspond to the following values. The inclination of the vertical plate 512 and the vertical axis V with respect to the ground. The inclination of the heating tube 520 and the vertical axis V with respect to the ground. The inclination of the upper horizontal plate 511 and the vertical plate 512. The inclination of the fin 530 and the upper horizontal plate 511. The inclination of the fin 530 and the ground. The inclination of the lower horizontal plate 513 and the ground.

The heater 500 is disposed parallel to the first discharge port 117 or the second discharge port with respect to the vertical direction. In other words, the inclination a3 of the heater 500 in the vertical direction and the inclination a1 of the first discharge port 117/second discharge port in the vertical direction may be the same. Since the heater 500 is disposed parallel to the first discharge port 117 or the second discharge port, an equal amount of air guided by the fin 530 may flow to the first discharge port 117 or the second discharge port.

Referring to FIGS. 14 and 15, the first tower 110 includes a first inner wall 115 which is disposed toward the blowing space 105 and has a first discharge port 117 formed thereon. The second tower 120 includes a second inner wall 125 which is disposed toward the blowing space 105 and has a second discharge port formed thereon. The heater 500 is disposed to be spaced apart from an inner surface of at least one of the first inner wall 115 and the second inner wall 125. A space through which air can flow is formed between the heater 500 and the first inner wall 115, and air flows in the space. A space through which air can flow is formed between the heater 500 and the second inner wall 125, and air flows in the space. Air flows between the heater 500 and the inner surface, thereby forming a wall of air. Therefore, the heat emitted from the heater 500 cannot convectively flow to the first inner wall 115 or the second inner wall 125, and the first inner wall 115 and the second inner wall 125 are prevented from being overheated.

Referring to FIGS. 14 and 15, the first tower 110 includes a first outer wall 114 formed outside the first inner wall 115. The second tower 120 includes a second outer wall 124 formed outside the second inner wall 125. The heater 500 is disposed to be spaced apart from the inner surface of the first outer wall 114 or the second outer wall 124. A space through which air can flow is formed between the heater 500 and the inner surface of the first outer wall 114, and the air flows in the space. A space through which air can flow is formed between the heater 500 and the inner surface of the second outer wall 124, and air flows in the space. Air flows between the heater 500 and the inner surface of the outer wall, thereby forming a wall of air. Accordingly, the heat emitted from the heater 500 cannot convectively flow to the first outer wall 114 or the second outer wall 124, and the first outer wall 114 and the second outer wall 124 are prevented from being overheated.

Referring to FIGS. 14 and 15, the heater 500 is disposed closer to the first inner wall 115 than to the first outer wall 114. The heater 500 is disposed closer to the second inner wall 125 than to the second outer wall 124. The air discharged from the first discharge port 117 flows at a high speed on the first inner wall 115, and the air discharged from the second discharge port flows at a high speed on the second inner wall 125. Since air flows at a high speed in the first inner wall 115 and the second inner wall 125, forced convection occurs, thereby cooling the first inner wall 115 and the second inner wall 125 more quickly. However, air flows on the first outer wall 114 and the second outer wall 124 at a slow speed due to an indirect Coanda effect. Accordingly, the cooling rate of the first outer wall 114 is slower than that of the first inner wall 115, and the cooling rate of the second outer wall 124 is slower than that of the second inner wall 125. Accordingly, by disposing the heater 500 closer to the first inner wall 115 or the second outer wall 124, overheating of the tower case 140 may be more efficiently prevented.

Referring to FIG. 5, the lower end of the heater 500 is disposed closer to the rear lower end of the first tower 110 or the second tower 120 than the front lower end. Therefore, the cross-sectional area of the discharge space 103 is larger in the lower portion than in the upper portion.

The amount of air flowing in the lower end of the first tower or the second tower 120 is maximal, and as it goes upward, the air passes through the heater 500 and is discharged to the blowing space 105, and the amount of air flowing in the upper end of the first tower or the second tower 120 is minimal. The lower end of the heater 500 may be disposed closer to the rear lower end than the front lower end of the first tower 110 or the second tower 120 to form a discharge space 103 suitable for the air flow rate. Therefore, it is possible to prevent pressure loss and improve efficiency by compensating the pressure difference.

The heater 500 further includes a flow path shielding member 540 that shields air from flowing between the fin 530 and the first discharge port 117 or the second discharge port. Referring to FIG. 5, the flow path shielding member 540 is disposed in the lower end of the heater 500 and extends toward the lower end of the first discharge port 117 or the second discharge port.

The flow path shielding member 540 is disposed inside the tower case 140. The lower end of the flow path shielding member 540 is disposed above the suction grill.

The flow path shielding member 540 has a inclination so that the rear end is disposed above the front end.

The flow path shielding member 540 extends to the rear end of the first tower 110 or the second tower 120.

The lower end of the first discharge port 117 or the second discharge port is disposed above the flow path shielding member 540.

As shown in FIG. 7, the flow path shielding member 540 extends to the left or right from the front end of the lower horizontal plate 513, and extends to the rear. Therefore, it may be formed in a semicircular shape. Alternatively, the flow path shielding member 540 may be formed to have the same width as that of the lower horizontal plate 513, as shown in FIG. 5, and may extend to the rear end.

The flow path shielding member 540 prevents the air flowing through the first discharge space 103a or the second discharge space 103b from being directly discharged to the first discharge port 117 or the second discharge port without passing through the heater 500. In more detail, the flow path shielding member 540 shields the rear lower end, the left lower end, the right lower end of the heater 500 and the inner surface of the first tower 110, and shields the rear lower end, the left lower end, the right lower end of the heater 500 and the inner surface of the second tower 120. Accordingly, the air flow directly discharged from the rear lower end, the left lower end, the right lower end of the heater 500 to the first discharge port 117 or the second discharge port is blocked, thereby improving efficiency.

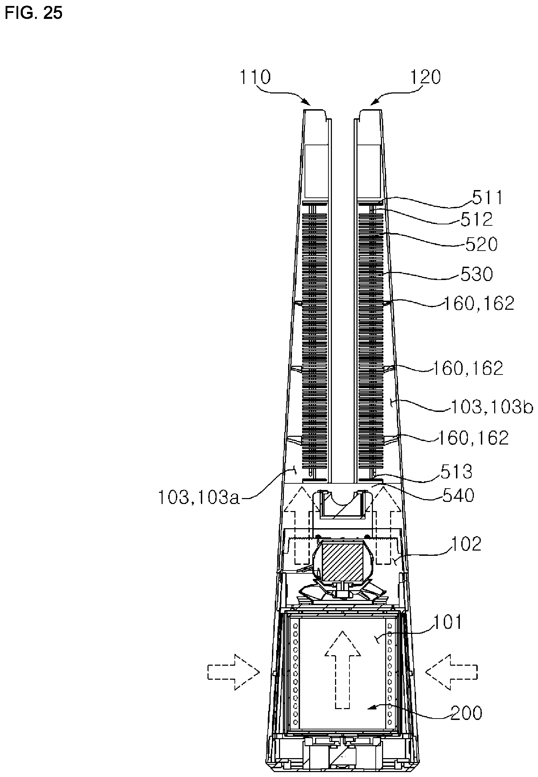

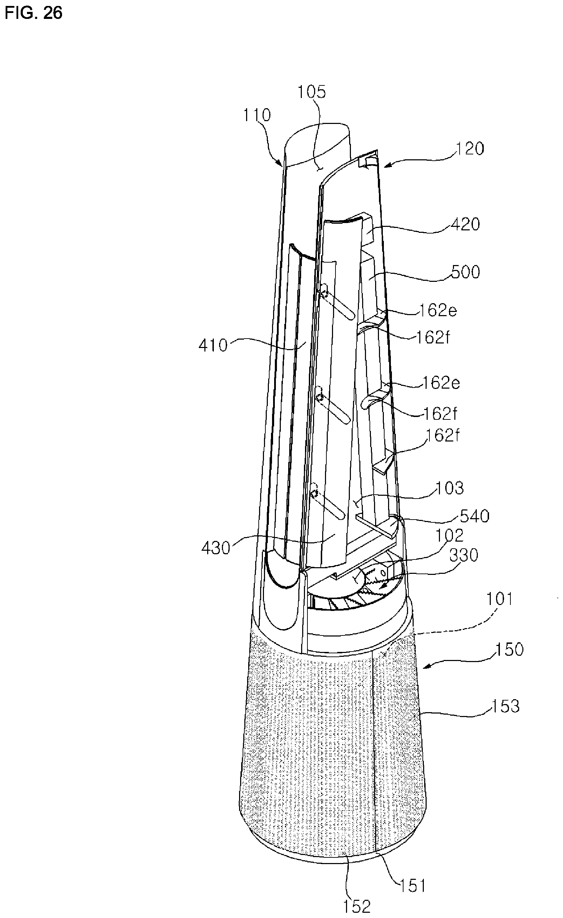

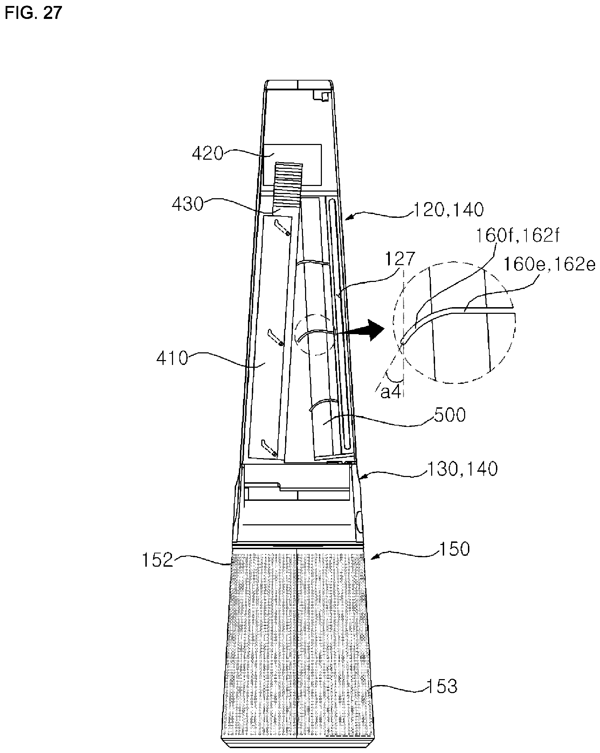

Referring to FIGS. 25 to 27, the fan apparatus for air conditioner according to another embodiment of the present disclosure may further include an air guide 160 that guides the air whose direction has been changed to the first discharge port 117 or the second discharge port, in addition to the heater 500.

The air guide 160 is a component that converts the flow direction of air into the horizontal direction in the discharge space 103. A plurality of air guides 160 may be disposed.

The air guide 160 converts the direction of air flowing from the lower side to the upper side into a horizontal direction, and the direction converted air flows to the discharge ports 117 and 127.

When it is required to classify the air guide 160, one disposed inside the first tower 110 is referred to as a first air guide 161, and one disposed inside the second tower 120 is referred to as a second air guide 162.

The outer end of the first air guide 161 is coupled to the outer wall of the first tower 110. The inner end of the first air guide is adjacent to the first heater 501.

The first air guide 161 has a front end adjacent to the first discharge port 117. The front end of the first air guide may be coupled to an inner wall adjacent to the first discharge port 117. The rear end of the first air guide is spaced apart from the rear end of the first tower 110.

In order to guide the air flowing from the lower side to the first discharge port 117, the first air guide 161 is formed in a convex surface curved from the lower side to the upper side, and the rear end is disposed lower than the front end.

The first air guide 161 may be classified into a curved portion 161f and a flat portion 161e.

The rear end of the flat portion 161e of the first air guide 161 is adjacent to a first discharge guide. The flat portion 160e of the first air guide may extend forward, and more specifically, may extend horizontally with respect to the ground.

The rear end of the curved portion 161f of the first air guide is disposed in the flat portion of the first air guide. The curved portion 160f of the first air guide extends to the front lower side while forming a curved surface. The front end of the curved portion 160f of the first air guide is disposed lower than the rear end. The front and rear ends of the curved portion 160f of the first air guide may have a horizontal distance ranging from 10 mm to 20 mm from the ground. The horizontal distance between the front and rear ends of the curved portion 160f of the first air guide from the ground is defined as a curvature length. That is, the curvature length of the curved portion of the first air guide may be formed between 10 mm and 20 mm.

The entrance angle a4 of the front end of the curved portion 160f of the first air guide may be formed to be 10 degrees. The entrance angle a4 is defined as the angle between the vertical line with respect to the ground and the tangent line of the front end of the curved portion 160f of the first air guide.

At least part of the right end of the first air guide 161 is adjacent to the outside of the heater 500, and the remaining part is coupled to the inner wall of the first tower 110. The left end of the first air guide 161 may be in close contact with or coupled to the outer wall of the first tower 110.

Therefore, the air moving upward along the discharge space 103 flows from the rear end of the first air guide 161 to the front end. In other words, the air that passed through the fan apparatus 300 rises and flows to the rear by being guided by the first air guide 161.

The second air guide 162 is symmetrical right and left with respect to the first air guide 161.

The outer end of the second air guide 162 is coupled to the outer wall of the second tower 120. The inner end of the second air guide 162 is adjacent to the second heater 502.

The second air guide 162 has a front end adjacent to the second discharge port 127. The front end of the second air guide 162 may be coupled to an inner wall adjacent to the second discharge port. The rear end of the second air guide 162 is spaced apart from the rear end of the second tower 120.

In order to guide the air flowing from the lower side to the second discharge port 127, the second air guide 162 is formed in a convex surface curved from the lower side to the upper side, and the rear end is disposed lower than the front end.

The second air guide 162 may be classified into a curved portion 162f and a flat portion 162e.

The rear end of the flat portion 162e of the second air guide is adjacent to the second discharge guide. The flat portion of the second air guide may extend forward, and more specifically, may extend to be horizontal with respect to the ground.

The rear end of the curved portion 162f of the second air guide is disposed in the front end of the flat portion 162e of the second air guide. The curved portion 162f of the second air guide extends to the front lower side while forming a curved surface. The front end of the curved portion 162f of the second air guide is disposed lower than the rear end. The front and rear ends of the curved portion 162f of the second air guide may have a horizontal distance ranging from 10 mm to 20 mm from the ground. The horizontal distance between the front and rear ends of the curved portion 162f of the second air guide from the ground is defined as a curvature length. That is, the curvature length of the curved portion 162f of the second air guide may be formed between 10 mm and 20 mm.

The entrance angle a4 of the front end of the curved portion 162f of the second air guide may be formed to be 10 degrees. The entrance angle a4 is defined as an angle between the vertical line with respect to the ground and the tangent line of the front end of the curved portion of the second air guide.

At least a part of the left end of the second air guide 162 is adjacent to the outside of the second heater 502, and the remaining part is coupled to the inner wall of the second tower 120. The right end of the second air guide 162 may be in close contact with or coupled to the outer wall of the second tower 120.

Therefore, the air moving upward along the discharge space 103 flows from the rear end of the second air guide 162 to the front end. In other words, the air that passed through the fan apparatus 300 rises, and flows to the rear by being guided by the second air guide 162.

When the air guide 160 is installed, the direction of air rising in the vertical direction is changed into the horizontal direction. Accordingly, there is an advantage in that air having a uniform flow rate can be discharged from the air discharge port formed vertically extended. In addition, there is an effect that air can be discharged horizontally.

When the entrance angle a4 of the air guide 160 is large or the curvature length is long, it acts as a resistance to the air rising in the vertical direction, thereby increasing noise. On the contrary, when the curvature length of the air guide is short, it is not possible to guide air and thus horizontal discharge is impossible. Therefore, when the entrance angle a4 is disposed or a curvature length is formed according to the present disclosure, there is an effect of increasing the air volume and reducing noise.

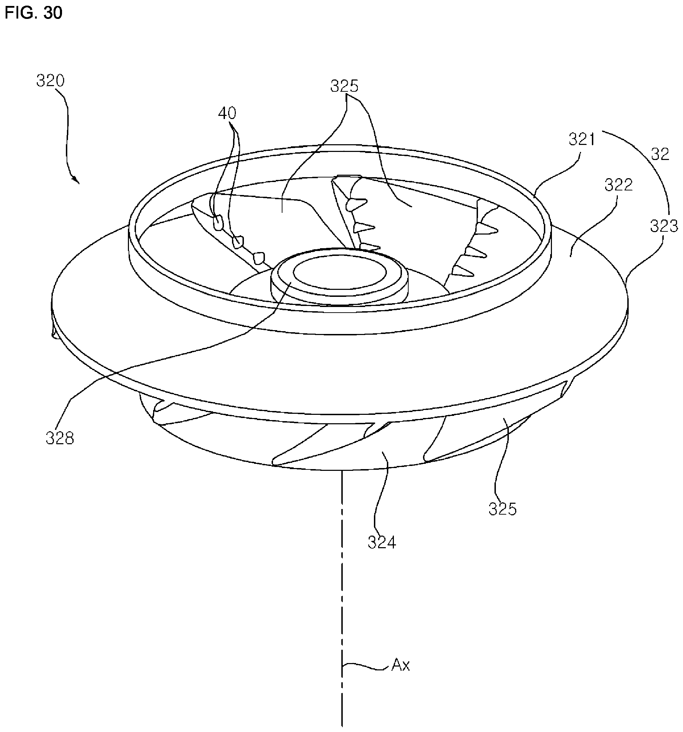

FIG. 30 is a graph for explaining the difference in effect between the air guide according to the present disclosure and the related art.

The upper graph of FIG. 30 shows the amount of discharged air in comparison with the rotation speed of the fan according to the entrance angle a4 of the air guide. Although not mentioned in FIG. 30, the curvature length of the curved portion of the air guide may also affect. When the rotation speed of the fan increases, there is a difference in the amount of discharged air, whereas when the fan rotation speed is low, there is no significant difference. For example, when the rotation speed of the fan is 2500RPM, the flow rate of air discharged from the air purifier according to the related art is about 13.4 CMM, but the flow rate of air discharged from the air purifier having the air guide according to the present disclosure is about 14 CMM. When the fan is based on the same RPM, according to the present disclosure, there is an effect that the air volume is increased by about 4% in comparison with the related art.

The lower graph of FIG. 30 shows the generated noise in comparison with the air volume of the fan according to the entrance angle a4 of the air guide. Although not mentioned in FIG. 30, the curvature length of the curved portion of the air guide may also affect. When the discharged air volume is low, there is no significant difference, whereas when the air volume increases, there is a difference in the generated noise. For example, when the air volume is 10.0 CMM, the noise generated by the air purifier according to the related art is about 40.5 dB, but the noise generated by the air purifier having the air guide according to the present disclosure is about 40 dB. Based on the same air volume, according to the present disclosure, there is an effect of reducing the generated noise by about 0.5 dB in comparison with the related art.

The airflow converter 400 may be disposed above the heater 500. In more detail, the guide motor 420 may be disposed above the heater 500. The guide motor 420 generates a driving force, the guide board 410 changes the discharged air, and the board guider 430 transfers the driving force of the guide motor 420 to the guide board 410. The guide board 410 and the board guider 430 may be disposed in front of the heater 500, but the guide motor 420 is disposed above the heater 500. Accordingly, the space can be efficiently utilized, and the guide motor 420 is prevented from interfering with the air flow inside the discharge space 103. The guide motor 420 is a component that emits heat and has a disadvantage of being vulnerable to heat. Therefore, the guide motor 420 is disposed above the heater 500, so that the guide motor 420 is not disposed in the air flow path, and the heat of the heater 500 can be prevented from convectively flowing to the guide motor 420.

Hereinafter, the air flow flowing around the heater as viewed from above will be described with reference to FIG. 24. The air that passed through the fan apparatus 300 rises in front of the heater. The flow direction of air rising from the front of the heater is changed into the rear direction. Most of the air is heated through the heater, and warm air is discharged to the blowing space. Some air flows through the space between the heater and the outer walls 114 and 124. This air forms an air curtain between the heater and the outer wall to prevent the heat of the heater from convectively flowing to the outer wall. Some other air flows into the space between the heater and the inner wall. This air forms an air curtain between the heater and the inner wall to prevent the heat of the heater from convectively flowing to the inner wall.

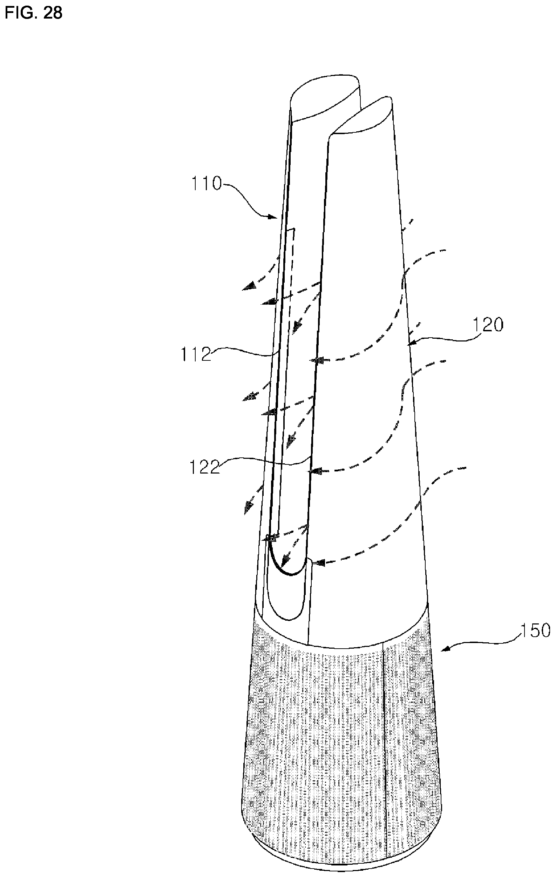

FIG. 28 is an exemplary view showing the horizontal airflow of the fan apparatus for air conditioner according to a first embodiment of the present disclosure.

Referring to FIG. 28, when a horizontal airflow is provided, the first guide board 411 is concealed inside the first tower 110, and the second guide board 412 is concealed inside the second tower 120.

The discharge air of the first discharge port 117 and the discharge air of the second discharge port 127 are joined to each other in the blowing space 105 and may pass through the front ends 112 and 122 to flow forward.

In addition, the air behind the blowing space 105 may be guided into the blowing space 105, and then flow forward.

In addition, the air around the first tower 110 may flow forward along the first outer wall 114, and the air around the second tower 120 may flow forward along the second outer wall 124.

Since the first discharge port 117 and the second discharge port 127 are formed to extend in the vertical direction and disposed symmetrically right and left, the air flowing from the upper side of the first discharge port 117 and the second discharge port 127 and the air flowing from the lower side may be formed more uniformly.

In addition, the air discharged from the first discharge port and the second discharge port are joined to each other in the blowing space 105, thereby improving the straightness of the discharged air and allowing the air to flow to a farther place.

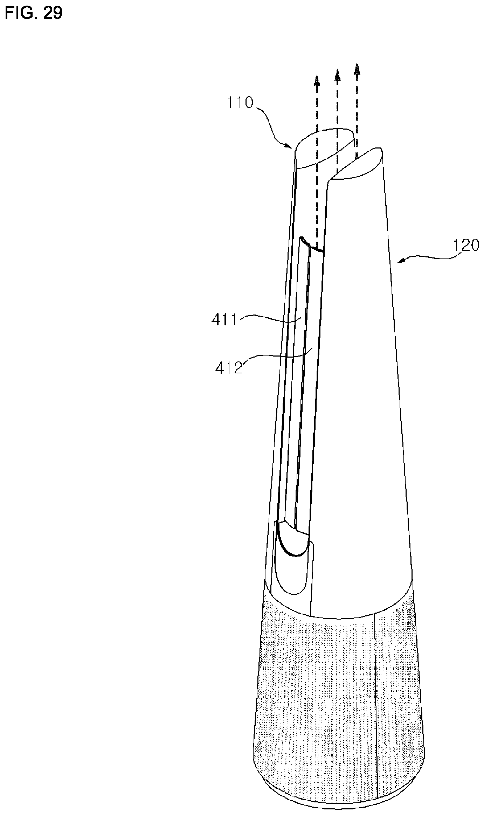

FIG. 29 is an exemplary view showing an ascending airflow of the fan apparatus for air conditioner according to a first embodiment of the present disclosure.

Referring to FIG. 29, when an ascending airflow is provided, the first guide board 411 and the second guide board 412 protrude into the blowing space 105 and block the front of the blowing space 105.

As the front of the blowing space 105 is blocked by the first guide board 411 and the second guide board 412, the air discharged from the discharge ports 117 and 127 rises along the rear surface of the first guide board 411 and the second guide board 412, and is discharged to the upper side of the blowing space 105.

By forming an ascending airflow in the fan apparatus for air conditioner 1, it is possible to suppress the discharged air from flowing directly to a user. In addition, when it is desired to circulate indoor air, the fan apparatus for air conditioner 1 may be operated in an ascending airflow mode.

For example, when an air conditioner and a fan apparatus for air conditioner are used at the same time, the fan apparatus for air conditioner 1 may be operated in an ascending airflow mode to promote convection of indoor air, and the indoor air can be cooled or heated more quickly.

Hereinafter, the fan 320 for air conditioner for reducing a noise and a sharpness of noise will be described in detail.

Referring to FIG. 30, the fan 320 of the present disclosure includes a hub 328 connected to the rotation axis Ax, a plurality of blades 325 installed at a given interval on the outer circumferential surface of the hub 328, and a shroud 32 which is spaced apart from the hub 328 and disposed to surround the hub 328 and connected to one end of the plurality of blades 325.

The fan 320 may further include a back plate 324 provided with a hub 328 for coupling the rotation central axis. In some embodiments, the back plate 324 and the shroud 32 may be omitted. The hub 328 has a cylindrical shape whose outer circumferential surface is parallel to the rotation axis Ax.

A plurality of blades 325 extending from the back plate 324 may be provided. The blade 325 may extend so that the outline of the blade 325 forms a curved line.

The blade 325 constitutes a rotating blade of the fan 320 and serves to transfer kinetic energy of the fan 320 to a fluid. A plurality of blades 325 may be provided at given intervals, and may be disposed in a radial shape on the back plate 324. One end of the plurality of blades 325 is connected to the outer circumferential surface of the hub 328.

In addition, the shroud 32 is connected (coupled) to one end of the blade 325. The shroud 32 is formed at a position facing the back plate 324 and may be formed in a circular ring shape. The shroud 32 and the hub 328 share the rotation axis Ax as a center.

The shroud 32 has a suction end 321 through which a fluid is introduced and a discharge end 323 through which the fluid is discharged. The shroud 32 may be formed to be curved so that the diameter decreases from the discharge end 323 toward the suction end 321 side.

That is, it may include a connection part 322 that connects the suction end 321 and the discharge end 323 in a curve. The connection part may be rounded with a curvature so that the inner cross-sectional area of the shroud 32 is widened.

The shroud 32 may form a movement passage for fluid together with the back plate 324 and the blade 325. Regarding the moving direction of the fluid, it can be seen that the fluid introduced in the central axis direction flows in the circumferential direction of the fan 320 by rotation of the blade 325.

That is, the fan 320 may discharge the fluid in the radial direction of the fan 320 by increasing the flow velocity by centrifugal force.

The shroud 32 coupled to the end of the blade 325 may be formed to be spaced apart from the back plate 324 by a certain distance. The shroud 32 is provided to have a surface facing parallel to the back plate 324.

Hereinafter, the blade 325 and the notch 40 formed in the blade 325 will be described in detail.

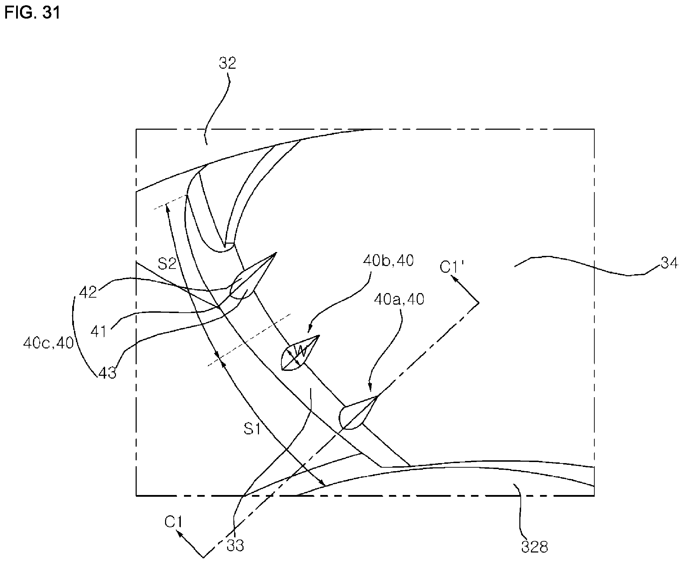

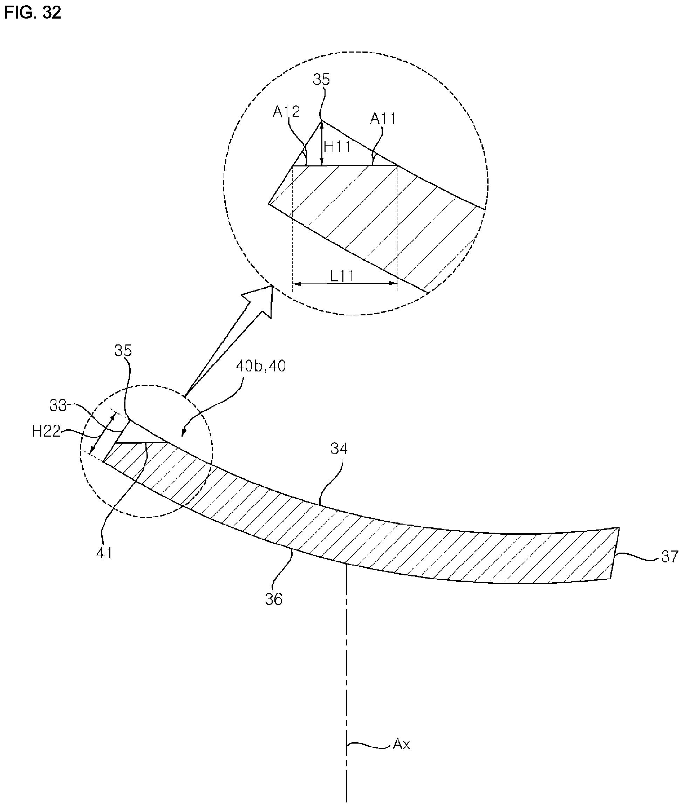

Referring to FIGS. 31 and 32, each blade 325 includes a leading edge 33 defining one surface in the direction in which the hub 328 is rotated, a trailing edge 37 defining one surface in the direction opposite to the leading edge 33, a negative pressure surface 34 which connects the upper end of the leading edge 33 and the upper end of the trailing edge 37 and has a larger area than the leading edge 33 and the trailing edge 37, and a pressure surface 36 which connects the lower end of the leading edge 33 and the lower end of the trailing edge 37 and faces the negative pressure surface 3.

That is, in each blade 325, the negative pressure surface 34 and the pressure surface 36 define the widest upper and lower surface of the blade 325 in the shape of the plate, both ends in the length direction form both side surfaces of the blade 325, and both ends in the width direction (left and right direction in FIG. 32) intersecting the length direction form the leading edge 33 and the trailing edge 37. The area of the trailing edge 37 and the leading edge 33 is smaller than that of the negative pressure surface 34 and the pressure surface 36.

The leading edge 33 is located above (refer to FIG. 32) the trailing edge 37.

Each blade 325 is formed with a plurality of notches 40 to reduce the noise generated in the fan and the sharpness of the noise.

Each notch 40 may be formed over a portion of the leading edge 33 and a portion of the negative pressure surface 34. In addition, each notch 40 may be formed in such a manner that a corner 35 where the leading edge 33 and the negative pressure surface 34 meet with each other is depressed downward. That is, each notch 40 is formed over a portion of the upper middle portion of the leading edge 33 and a portion of the negative pressure surface 34 adjacent to the leading edge 33.

The cross-sectional shape of the notch 40 is not limited and may have various shapes. However, in order to reduce the efficiency and noise of the fan, it is preferable that the cross-sectional shape of the notch 40 has a U-shape or a V-shape. The shape of the notch 40 will be described later.

The width W of the notch 40 may be expanded from the lower portion toward the upper portion. The width W of the notch 40 may be expanded gradually or expanded in a stepwise manner toward the upper portion.

The direction of the notch 40 may be a tangential direction of an arbitrary circumference centered on the rotation axis Ax. Here, the direction of the notch 40 means the direction of the length L11 of the notch 40. That is, the same cross-sectional shape of the notch 40 extends in the tangential direction of the circumference.

The notch 40 may be formed along an arc of an arbitrary circumference centered on the rotation axis Ax of the fan 320. That is, the notch 40 may have a curved shape. Specifically, the same cross-sectional shape of the notch 40 is formed along the circumference.

The depth H11 of the notch 40 may become smaller as the distance from the point where the leading edge 33 and the negative pressure surface 34 meet increases. The depth H11 of the notch 40 is high in the center and decreases toward both ends in the length direction.

Hereinafter, the shape of each notch 40 will be described in detail. In the present embodiment, the cross-sectional shape of the notch 40 is a V-shape.

Specifically, the notch 40 may include a first inclined surface 42, a second inclined surface 43 which faces the first inclined surface 42 and is connected to the lower end of the first inclined surface 42, and a bottom line 41 defined by connecting the first inclined surface 42 and the second inclined surface 43.

The separation distance between the first inclined surface 42 and the second inclined surface 43 may increase as it progresses upward. The separation distance between the first inclined surface 42 and the second inclined surface 43 may gradually increase or may increase in a stepwise manner. The first inclined surface 42 and the second inclined surface 43 may be flat or curved. The first inclined surface 42 and the second inclined surface 43 may have a triangular shape.

The bottom line 41 may extend in a tangential direction of an arbitrary circumference centered on the rotation axis Ax. As another example, it may extend along an arbitrary circumference centered on the rotation axis Ax. That is, the bottom line 41 may form an arc centered on the rotation axis Ax.

The length of bottom line 41 is the same as the length L11 of the notch 40. The direction of the bottom line 41 means the direction of the notch 40. The direction of the bottom line 41 may be a direction for reducing flow separation occurring in the leading edge 33 and the negative pressure surface 34 and reducing air resistance.

Specifically, the bottom line 41 may have an inclination of 0 degrees to 10 degrees with respect to a horizontal plane perpendicular to the rotation axis Ax. Preferably, the bottom line 41 may be parallel to a horizontal plane perpendicular to the rotation axis Ax. Therefore, it is possible to reduce the resistance by the notch 40 while the blade 325 rotates.

The length L11 of the bottom line 41 may be longer than the height H22 of the leading edge 33. This is because that if the length L11 of the bottom line 41 is too short, the flow separation occurring on the negative pressure surface 34 cannot be reduced, and if the length L11 of the bottom line 41 is too long, the efficiency of the fan decreases.

The length L11 of the notch 40 (the length L11 of the bottom line 41) may be larger than the depth H11 of the notch 40 and the width W of the notch 40. Preferably, the length L11 of the notch 40 may be 5mm to 6.5 mm, the depth H11 of the notch 40 may be 1.5mm to 2.0mm, and the width W of the notch 40 may be 2.0mm to 2.2 mm.

The length L11 of the notch 40 may be 2.5 to 4.33 times the depth H11 of the notch 40, and the length L11 of the notch 40 may be 2.272 to 3.25 times the width W of the notch 40.

One end of the bottom line 41 is located in the leading edge 33 and the other end of the bottom line 41 is located in the negative pressure surface 34. The position of a point where one end of the bottom line 41 is located in the leading edge 33 is preferably an intermediate height of the leading edge 33.

The separation distance between the corner 35 and a point where one end of the bottom line 41 is located in the leading edge 33 may be smaller than the separation distance between the corner 35 and a point where the other end of the bottom line 41 is located in the negative pressure surface 34.

It is preferable that the position of the point where the other end of the bottom line 41 is located in the negative pressure surface 34 is located between 1/5 point and 1/10 point in the width of the negative pressure surface 34.

The angle A11 formed by the bottom line 41 and the negative pressure surface 34 and the angle A12 formed by the bottom line 41 and the leading edge 33 are not limited. The angle A11 formed by the bottom line 41 and the negative pressure surface 34 is preferably smaller than the angle A12 formed by the bottom line 41 and the leading edge 33.

It is preferable that three notches 40 are provided. The notch 40 may include a first notch 40, a second notch 40 located farther from the hub 328 than the first notch 40, and a third notch 40 located farther from the hub 328 than the second notch 40. It is preferable that the separation distance between respective notches 40 is 6mm to 10mm. It is preferable that the separation distance between respective notches 40 may be greater than the depth H11 of the notch 40 and the width W of the notch 40.

The leading edge 33 may be divided into a first area S1 adjacent to the hub 328 based on the center, and a second area S2 adjacent to the shroud 32, and two of the three notches 40 may be located in the first area S1, and the remaining notch 40 may be located in the second area S2.

Specifically, the first notch 40 and the second notch 40 may be located in the first area S1, and the third notch 40 may be located in the second area S2. More specifically, the separation distance from the hub 328 of the first notch 40 may be 19% to 23% of the length of the leading edge 33, the separation distance from the hub 328 of the second notch 40 may be 40% to 44% of the length of the leading edge 33, and the separation distance from the hub 328 of the first notch 40 may be 65% to 69% of the length of the leading edge 33.

Among the plurality of notches 40, the notch 40 spaced farthest from the hub 328 may have the longest length. Specifically, the length L11 of the third notch 40 may be greater than the length L11 of the second notch 40, and the length L11 of the second notch 40 may be greater than the length L11 of the first notch 40.

The flow separation occurring in the blade 325 of the fan can be reduced through the shape, disposition, and number of the notch 40, and as a result, noise generated in the fan can be reduced.

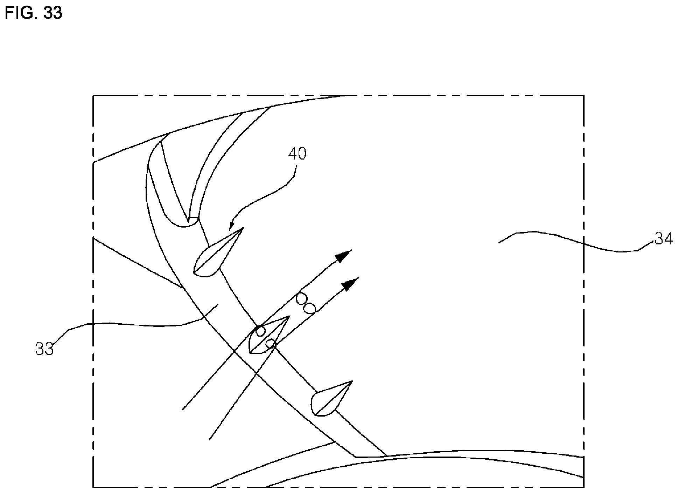

Referring to FIG. 33, some of the fluid passing through the leading edge 33 causes turbulent flow due to a flow that passed through the notch 40 and flows along the blade surface, and then is mixed with the fluid that has passed through the leading edge 33. Therefore, flow separation does not occur on the blade surface, and noise is improved by a flow flowing along the surface.

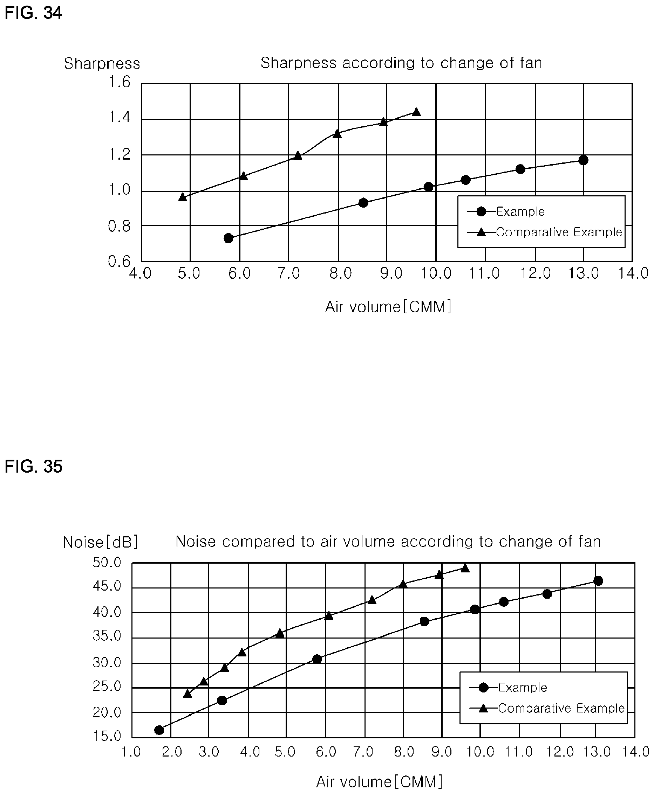

Referring to FIGS. 34 and 35, it can be seen that noise and sharpness are significantly reduced when the noise and sharpness of a general fan (comparative example) and the embodiment are tested in the same environment.

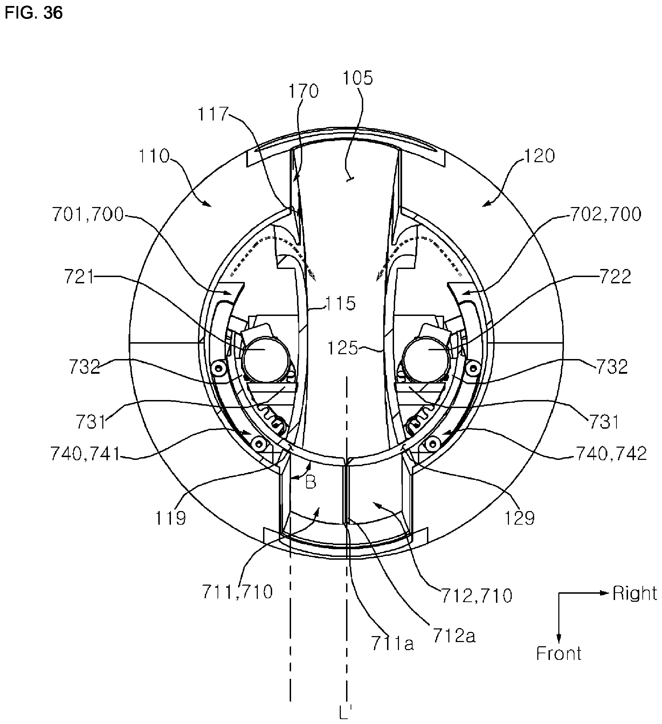

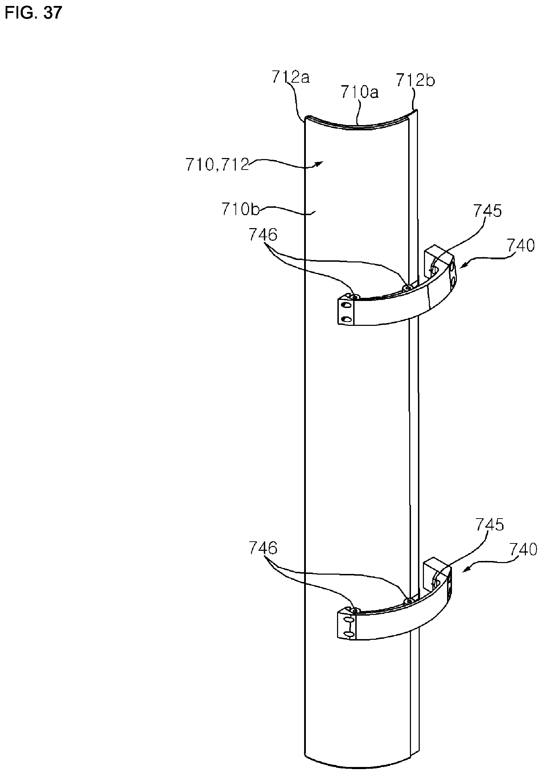

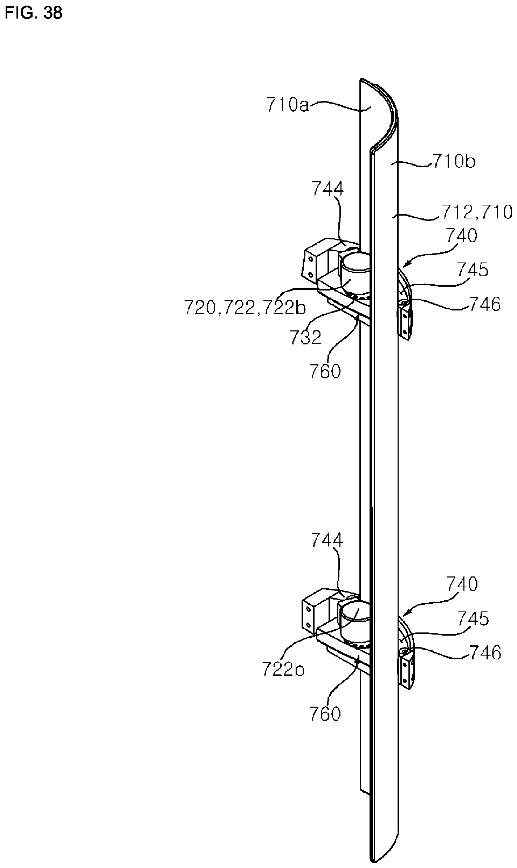

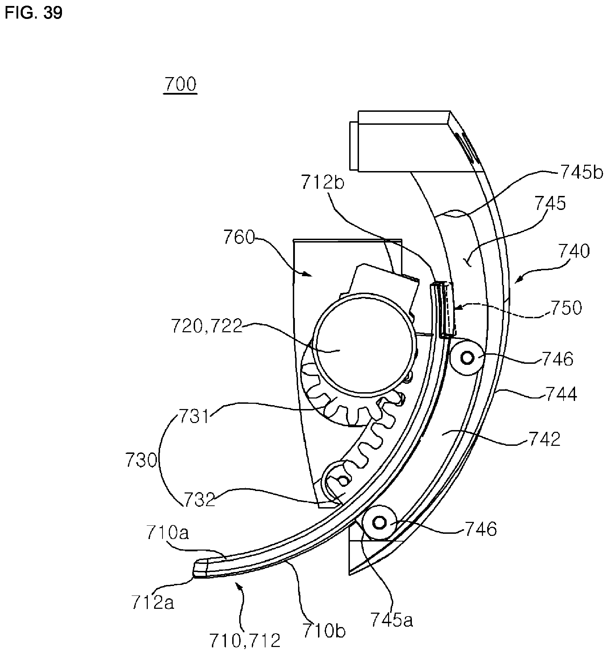

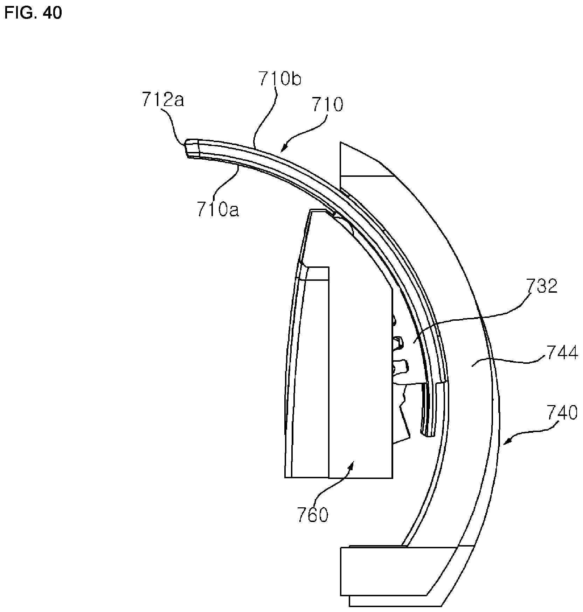

An airflow converter 700 of another embodiment capable of forming an ascending airflow will be described with reference to FIGS. 36 to 40. In the present embodiment, the airflow converter 700 is mainly described based on differences from the embodiment of FIGS. 16 to 22, and configurations having no special description are regarded as the same as those of the embodiment of FIGS. 16 to 22.

In the present embodiment, the airflow converter 700 may convert the horizontal airflow flowing through the blowing space 105 into an ascending airflow.

The airflow converter 700 includes a first airflow converter 701 disposed in the first tower 110 and a second airflow converter 702 disposed in the second tower 120. The first airflow converter 701 and the second airflow converter 702 are symmetrical left and right and have the same configuration.

The airflow converter 700 includes a guide board 710 which is disposed in the tower and protrudes to the blowing space 105, a guide motor 720 which provides a driving force for the movement of the guide board 710, a power transmission member 730 which provides a driving force of the guide motor 720 to the guide board 710, and a board guider 740 which is disposed inside the tower and guides the movement of the guide board 710.

The guide board 710 may be concealed inside the tower, and may protrude to the blowing space 105 when the guide motor 720 is operated. The guide board 710 includes a first guide board 711 disposed in the first tower 110 and a second guide board 712 disposed in the second tower 120.

In the present embodiment, the first guide board 711 is disposed inside the first tower 110 and may selectively protrude to the blowing space 105. Similarly, the second guide board 712 may be disposed inside the second tower 120 and may selectively protrude to the blowing space 105.

To this end, a board slit 119 penetrating the inner wall 115 of the first tower 110 is formed, and a board slit 129 penetrating the inner wall 125 of the second tower 120 is formed, respectively.

The board slit 119 formed in the first tower 110 is referred to as a first board slit 119, and the board slit formed in the second tower 120 is referred to as a second board slit 129.

The first board slot 119 and the second board slit 129 are disposed symmetrically left and right. The first board slot 119 and the second board slit 129 are formed to extend in the vertical direction. The first board slot 119 and the second board slit 129 may be disposed to be inclined with respect to the vertical direction V.

The inner end 711a of the first guide board 711 may be exposed to the first board slit 119, and the inner end 712a of the second guide board 712 may be exposed to the second board slit 129.

It is preferable that the inner ends 711a and 712a do not protrude from the inner walls 115 and 125. When the inner ends 711a and 712a protrude from the inner walls 115 and 125, an additional Coanda effect may be induced.

Assuming that the vertical direction is 0 degree, the front end 112 of the first tower 110 is formed with a first inclination, and the first board slit 119 is formed with a second inclination. The front end 122 of the second tower 120 is also formed with a first inclination, and the second board slit 129 is formed with a second inclination.

The first inclination may be formed between the vertical direction and the second inclination, and the second inclination should be greater than the horizontal direction. The first inclination and the second inclination may be the same, or the second inclination may be greater than the first inclination.

The board slits 119 and 129 may be disposed to be more inclined than the front ends 112 and 122 based on the vertical direction.

The first guide board 711 is disposed parallel to the first board slit 119, and the second guide board 712 is disposed parallel to the second board slit 129.

The guide board 710 may be formed in a flat or curved plate shape. The guide board 710 may be formed to extend in the vertical direction, and may be disposed in front of the blowing space 105.

The guide board 710 may block the horizontal airflow flowing into the blowing space 105 and change the airflow direction to an upward direction.

In the present embodiment, the inner end 711a of the first guide board 711 and the inner end 712a of the second guide board 712 may be in contact with each other or close to each other to form an ascending airflow. Dissimilarly to the present embodiment, one guide board 710 may be in close contact with the opposite tower to form an ascending airflow.

When the airflow converter 700 is not operated, the inner end 711a of the first guide board 711 may close the first board slit 119, and the inner end 712a of the second guide board 712 may close the second board slit 129.

When the airflow converter 700 is operated, the inner end 711a of the first guide board 711 may penetrate through the first board slit 119 and protrude into the blowing space 105, and the inner end 712a of the second guide board 712 may penetrate through the second board slit 129 and protrude into the blowing space 105.

As the first guide board 711 closes the first board slit 119, leakage of air in the first discharge space 103a can be prevented. As the second guide board 712 closes the second board slit 129, leakage of air in the second discharge space 103b can be prevented.

In the present embodiment, the first guide board 711 and the second guide board 712 protrude into the blowing space 105 due to a rotating operation. Dissimilarly to the present embodiment, at least one of the first guide board 711 and the second guide board 712 may be linearly moved in a slide manner to protrude into the blowing space 105.

When viewed from a top view, the first guide board 711 and the second guide board 712 are formed in an arc shape. The first guide board 711 and the second guide board 712 form a certain curvature radius, and the center of curvature is located in the blowing space 105.

When the guide board 710 is concealed inside the tower, it is preferable that the inside volume of the guide board 710 in the radial direction is larger than the outside volume of the guide board 710 in the radial direction.

The guide board 710 may be formed of a transparent material. A light emitting member 750 such as an LED may be disposed in the guide board 710, and the entire guide board 710 may emit light through light generated from the light emitting member 750. The light emitting member 750 may be disposed in the discharge space 103 inside the tower, and may be disposed in the outer end 712b of the guide board 710.

A plurality of light emitting members 750 may be disposed along the length direction of the guide board 710.

The guide motor 720 includes a first guide motor 721 providing rotational force to the first guide board 711 and a second guide motor 722 providing rotational force to the second guide board 712.

The first guide motor 721 may be disposed in the upper side and the lower side of the first tower, respectively, and if necessary, the first guide motor 721 may be divided into an upper first guide motor 721 and a lower first guide motor 721. The upper first guide motor is disposed lower than the upper end 111 of the first tower 110, and the lower first guide motor is disposed higher than the fan 320.

The second guide motor 722 may also be disposed in the upper side and the lower side of the second tower, respectively, and if necessary, the second guide motor 722 may be divided into an upper second guide motor 722a and a lower second guide motor 722b. The upper second guide motor is disposed lower than the upper end 121 of the second tower 120, and the lower second guide motor is disposed higher than the fan 320.

In the present embodiment, the rotation shafts of the first guide motor 721 and the second guide motor 722 are disposed in a vertical direction, and a rack-pinion structure is used to transmit a driving force. The power transmission member 730 includes a driving gear 731 coupled to the motor shaft of the guide motor 720 and a rack 732 coupled to the guide board 710.

The driving gear 731 is a pinion gear, and is rotated in the horizontal direction. The rack 732 is coupled to the inner surface of the guide board 710. The rack 732 may be formed in a shape corresponding to the guide board 710. In the present embodiment, the rack 732 is formed in an arc shape. The tooth of the rack 732 is disposed toward the inner wall of the tower.

The rack 732 may be disposed in the discharge space 103 and may turn round together with the guide board 710.

The board guider 740 may guide the turning movement of the guide board 710. The board guider 740 may support the guide mode 710 when the guide board 710 turns round.

In the present embodiment, the board guider 740 is disposed in the opposite side of the rack 732 based on the guide board 710. The board guider 740 may support a force applied from the rack 732. Unlike the present embodiment, a groove corresponding to the turning radius of the guide board may be formed in the board guide 740, and the guide board may be moved along the groove.

The board guider 740 may be assembled to the outer walls 114 and 124 of the tower. The board guider 740 may be disposed outside the radial direction based on the guide board 710, thereby minimizing contact with air flowing through the discharge space 103.

The board guider 740 includes a movement guider 742, a fixed guider 744, and a friction reducing member 746. The movement guider 742 may be coupled to a structure that is moved together with the guide board. In the present embodiment, the movement guider 742 may be coupled to the rack 732 or the guide board 710, and may be rotated together with the rack 732 or the guide board 710.

In the present embodiment, the movement guider 742 is disposed on the outer surface 710b of the guide board 710. When viewed from a top view, the movement guider 742 is formed in an arc shape, and is formed with the same curvature as the guide board 710.

The length of the movement guider 742 is formed shorter than the length of the guide board 710. The movement guider 742 is disposed between the guide board 710 and the fixed guider 744. The radius of the movement guider 742 is larger than the radius of the guide board 710 and smaller than the radius of the fixed guider 744.

When the movement guider 742 is moved, the movement may be restricted due to mutual locking with the fixed guider 744. The fixed guider 744 is disposed radially outside the movement guider 742 and may support the movement guider 742.

The fixed guider 744 is provided with a guide groove 745 into which the movement guider 742 is inserted, and the movement guider 742 can move in the guide groove 745. The guide groove 745 is formed to correspond to the rotation radius and curvature of the movement guider 742.

The guide groove 745 is formed in an arc shape, and at least a part of the movement guider 742 is inserted into the guide groove 745. The guide groove 745 is formed to be concave in the downward direction. The movement guider 742 is inserted into the guide groove 745, and the guide groove 745 may support the movement guider 742.

When the movement guider 742 rotates, the movement guider 742 is supported by the front end 745a of the guide groove 745 so that the rotation of the movement guider 742 in one direction (the direction protruding to the blowing space) can be limited.

When the movement guider 742 rotates, the movement guider 742 is supported by the rear end 745b of the guide groove 745 so that the rotation of the movement guider 742 in the other direction (the direction for being received inside the tower) can be limited.

In addition, the friction reducing member 746 reduces friction between the movement guider 742 and the fixed guider 744 when the movement guider 742 moves.

In the present embodiment, a roller is used as the friction reducing member 746, and rolling friction is provided between the movement guider 742 and the fixed guider 744. The shaft of the roller is formed in the vertical direction, and is coupled to the movement guider 742.

It is possible to reduce friction and operating noise through the friction reducing member 746. At least a part of the friction reducing member 746 protrudes outward in the radial direction of the movement guider 742.

The friction reducing member 746 may be formed of an elastic material, and may be elastically supported by the fixed guider 744 in the radial direction.

That is, instead of the movement guider 742, the friction reducing member 746 elastically supports the fixed guider 744, and can reduce friction and operating noise when the guide board 710 rotates.

In the present embodiment, the friction reducing member 746 is in contact with the front end 745a and the rear end 745b of the guide groove 745.

Meanwhile, a motor mount 760 for supporting the guide motor 720 and fixing the guide motor 720 to the tower may be further disposed.

The motor mount 760 is disposed below the guide motor 720 and supports the guide motor 720. The guide motor 720 is assembled to the motor mount 760.

In the present embodiment, the motor mount 760 is coupled to the inner walls 114 and 125 of the tower. The motor mount 760 may be manufactured integrally with the inner walls 114 and 124.

### <Another Embodiment of Air Guide>

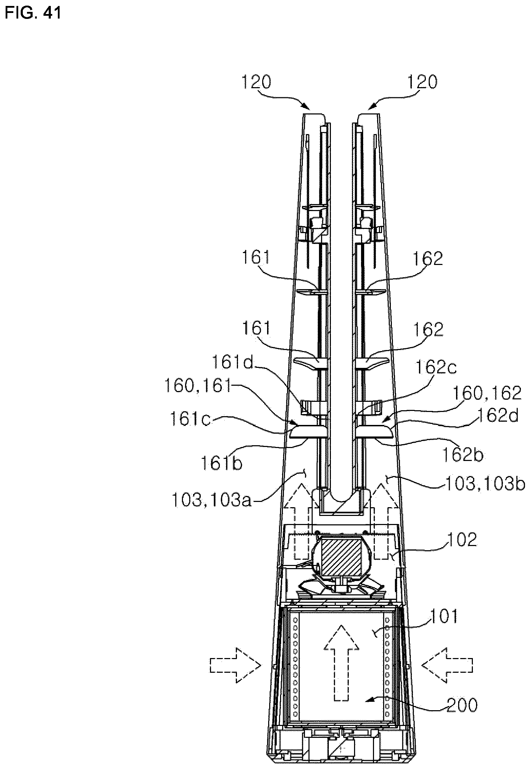

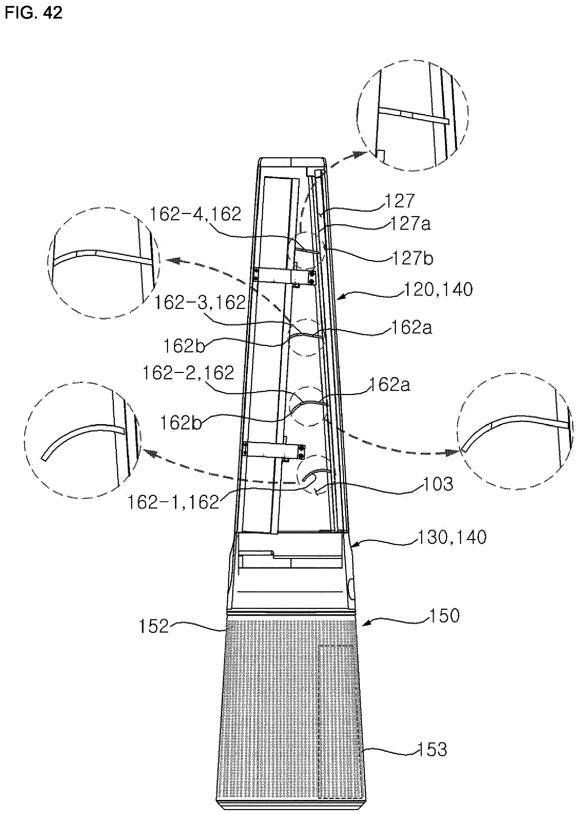

Referring to FIGS. 41 and 42, an air guide 160 for converting the flow direction of air into a horizontal direction is disposed in the discharge space 103. A plurality of air guides 160 may be disposed.

The air guide 160 converts the direction of the air flowing from the lower side to the upper side in a horizontal direction, and the direction-converted air flows to the discharge ports 117 and 127.

When it is necessary to classify the air guide, one disposed inside the first tower 110 is referred to as a first air guide 161, and one disposed inside the second tower 120 is referred to as a second air guide 162.

A plurality of first air guides 161 are disposed, and a plurality of first air guides 161 are disposed in a vertical direction. A plurality of second air guides 162 are disposed, and a plurality of second air guides 162 are disposed in the vertical direction.

When viewed from the front, the first air guide 161 may be coupled to the inner wall and/or the outer wall of the first tower 110. When viewed from the side, the rear end 161a of the first air guide 161 is adjacent to the first discharge port 117, and the front end 161b is spaced apart from the front end of the first tower 110.

In order to guide the air flowing in the lower side to the first discharge port 117, at least one of the plurality of first air guides 161 may be formed in a curved surface that is convex from the lower side to the upper side.

At least one of the plurality of first air guides 161 may have a front end 161b disposed lower than a rear end 161a, thereby guiding air to the first discharge port 117 while minimizing resistance to air flowing in the lower side.

At least a portion of the left end 161c of the first air guide 161 may be in close contact with or coupled to the left wall of the first tower 110. At least a portion of the right end 161d of the first air guide 161 may be in close contact with or coupled to the right wall of the first tower 110.

Therefore, the air moving upward along the discharge space 103 flows from the front end to the rear end of the first air guide 161. The second air guide 162 is symmetrical left and right with the first air guide 161.

When viewed from the front, the second air guide 162 may be coupled to an inner wall and/or an outer wall of the second tower 110. When viewed from the side, the rear end 162a of the second air guide 162 is adjacent to the second discharge port 127, and the front end 162b is spaced apart from the front end of the second tower 120.

In order to guide the air flowing in the lower side to the second discharge port 127, at least one of the plurality of second air guides 162 may have a curved surface that is convex from the lower side to the upper side.

At least one of the plurality of second air guides 162 may have a front end 162b disposed lower than a rear end 162a, thereby guiding air to the second discharge port 127 while minimizing resistance to the air flowed in the lower side.

At least a portion of the left end 162c of the second air guide 162 may be in close contact with or coupled to the left wall of the second tower 120. At least a portion of the right end 162d of the second air guide 162 may be in close contact with or coupled to the right wall of the first tower 110.

In the present embodiment, four second air guides 162 are disposed to be referred to as a second-first air guide 162-1, a second-second air guide 162-2, a second-third air guide 162-3, and a second-fourth air guide 162-4.

The second-first air guide 162-1 and the second-second air guide 162-2 have a front end 162b that is disposed lower than the rear end 162a, and guide air toward the rear-upper side.

On the other hand, the second-third air guide 162-3, and the second-fourth air guide 162-4 have a rear end 162a that is disposed lower than the front end 162b, and guide the air toward the rear-lower side.

Such a disposition of the air guides is intended to allow the discharged air to converge to the middle of the height of the blowing space 105, thereby increasing the reach of the discharged air.

The second-first air guide 162-1 and the second-second air guide 162-2 are formed respectively in an upwardly convex curved surface, and the second-first air guide 162-1 disposed in the lower side may be formed to be more convex than the second-second air guide 162-2.

The second-third air guide 162-3 disposed on the lower side, among the second-third air guide 162-3 and the second-fourth air guide 162-4, has an upwardly convex shape, but the second-fourth air guide 162-4 is formed in a flat plate shape.

The second-second air guide 162-2 disposed in the lower side forms a more convex curved surface than the second-third air guide 162-3. That is, the curved surface of the air guides may be gradually flattened as it progresses from the lower side toward the upper side.

The second-fourth air guide 162-4 disposed in the uppermost side has a rear end 162a that is formed lower than the front end 162b and in a flat shape. Since the configuration of the first air guides 161 is symmetrical to the configuration of the second air guides 162, a detailed description will be omitted.

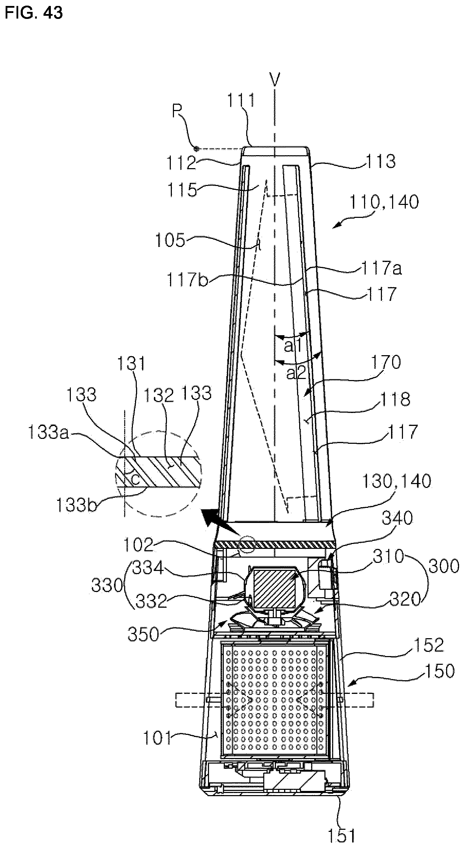

Referring to drawing, FIG. 43 shows an air conditioner according to another embodiment of the present disclosure.

Referring to FIG. 43, a third discharge port 132 penetrating the upper side surface 131 of the tower base 130 in the vertical direction may be formed. A third air guide 133 for guiding the filtered air is further disposed in the third discharge port 132.

The third air guide 133 is disposed to be inclined with respect to the vertical direction. The upper end 133a of the third air guide 133 is disposed in the front, and the lower end 133b is disposed in the rear. That is, the upper end 133a is disposed in front of the lower end 133b.

The third air guide 133 includes a plurality of vanes disposed in the front-rear direction.

The third air guide 133 is disposed between the first tower 110 and the second tower 120, is disposed below the blowing space 105, and discharges air toward the blowing space 105. The inclination of the third air guide 133 with respect to the vertical direction is defined as an air guide angle C.

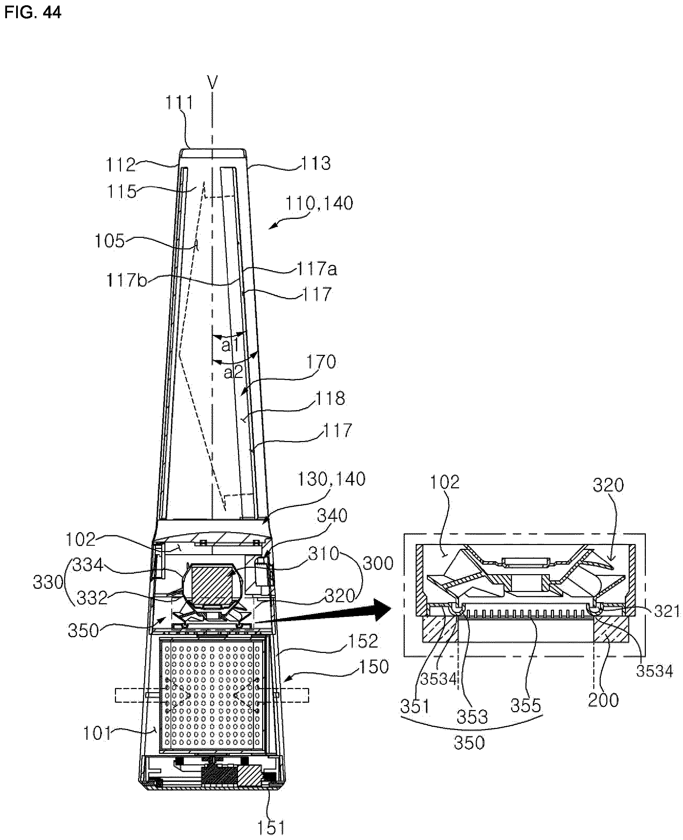

The suction grill 350 will be described in detail with reference to FIGS. 44 to 47.

The suction grill 350 is disposed in a flow path through which air flows. The suction grill 350 includes a bell mouse 353 for assisting air suction from a suction end of the fan, a bell mouse support member 351 for supporting the bell mouse 353, and a grill wire 355 which is disposed in the opening of the bell mouse 353 and prevents the inflow of foreign substances.

Among the components of the suction grill 350, the bell mouse 353 and the bell mouse support member 351 may be integrally formed, or may be formed separately and then coupled. Referring to FIG. 44, in the present disclosure, it is assumed that the bell mouse 353 and the bell mouse support member 351 are integrally formed.

According to the present disclosure, the bell mouse 353 and the bell mouse support member 351 are an injection product formed integrally by an injection process. The bell mouse 353 and the bell mouse support member 351 may be formed of acrylonitrile butadiene styrene (ABS) resin. The ABS resin has the advantage of easy processing, high impact resistance and good heat resistance. The material of the bell mouse support member 351 is not limited to the above description, and may be made of other material within a range that can be easily adopted by a person skilled in the art. The bell mouse 353 is manufactured by an injection process integrally with the bell mouse support member 351 in order to be easily manufactured by minimizing the space occupancy by minimizing the vertical height.

According to the present disclosure, the grill wire 355 is formed separately from the bell mouse 353 or the bell mouse support member 351. The grill wire 355 is formed of a metal material whereas the bell mouse 353 or the bell mouse support member 351 according to the present disclosure is made of a plastic material such as ABS resin. Since the grill wire 355 is formed of a metal material, there is an advantage in that the thickness of the wire can be made thinner than the case of being manufactured by an injection process.

For example, when the grill wire is injection-formed with ABS resin, a thickness of at least 2 mm or more must be secured to prevent a defect. On the other hand, the grill wire 355 according to the present disclosure is formed of a metal material having a diameter of 1.5 mm. That is, as the grill wire 355 is formed of a metal material, there is an advantage that the thickness can be formed to be thinner. Accordingly, there is an effect of reducing air resistance during air flow, and there is also an effect of reducing noise that is generated when the flowing air collides with the grill wire.

The grill wire 355 is disposed upstream of the bell mouse 353. The suction part 155 is disposed in the lower portion and the air flows upward, and the grill wire 355 is disposed in the lower portion of the bell mouse 353. When the grill wire 355 is disposed in the lower portion of the bell mouse 353, there is a risk of entering the filter installation space 101 in which the filter is disposed. Therefore, the bell mouse 353 has a wire groove 3533 formed in a portion overlapping with the grill wire 355, and the wires of the grill wire 355 are inserted into the wire groove 3533. Thus, there is an effect that the height of the suction grill 350 is more lowered. As a result, since the suction grill 350 does not penetrate the filter installation space 101, there is an effect that the space can be used more efficiently.

The wire groove 3533 is formed in the lower end of the bell mouse 353. In more detail, the wire groove 3533 is formed by being recessed upward of the bell mouse 353 in a position vertically overlapping the grill wire 355. In more detail, the wire groove 3533 is formed by being recessed in a position where a vertical wire 3552 and the bell mouse 353 overlap vertically. The wire groove 3533 is formed by being recessed in a direction in which the vertical wire 3552 extends so that the vertical wire 3552 can be inserted.

The wire groove 3533 may be recessed by the diameter of the grill wire 355. The grill wire 355 according to the present disclosure may be formed to have a diameter of 1.5 mm, and the wire groove 3533 may be formed by recessing by at least 1.5 mm or more. Therefore, even when the bell mouse 353 and the grill wire 355 are separately manufactured, the vertical height of the suction grill 350 is not changed, and the filter installation space 101 can be secured.

The grill wire 355 is a component that is disposed in the opening of the bell mouse 353, and prevents the user's finger from penetrating into the fan and being injured when the filter 200 is attached or detached. The grill wire 355 is disposed upstream of the bell mouse 353 and is fastened to the bell mouse support member 351.

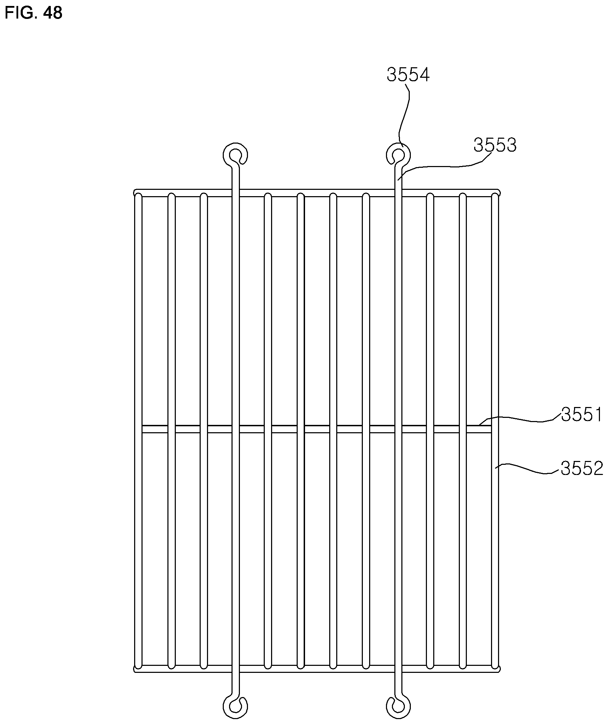

FIG. 48 is a plan view illustrating the grill wire 355. The grill wire 355 is composed of a plurality of wires. At least one of the wires is formed of a metal material. The grill wire 355 may include a horizontal wire 3551 extending in a horizontal direction and a vertical wire 3552 extending in a vertical direction. At least one of the horizontal wire 3551 and the vertical wire 3552 may be formed of a metal material. Preferably, the vertical wire 3552 which may be disposed vertically overlapped with the bell mouse 353 are formed of a metal material.

The horizontal wire 3551 extends in the left-right direction. The horizontal wire 3551 intersects the vertical wire 3552 at least once. At least one of the horizontal wires 3551 is disposed in both ends of the vertical wire 3552. At least one of the horizontal wires 3551 may be disposed in the middle of the vertical wire 3552.

The vertical wire 3552 extends in the front-rear direction. The vertical wire 3552 intersects the horizontal wire 3551 at least once. The number of vertical wires 3552 may be greater than the number of horizontal wires 3551. At least one of the vertical wires 3552 may extend to be longer than the other vertical wire 3552 to form a bridge wire 3553.

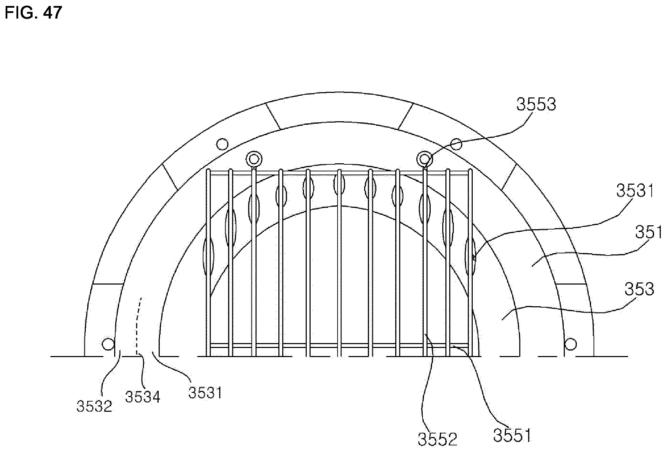

Referring to FIG. 47, a wire groove 3533 may be formed in the bell mouse 353 disposed to overlap the vertical wire 3552. The vertical wire 3552 of the grill wire 355 is inserted into the wire groove 3533.

The bridge wire 3553 is formed to further extend from a part of the vertical wires 3552. The bridge wire 3553 may be bent upward from the end of the vertical wire 3552. In the bent portion, the bridge wire 3553 further extends upward. A ring is formed in the upper end of the bridge wire 3553, and the ring is located in a fastening part 3511 of the bell mouse support member 351 and is installed in the bell mouse support member 351.

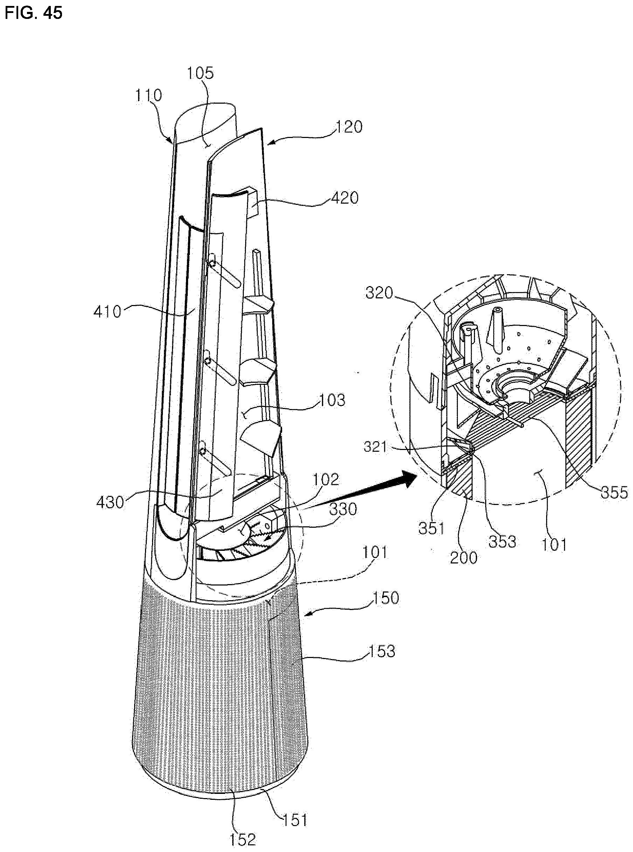

The grill wire 355 is disposed above the lower end 3534 of the bell mouse 353. Referring to FIG. 45, the grill wire 355 is disposed in a lower portion of the bell mouse 353. The wire groove 3533 is formed in the lower end 3534 of the bell mouse in order to insert the grill wire 355. The wire groove 3533 is formed by being recessed upward from the lower end 3534 of the bell mouse. The grill wire 355 is inserted into the wire groove 3533 from the lower portion of the bell mouse. Accordingly, the grill wire 355 is disposed above the lower end 3534 of the bell mouse 353. In other words, the lower end 3555 of the grill wire 355 is preferably disposed above the lower end 3534 of the bell mouse 353. Although not shown, the lower end 3555 of the grill wire 355 is disposed at least at the same height as the lower end 3534 of the bell mouse 353.

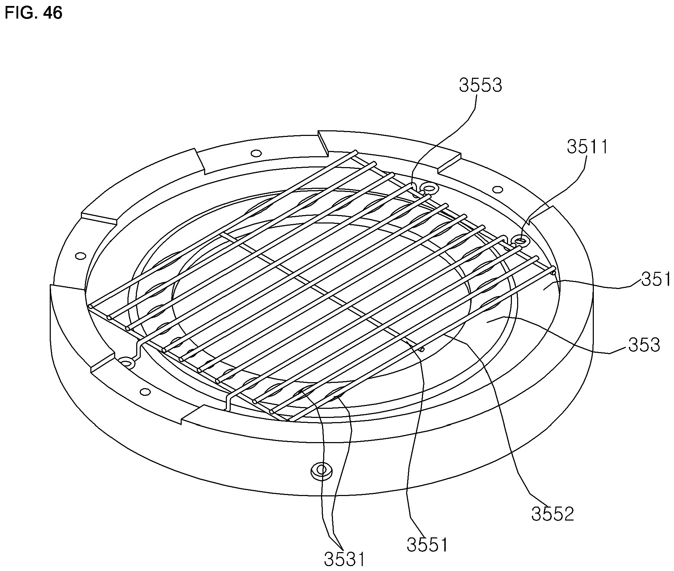

The bell mouse 353 is a component that assists air suction in the suction end of the fan. Referring to FIG. 46, the bell mouse 353 has an opening formed in the center thereof, and the downstream diameter of the opening is formed smaller than the upstream diameter.

Referring to FIGS. 45 and 46, the bell mouse 353 is formed in a ring shape having an opening formed in the center thereof. An opening formed in the center of the bell mouse 353 is disposed in the airflow path, and air flows through the opening. The bell mouse 353 has a diameter that becomes smaller as it progresses from the upstream to the downstream. Thus, air can easily flow into the fan.

The bell mouse 353 is connected to the bell mouse support member 351. The bell mouse 353 is formed in a ring shape, and the bell mouse support member 351 is connected to the outer circumferential surface of the bell mouse 353. The bell mouse support member 351 extends radially outward from the outer circumferential surface of the bell mouse 353. The bell mouse support member 351 extends to the inner circumferential surface of the tower case.

The bell mouse 353 may be integrally formed with the bell mouse support member 351. The bell mouse 353 may be an injection product formed integrally with the bell mouse support member 351 by an injection process.

The bell mouse 353 includes a first extension part 3531 and a second extension part 3532. The bell mouse 353 extends upward based on the lower end 353. The first extension part 3531 extends from the lower end of the bell mouse 353 to the inner upper side, and the second extension part 3532 extends from the lower end of the bell mouse 353 to the outer upper side. Accordingly, referring to FIG. 44, the cross section of the bell mouse 353 may have a U-shape having an open upper portion. In other words, since air is introduced from the lower portion and discharged from the upper portion, the bell mouse 353 is formed in a U-shape that is convex in the air inflow direction.

Referring to FIG. 44, the end of the bell mouse 353 is disposed radially inside the lower end of the fan 320. In more detail, the upper end of the bell mouse 353 is disposed radially inside the lower end of the shroud 32 of the fan 320. In more detail, the upper end of the first extension part 3531 is disposed radially inside the lower end of the shroud of the fan 320. The fan 320 may be a four-flow fan. In the case of a four-flow fan, the shroud 32 is formed in the airflow end (lower end) along the outer circumferential surface of the air flow path. The shroud may have a surface that has a uniform diameter and extends vertically, and an inclined surface that allows the diameter to increase. At this time, the lower end of the bell mouse 353 may be disposed in an extension line of the horizontal shroud, and the end of the bell mouse 353 is disposed radially inside the lower end of the shroud of the fan 320. In more detail, the upper end of the first extension part 3531 of the bell mouse 353 is disposed radially inside the lower end of the shroud of the fan 320.

The upper end of the first extension part 3531 is disposed radially inside the lower end of the fan 320, and the upper end of the second extension part 3532 is disposed radially outside the lower end of the fan 320. Based on the lower end of the bell mouse 353, the first extension part 3531 extends to the inner upper side of the lower end of the shroud, and the second extension part 3532 extends to the outer upper side of the shroud. The first extension part 3531 and the second extension part 3532 may be disposed to surround the lower end of the shroud of the fan 320.

Referring to FIG. 44, the upper end of the first extension part 3531 is disposed radially inside the lower end of the fan 320, and the upper end of the second extension part 3532 is disposed radially outside the lower end of the fan 320. Since the upper end of the first extension part 3531 is disposed radially inside the lower end of the fan 320, and the first extension part 3531 extends radially inside the fan 320, inflow air is introduced into the fan 320. The second extension part 3532 extends outward in the radial direction of the fan 320. The first extension part 3531, the shroud of the fan 320, and the second extension part 3532 may form a labyrinth seal, thereby preventing air from scattering to a gap between the fan 320 and the bell mouse 353.

Referring to FIG. 44, an upper end of the first extension part 3531 and an upper end of the second extension part 3532 are disposed above the lower end of the shroud of the fan 320. Since the upper end of the first extension part 3531 and the upper end of the second extension part 3532 are disposed above the lower end of the shroud of the fan 320, the flow path formed in a gap between the fan 320 and the bell mouse 353 may be bent more rapidly. Accordingly, there is an effect of more efficiently preventing air from scattering to the gap between the fan 320 and the bell mouse 353.

The suction grill 350 is disposed between the fan 320 and the filter 200. The lower end of the bell mouse 353 is disposed outside the inner end of the filter 200. Referring to FIG. 44, assuming an imaginary vertical line formed by the inner surface of the filter 200, the lower end of the bell mouse 353 may be disposed radially outside the imaginary vertical line. Accordingly, the air that passed through the filter 200 passes through the lower end of the bell mouse 353, and is introduced into the fan along the first extension part 3531.

The bell mouse 353 may include a wire groove 3533 formed by being recessed at a position vertically overlapping the grill wire 355. Referring to FIG. 46, the bell mouse 353 has a plurality of wire grooves 3533 into which the grill wire 355 is inserted.

The wire groove 3533 is formed by being recessed at a position where the vertical wire 3552 and the bell mouse 353 overlap vertically. The wire groove 3533 is depressed by the diameter of the vertical wire 3552. A vertical wire 3552 may be fitted into the wire groove 3533.

The cross-sectional shape of the wire groove 3533 coincides with the cross-sectional shape of the grill wire 355. For example, when the cross-sectional shape of the grill wire 355 is circular, the cross-sectional shape of the wire groove 3533 may be formed in a U shape.

As the vertical wire 3552 is coupled to the wire groove 3533, the lower end of the grill wire 355 does not protrude below the lower end of the bell mouse 353. Therefore, the total height of the suction grill 350 is not changed, thereby securing the filter installation space 101.

The bell mouse support member 351 is a component that supports the bell mouse 353. Referring to FIG. 45, the bell mouse support member 351 is coupled to the outer circumferential surface of the bell mouse 353 and extends outside in the radial direction. The bell mouse support member 351 extends to the tower case 140.

The bell mouse support member 351 may form a coupling portion at the outer end so as to be coupled to the tower case 140 or the base case 150. Referring to FIG. 45, the bell mouse support member 351 may have a groove formed at the upper end of the outer circumferential surface so as to load the tower case 140. Referring to FIG. 46, the bell mouse support member 351 may have a fastening hole or groove for coupling with the base case 150 at the lower end of the outer circumferential surface.

The bell mouse support member 351 is connected to the upper part of the bell mouse 353. The bell mouse support member 351 is disposed above an imaginary horizontal line passing through the center of the bell mouse 353. The bell mouse support member 351 is disposed to be biased above the bell mouse 353. Since the gap between the bell mouse support member 351 and the upper end of the filter 200 is much larger than the gap between the bell mouse 353 and the upper end of the filter 200, a space is formed between the bell mouse support member 351 and the upper end of the filter. The formed space forms a trap and prevents air from leaking through the gap between the suction grill 350 and the filter 200 and being lost.

The bell mouse support member 351 is connected to the outer circumferential surface of the second extension part 3532 of the bell mouse 353. The bell mouse support member 351 may be integrally formed with the bell mouse 353, and at this time, the bell mouse support member 351 extends radially outward from the outer circumferential surface of the second extension part 3532.

The distance between the bell mouse support member 351 and the lower end of the bell mouse 353 may be equal to the length of the bridge wire 3553 of the grill wire 355 or may be formed to be longer than the length of the bridge wire 3553. The bell mouse support member 351 forms a sufficient distance between the lower end of the bell mouse 353, and may secure a sufficient space for fastening the grill wire 355.

The connection part between the bell mouse support member 351 and the second extension part 3532 is disposed below the upper end of the second extension part 3532. Referring to FIG. 44, the bell mouse support member 351 extends radially outward below the upper end of the second extension part 3532. Accordingly, a protrusion protruding upward in an annular shape is formed in the inner end of the bell mouse support member 351. The protrusion formed in the upper end of the second extension part 3532 is discharged from the fan, but has an effect of blocking air returned due to negative pressure from the outside of the fan. The upper end of the second extension part 3532 improves efficiency by blocking the feed-back air, together with the labyrinth seal structure.

The bell mouse support member 351 includes a fastening part 3511, formed on a lower surface, to which the grill wire 355 is fastened. Referring to FIG. 47, the bell mouse support member 351 has a fastening part 3511 for fastening with a fastening ring 3554 of the grill wire 355. The fastening part 3511 may form a hole and may be fastened by a screw together with the fastening ring 3554 of the grill wire 355.

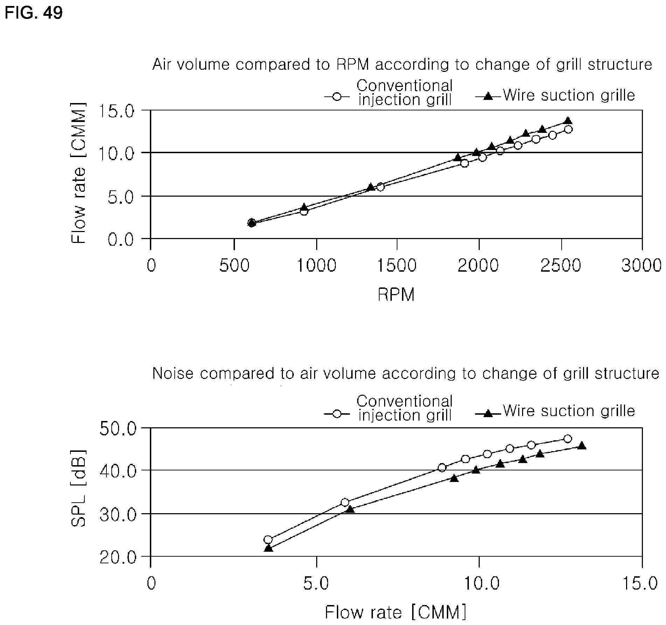

FIG. 49 illustrates a graph for explaining a difference in effect between the suction grill according to the present disclosure and the related art.

The upper graph of FIG. 49 illustrates the discharged air volume compared to the rotation speed of fan according to the shape of suction grill. There is no significant difference when the rotation speed of fan is low, but when the rotation speed of fan increases, there is a difference in the discharged air volume. For example, when the rotation speed of fan is 2500 RPM, the flow rate discharged from the air purifier according to the related art is about 13 CMM, but the flow rate discharged from the air clean fan having the suction grill according to the present disclosure is about 13.97 CMM. When the fan is based on the same RPM, according to the present disclosure, there is an effect that the air volume is increased by about 7.5% in comparison with the related art.

The lower graph of FIG. 49 illustrates the generated noise compared to the air volume of fan according to the type of the suction grill. When the discharged air volume is low, there is no significant difference, but when the air volume increases, there is a difference in the generated noise. For example, when the air volume is 13CMM, the noise generated in the air purifier according to the related art is about 48dB, but the noise generated in the air clean fan having the suction grill according to the present disclosure is about 45.2dB. According to the present disclosure, based on the same air volume, there is an effect of reducing the generated noise by about 2.8 dB in comparison with the related art.

The fan for air conditioner and the fan apparatus for air conditioner according to the present disclosure have one or more of the following effects.

First, the present disclosure allows the cover and the main body to be tightly coupled without gap, so that the user's esthetic sense can be satisfied when the cover and the main body are coupled, and applies an external force to a cover separation unit so that the main body and the cover are easily separated when the cover and the main body are separated.

In addition, the present disclosure makes a cover with two pieces, and separates one of the two covers of one cover separation unit when separating the cover from the main body, and allows a user to separate the other cover through a gap that is revealed as one of the two covers is separated, so that the cylindrical cover can be easily separated and the user can separate the cover using only one hand.

In addition, in the present disclosure, in order to separate one cover by a lever and separate the cover through a gap of the other cover, the cylindrical cover is manufactured in two pieces, and it is easy to manufacture the cover.

In addition, in the present disclosure, only the lever is exposed to the outer surface of the main body and slides along the outer surface of the main body, so that even when the lever is moved, it does not protrude to the outside of the main body, and the pusher connected to the lever is guided to the main body and pushes the cover between the main body and the cover. Hence, the pusher is hidden by the cover and is invisible.

In addition, in the present disclosure, two pushers for separating the cover from the main body are disposed vertically, so that the cover can be stably separated from the main body.

In addition, in the present disclosure, since the lever for operating the pusher is located only on the rear surface of the case, the pusher is located inside the main body, and is covered by the cover, the user's esthetic sense can be fully satisfied.

In addition, in the present disclosure, since the lower end of the heater is disposed with an inclination biased toward the rear air discharge port, the flow rate of the discharged air is maximized and the air having a uniform flow rate flows to the air discharge port.

In addition, in the present disclosure, each fin disposed in the heater serves as a guide for horizontally guiding the ascending air flow, thereby miniaturizing the product by efficiently utilizing the space.

In addition, in the present disclosure, a flow path shielding member is disposed in the lower end of the heater to shield the air flow directly discharged without passing through the heater, thereby improving the efficiency.

In addition, the present disclosure has the advantage of sucking indoor air, filtering it through a filter disposed therein, and then discharging filtered air to a user using the Coanda effect.

In addition, the present disclosure induces a Coanda effect for the air discharged from the first tower and the air discharged from the second tower, and then joins them in the blowing space and discharges, thereby increasing the straightness and reach of the discharged air.

In addition, since the suction grill according to the present disclosure includes a wire made of a metal material, the thickness is reduced, thereby minimizing air resistance and minimizing noise generation.

In addition, the suction grill according to the present disclosure has the advantage of efficiently utilizing the space by securing a space for installing the grill wire and minimizing the vertical width of the suction grill, as the support member is disposed in the upper end of the bell mouse.

In addition, the suction grill according to the present disclosure has the advantage of preventing noise from being generated and efficiently utilizing the space, by forming a groove in the bell mouse for installing the grill wire.

## Claims

1. A fan apparatus for air conditioner, the apparatus comprising:
a base case (150) in which an air suction part through which air is sucked is formed;
a tower case (140) which is disposed above the base case (150), and has an air flow path therein and discharges air to the outside;
a cover (153) which is coupled to an outer surface of the base case (150), and covers at least a portion of the suction part; and
a cover separation unit (600) which separates the cover (153) from the base case (150),
**characterized in that**
r the cover separation unit (600) comprises:
a lever (610) which is installed in the tower case (140), and is configured to slide along an outer surface of the tower case (140);
an upper cover pusher (620) which is rotatably coupled to the lever (610), and is configured to rotate to push the cover (153); and
an upper rotation guide (1520) which is configured to guide the upper cover pusher (620) to rotate in one direction, when the upper cover pusher (620) is moved along the outer surface of the base case (150).

2. The apparatus of claim 1, wherein the cover separation unit (600) further comprises:
a slider (630) which is spaced apart from the upper cover pusher (620) and installed in the base case (150) to be slid;
a connection link (650) which connects the slider (630) and the lever (610);
a lower cover pusher (640) which is rotatably coupled to the slider (630), and configured to rotate to push the cover (153); and
a lower rotation guide (1530) which is configured to guide the lower cover pusher (640) to rotate in one direction, when the lower cover pusher (640) is moved along the outer surface of the base case (150).

3. The apparatus of claim 1 or 2, wherein at least a portion of the lever (610) is exposed on the outer surface of the tower case (140).

4. The apparatus of any one of claims 1 to 3, wherein the lever (610) is disposed above the cover (153).

5. The apparatus of any one of claims 1 to 4, wherein the upper cover pusher (620) is disposed in a coupling region of the base case (150) in which the cover (153) is coupled to the base case (150).

6. The apparatus of any one of claims 1 to 5, wherein the upper cover pusher (620) is located between the cover (153) and the base case (150).

7. The apparatus of any one of claims 1 to 6, wherein a lower surface of the upper cover pusher (620) has an inclination angle with respect to a vertical direction.

8. The apparatus of any one of claims 1 to 7, wherein the upper cover pusher (620) is hinged to a lower end of the lever (610).

9. The apparatus of any one of claims 1 to 8, wherein the upper rotation guide (1520) comprises an upper guide surface (1522) which has an inclination with respect to the outer surface of the base case (150) and is configured to guide the upper cover pusher (620).

10. The apparatus of claim 9, wherein the upper rotation guide (1520) further comprises an upper pusher receiving groove (1521) for accommodating the upper cover pusher (620).

11. The apparatus of any one of claims 1 to 10, wherein the upper rotation guide (1520) is formed in the base case (150).

12. The apparatus of any one of claims 2 to 11, wherein the lower cover pusher (640) and the slider (630) are located below the upper cover pusher (620).

13. The apparatus of any one of claims 2 to 12, wherein the lower cover pusher (640) and the slider (630) are located between the base case (150) and the cover (153).

14. The apparatus of any one of claims 2 to 13, wherein the lower rotation guide (1530) comprises a lower pusher receiving groove (1531) for accommodating the slider (630) and the lower cover pusher (640).

15. The apparatus of any one of claims 2 to 14, wherein the lower rotation guide (1530) comprises a lower guide surface (1532) which has an inclination with respect to the outer surface of the base case (150) and is configured to guide the lower cover pusher (640).

## Patentansprüche

1. Lüftervorrichtung für eine Klimaanlage, wobei die Vorrichtung aufweist:
ein Grundgehäuse (150), in dem ein Luftansaugteil ausgebildet ist, durch das Luft angesaugt wird;
ein Turmgehäuse (140), das oberhalb des Grundgehäuses (150) angeordnet ist und einen Luftströmungsweg darin aufweist und Luft nach außen abgibt;
eine Abdeckung (153), die mit einer Außenfläche des Grundgehäuses (150) gekoppelt ist und zumindest einen Abschnitt des Ansaugteils abdeckt; und
eine Abdeckungstrenneinheit (600), welche die Abdeckung (153) von dem Grundgehäuse (150) trennt,
**dadurch gekennzeichnet, dass** die Abdeckungstrenneinheit (600) aufweist:
einen Hebel (610), der in dem Turmgehäuse (140) installiert ist und konfiguriert ist, sich entlang einer Außenfläche des Turmgehäuses (140) zu verschieben;
einen oberen Abdeckungsdrücker (620), der mit dem Hebel (610) drehbar gekoppelt ist und konfiguriert ist, sich zu drehen, um die Abdeckung (153) zu drücken; und
eine obere Drehführung (1520), die konfiguriert ist, den oberen Abdeckungsdrücker (620) zu führen, um sich in einer Richtung zu drehen, wenn der obere Abdeckungsdrücker (620) entlang der Außenfläche des Grundgehäuses (150) bewegt wird.

2. Vorrichtung nach Anspruch 1, wobei die Abdeckungstrenneinheit (600) ferner aufweist:
einen Schieber (630), der von dem oberen Abdeckungsdrücker (620) beabstandet und in dem Grundgehäuse (150) installiert ist, um verschoben zu werden;
ein Verbindungsglied (650), das den Schieber (630) und den Hebel (610) verbindet;
einen unteren Abdeckungsdrücker (640), der mit dem Schieber (630) drehbar gekoppelt und konfiguriert ist, sich zu drehen, um die Abdeckung (153) zu drücken; und
eine untere Drehführung (1530), die konfiguriert ist, den unteren Abdeckungsdrücker (640) zu führen, um sich in einer Richtung zu drehen, wenn der untere Abdeckungsdrücker (640) entlang der Außenfläche des Grundgehäuses (150) bewegt wird.

3. Vorrichtung nach Anspruch 1 oder 2, wobei zumindest ein Abschnitt des Hebels (610) auf der Außenfläche des Turmgehäuses (140) freiliegt.

4. Vorrichtung nach einem der Ansprüche 1 bis 3, wobei der Hebel (610) oberhalb der Abdeckung (153) angeordnet ist.

5. Vorrichtung nach einem der Ansprüche 1 bis 4, wobei der obere Abdeckungsdrücker (620) in einem Kopplungsbereich des Grundgehäuses (150) angeordnet ist, in dem die Abdeckung (153) mit dem Grundgehäuse (150) gekoppelt ist.

6. Vorrichtung nach einem der Ansprüche 1 bis 5, wobei sich der obere Abdeckungsdrücker (620) zwischen der Abdeckung (153) und dem Grundgehäuse (150) befindet.

7. Vorrichtung nach einem der Ansprüche 1 bis 6, wobei eine untere Fläche des oberen Abdeckungsdrückers (620) einen Neigungswinkel in Bezug auf eine vertikale Richtung aufweist.

8. Vorrichtung nach einem der Ansprüche 1 bis 7, wobei der obere Abdeckungsdrücker (620) an einem unteren Ende des Hebels (610) angelenkt ist.

9. Vorrichtung nach einem der Ansprüche 1 bis 8, wobei die obere Drehführung (1520) eine obere Führungsfläche (1522) aufweist, die eine Neigung in Bezug auf die Außenfläche des Grundgehäuses (150) aufweist und konfiguriert ist, den oberen Abdeckungsdrücker (620) zu führen.

10. Vorrichtung nach Anspruch 9, wobei die obere Drehführung (1520) ferner eine obere Drückeraufnahmenut (1521) zum Unterbringen des oberen Abdeckungsdrückers (620) aufweist.

11. Vorrichtung nach einem der Ansprüche 1 bis 10, wobei die obere Drehführung (1520) in dem Grundgehäuse (150) ausgebildet ist.

12. Vorrichtung nach einem der Ansprüche 2 bis 11, wobei sich der untere Abdeckungsdrücker (640) und der Schieber (630) unterhalb des oberen Abdeckungsdrückers (620) befinden.

13. Vorrichtung nach einem der Ansprüche 2 bis 12, wobei sich der untere Abdeckungsdrücker (640) und der Schieber (630) zwischen dem Grundgehäuse (150) und der Abdeckung (153) befinden.

14. Vorrichtung nach einem der Ansprüche 2 bis 13, wobei die untere Drehführung (1530) eine untere Drückeraufnahmenut (1531) zum Unterbringen des Schiebers (630) und des unteren Abdeckungsdrückers (640) aufweist.

15. Vorrichtung nach einem der Ansprüche 2 bis 14, wobei die untere Drehführung (1530) eine untere Führungsfläche (1532) aufweist, die eine Neigung in Bezug auf die Außenfläche des Grundgehäuses (150) aufweist und konfiguriert ist, den unteren Abdeckungsdrücker (640) zu führen.

## Revendications

1. Appareil de ventilation pour climatiseur, l'appareil comprenant :
un boîtier de base (150) dans lequel est formée une partie d'aspiration d'air à travers laquelle de l'air est aspiré ;
un boîtier de tour (140) qui est disposé au-dessus du boîtier de base (150), et a un chemin d'écoulement d'air à l'intérieur et décharge de l'air à l'extérieur ;
un couvercle (153) qui est couplé à une surface extérieure du boîtier de base (150), et couvre au moins une portion de la partie d'aspiration ; et
une unité de séparation de couvercle (600) qui sépare le couvercle (153) du boîtier de base (150),
**caractérisé en ce que** l'unité de séparation de couvercle (600) comprend :
un levier (610) qui est installé dans le boîtier de tour (140), et qui est configuré pour glisser le long d'une surface extérieure du boîtier de tour (140) ;
un poussoir de couvercle supérieur (620) qui est couplé de manière rotative au levier (610), et qui est configuré pour tourner afin de pousser le couvercle (153) ; et
un guide de rotation supérieur (1520) qui est configuré pour guider le poussoir de couvercle supérieur (620) pour tourner dans une direction, lorsque le poussoir de couvercle supérieur (620) est déplacé le long de la surface extérieure du boîtier de base (150).

2. Appareil selon la revendication 1, dans lequel l'unité de séparation de couvercle (600) comprend en outre :
un coulisseau (630) qui est espacé du poussoir de couvercle supérieur (620) et installé dans le boîtier de base (150) pour être glissé ;
un lien de connexion (650) qui connecte le coulisseau (630) et le levier (610) ;
un poussoir de couvercle inférieur (640) couplé de manière rotative au coulisseau (630), et qui est configuré pour tourner afin de pousser le couvercle (153) ; et
un guide de rotation inférieur (1530) qui est configuré pour guider le poussoir de couvercle inférieur (640) pour tourner dans une direction, lorsque le poussoir de couvercle inférieur (640) est déplacé le long de la surface extérieure du boîtier de base (150).

3. Appareil selon la revendication 1 ou 2, dans lequel au moins une portion du levier (610) est exposée sur la surface extérieure du boîtier de tour (140).

4. Appareil selon l'une quelconque des revendications 1 à 3, dans lequel le levier (610) est disposé au-dessus du couvercle (153).

5. Appareil selon l'une quelconque des revendications 1 à 4, dans lequel le poussoir de couvercle supérieur (620) est disposé dans une zone de couplage du boîtier de base (150) dans laquelle le couvercle (153) est couplé au boîtier de base (150).

6. Appareil selon l'une quelconque des revendications 1 à 5, dans lequel le poussoir de couvercle supérieur (620) est situé entre le couvercle (153) et le boîtier de base (150).

7. Appareil selon l'une quelconque des revendications 1 à 6, dans lequel une surface inférieure du poussoir de couvercle supérieur (620) présente un angle d'inclinaison par rapport à une direction verticale.

8. Appareil selon l'une quelconque des revendications 1 à 7, dans lequel le poussoir de couvercle supérieur (620) est articulé à une extrémité inférieure du levier (610).

9. Appareil selon l'une quelconque des revendications 1 à 8, dans lequel le guide de rotation supérieur (1520) comprend une surface de guidage supérieure (1522) qui a une inclinaison par rapport à la surface extérieure du boîtier de base (150) et qui est configurée pour guider le poussoir de couvercle supérieur (620).

10. Appareil selon la revendication 9, dans lequel le guide de rotation supérieur (1520) comprend en outre une rainure de réception du poussoir supérieur (1521) pour accueillir le poussoir de couvercle supérieur (620).

11. Appareil selon l'une quelconque des revendications 1 à 10, dans lequel le guide de rotation supérieur (1520) est formé dans le boîtier de base (150).

12. Appareil selon l'une quelconque des revendications 2 à 11, dans lequel le poussoir de couvercle inférieur (640) et le coulisseau (630) sont situés sous le poussoir de couvercle supérieur (620).

13. Appareil selon l'une quelconque des revendications 2 à 12, dans lequel le poussoir de couvercle inférieur (640) et le coulisseau (630) sont situés entre le boîtier de base (150) et le couvercle (153).

14. Appareil selon l'une quelconque des revendications 2 à 13, dans lequel le guide de rotation inférieur (1530) comprend une rainure de réception de poussoir inférieur (1531) pour loger le coulisseau (630) et le poussoir de couvercle inférieur (640).

15. Appareil selon l'une quelconque des revendications 2 à 14, dans lequel le guide de rotation inférieur (1530) comprend une surface de guidage inférieure (1532) qui a une inclinaison par rapport à la surface extérieure du boîtier de base (150) et qui est configurée pour guider le poussoir de couvercle inférieur (640).
